(19) Europäisches Patentamt European Patent Office Office européen des brevets

(11) EP 1 563 705 B1

(12) EUROPEAN PATENT SPECIFICATION

(45) Date of publication and mention of the grant of the patent:
**29.07.2009 Bulletin 2009/31**

(51) Int Cl.:
*H04Q 11/04* (2006.01)     *H04L 1/00* (2006.01)
*H04L 27/26* (2006.01)     *H04M 11/06* (2006.01)

(21) Application number: **03781980.2**

(22) Date of filing: **18.11.2003**

(86) International application number:
**PCT/US2003/036843**

(87) International publication number:
**WO 2004/047481 (03.06.2004 Gazette 2004/23)**

(54) **SMART DSL SYSTEM FOR LDSL**

INTELLIGENTES DSL-SYSTEM FÜR LDSL

SYSTEMES DE LIGNES D'ABONNE NUMERIQUE (DSL) INTELLIGENTS POUR LIGNES D'ABONNE NUMERIQUE LONGUE PORTEE (LDSL)

(84) Designated Contracting States:
**AT BE BG CH CY CZ DE DK EE ES FI FR GB GR HU IE IT LI LU MC NL PT RO SE SI SK TR**

(30) Priority: **18.11.2002 US 426796 P**
**22.01.2003 US 441351 P**
**22.07.2003 US 488804 P**

(43) Date of publication of application:
**17.08.2005 Bulletin 2005/33**

(73) Proprietor: **Brooktree Broadband Holding, Inc.**
**Newport Beach, CA 92660 (US)**

(72) Inventors:
• **CAI, Lujing**
  **Morganvile, NJ 07751 (US)**
• **DUVAUT, Patrick**
  **Tinton Falls, NJ 07712 (US)**
• **SORBARA, Massimo**
  **Freehold, NJ 07728 (US)**
• **LANGBERG, Ehud**
  **Wayside, NJ 07712 (US)**
• **PEIRRUGUES, Laurent**
  **Rahway, NJ 07065 (US)**
• **SCHOLTZ, William**
  **Red Bank, NJ 07701 (US)**

• **MORENO, Oliver**
  **Eatontown, NJ 07724 (US)**
• **OUYANG, Feng**
  **Holmdel, NJ 07733 (US)**

(74) Representative: **Plougmann & Vingtoft A/S**
**Sundkrogsgade 9**
**P.O. Box 831**
**2100 Copenhagen Ø (DK)**

(56) References cited:
**US-B1- 6 333 920**

• **KEE BONG SONG ET AL: "DYNAMIC SPECTRUM MANAGEMENT FOR NEXT-GENERATION DSL SYSTEMS" IEEE COMMUNICATIONS MAGAZINE, IEEE SERVICE CENTER. PISCATAWAY, N.J, US, vol. 40, no. 10, October 2002 (2002-10), pages 101-109, XP001132769 ISSN: 0163-6804**
• **OUYANG F ET AL: "THE FIRST STEP OF LONG-REACH ADSL: SMART DSL TECHNOLOGY, READSL" IEEE COMMUNICATIONS MAGAZINE, IEEE SERVICE CENTER. PISCATAWAY, N.J, US, vol. 41, no. 9, September 2003 (2003-09), pages 124-131, XP001177650 ISSN: 0163-6804**

**Description**

**Related Applications**

BACKGROUND OF THE INVENTION

Field of the Invention

This invention relates to digital subscriber lines (DSL) and to smart systems for implementing Long reach Digital Subscriber Lines (LDSL).

Description of Related Art

With the increasing popularity of the Internet and other content-heavy electronic communication systems, there has been a substantial need for reliable and affordable high bandwidth mediums for facilitating data transmissions between service providers and their customers. In relation to the requirement that such mediums be affordable to consumers, it was determined that the most cost-effective manner for providing service to customers was by using infrastructure already present in most locations. Accordingly, over recent years, the two such mediums most widely meeting these requirements include the cable television (CATV) and the conventional copper wire telephone systems (plain old telephone system or POTS).

US 6,333,920 discloses a communications system employing frequency division duplexing to accommodate symmetric and asymmetric services, while substantially eliminating near-end cross talk. Upstream and downstream channels are separated by a guard band in order to insure that near-end cross talk is kept to a minimum. An asymmetric upstream channel is preferably located at a lower frequency range than that of the asymmetric downstream channel. The guard band between these asymmetric upstream and downstream channels shifts in frequency along with the shift in frequency of the respective upstream and downstream channels as a function of reach. This guard band shifting permits the communications systems to utilize a greater percentage of the frequencies available to it and to thereby substantially maximize the communications rate that it can support. Although the asymmetric guard band is allowed to shift in the manner described, it is not allowed to do so in a manner that would create a conflict with symmetric channels.

Additionally, for symmetric services upstream channels are provided both above and below a downstream channel and are located so as not to interfere with symmetric channels.

Kee Bong Song et al, disclose in "Dynamic Spectrum Management for Next-Generation DSL Systems", IEEE Communications Magazine, Oct 2002, pages 101 to 109 a dynamic spectrum management, where DSL modems should not transmit more power than necessary to achieve their target data rates with good quality of services and not transmit more bandwidth than useful for communication, and iterative water-filling for a multi-user communication environment. The algorithm is based on formulating power allocation in the multi-user interference network as a competitive game, in which each user tries to maximize his own data rate regarding cross talk interference from other users as noise. Starting from any initial spectra, the water-filling process on each line is performed independently across all DSL lines within a binder. Iteratvie water-filling, in which rate and power for each frequency tone of the user is adapted autonomously with no central control, performs essentially the same as when the spectra of all users are controlled by a centralized network entity.

Relating specifically to the adaptation of POTS telephone lines to carry data at high-bandwidth or 'broadband' data rates, a number of Digital Subscriber Line (DSL) standards and protocols have been proposed. DSL essentially operates by formatting signals using various Time Domain Equalization techniques to send packets over copper wire at high data rates. A substandard of conventional DSL is known as Asymmetric Digital Subscriber Line (ADSL) and is considered advantageous for its ability to provide very high data rates in the downstream (i.e., from service provider to the user) direction by sacrificing speed in the upstream direction. Consequently, end user costs are minimized by providing higher speeds in the most commonly used direction. Further, ADSL provides a system that applies signals over a single twisted-wire pair that simultaneously supports (POTS) service as well as high-speed duplex (simultaneous two-way) digital data services.

Two of the proposed standards for ADSL are set forth by the International Telecommunications Union, Telecommunication Standardization Section (ITU-T). A first, conventional, ADSL standard is described in ITU-T Recommendation G.992.1 - "Asymmetric Digital Subscriber Line (ADSL) Transceivers". A second, G.992.3, ADSL2 is a new standard recently completed and approved by the International Telecommunications Union (ITU) in 2002 that will supersede existing ADSL standards. Work being done under the headings of "G.dmt.bis" and "G.lite.bis" is nearing completion to designate G.992.3 and G.992.4 for full-rate

ADSL and splitterless ADSL, respectively. Much has been learned over the past three years of ADSL deployments, including areas where improvements in the technology would be particularly valuable. There is a wide variety of improvements included in ADSL2, each with very different implications; some make the transceivers operate more efficiently, some make them more affordable, and some add functionality.

As briefly described above, all DSL system operate in essentially the following manner. Initial digital data to be transmitted over the network is formed into a plurality of multiplexed data frames and encoded using special digital modems into analog signals which may be transmitted over conventional copper wires at data rates significantly higher than voice band traffic (e.g., ~1.5 Mbps (megabits per second) for downstream traffic, ~150 kbps (kilobits per second) for upstream traffic). The length and characteristics of wire run from a customer's remote transceiver to a central office transceiver may vary greatly from user to user and, consequently, the possible data rates for each user also vary. In addition, the physical channel (i.e., the wires themselves) over which the system communicates also vary over time due to, for example, temperature and humidity changes, fluctuating cross-talk interference sources. The distribution of signal energy over frequency is known as the power spectral density (PSD). Power spectral density is simply the average noise power unit of bandwidth (i.e. dBm/Hz). All transmission systems have a finite power and bandwidth and, therefore, the power and bandwidth of each system is used in a manner so as not to disturb other adjoining systems. A PSD mask is used which is defined as the maximum allowable PSD for a service in presence of any interference combination. The transmit spectrum for a service refers to the PSD of the transmitted signal. Spectral' compatibility of the system using a modem boosted modes for improved modem rates and extended reach solutions into existing services may either be without distance limitations or partially limited distance when the spectral compatibility impact is higher than the existing service disturbance beyond a specific reach. The choice between limited and unlimited distance boosted modes are done at the network management level which requires a costly procedure from the telephone company (Telco) to provide physical layer information that also covers how the existing services are deployed, and because of the costs involved, broadband services providers shy away from all the boosted mode solutions, specially the limited distance boosted modes, thereby, restraining the coverage and performance of the underlying service deployment.

High level procedures for meeting stated objectives for Long reach Digital Subscriber Line (LDSL) transmissions are disclosed. Some objectives for LDSL have been defined in publications available from standards organizations such as the International Telecommunications Union (ITU). For example, ITU publications OC-041R1, OC-045, OC-073R1, OJ-030, OJ-036, OJ-060, OJ-061, OJ-062, OJ-200R1, OJ-200R2, OJ-201, OJ-60R1, OJ-60R2 and OJ-210 set forth some LDSL objectives. Other objectives, standards and criteria for LDSL are also possible and may be accommodated by the disclosed inventions.

One LDSL target objective is to achieve a minimum payload transmission of 192 kb/s downstream and 96 kb/s upstream on loops having an equivalent working length of 18 kft 26 gauge cable in a variety of loop and noise conditions. One difficulty in achieving these target transmission rates is the occurrence of crosstalk noise.

The crosstalk noise environments that may occur for the above bit rate target objective are varied. For example, noise environments may include Near-end cross talk (NEXT), Far-end cross talk (FEXT), disturbance from Integrated Services Digital Networks (ISDN), High Speed Digital Subscriber Lines (HDSL), SHDSL, T1, and Self-disturbers at both the Central Office (CO) and Customer Premise Equipment (CPE) ends. NEXT from HDSL and SHDSL tend to limit the performance in the upstream channel, while NEXT from repeatered T1 AMI systems tend to severely limit the downstream channel performance. An additional source of noise is loops containing bridged taps that degrade performance on an Asymmetric Digital Subscriber Line (ADSL) downstream channel more so than the upstream channel.

Another drawback of existing systems is that it appears very difficult to determine a single pair of Upstream and Downstream masks that will maximize the performance against any noise-loop field scenario, while ensuring spectral compatibility and, at the same time, keeping a desirable balance between Upstream and Downstream rates.

One approach for LDSL relies on different Upstream and Downstream masks exhibiting complementary features. Realistically, all these chosen masks are available on any LDSL Platform. At the modem start up, based on a certain protocol, the best Upstream-Downstream pair of masks is picked up. Whether the best pair is manually chosen at the discretion of the operator, or automatically elected, this concept is identified as "smart DSL for LDSL".

There are many reasons to implement smart DSL. For example, non-smart DSL systems may implement a single mask for upstream and downstream transmissions.

A drawback with this approach is that the use of a single mask may prevent LDSL service in areas of the United States dominated by T1 noise.

In addition, the use of a single mask is a drawback because the existence of other spectrally compatible masks cannot be ruled out. LDSL service providers will want to have access to an array of mask/tools provided they are spectrally compatible. Service providers may decide to use only one mask according to the physical layer conditions, or any combination of masks for the same or other reasons.

Another advantage of Smart DSL is that it is a good way to handle providing LDSL services in different countries. For example, so far, LDSL work has focused on SBC requirements.. As a result, it is risky of, for example, a US-based LDSL provider to rely on the ability to apply any masks that pass SBC tests to Europe, China or Korea. LDSL is a difficult project and essential for all the countries. Therefore, any scheme for LDSL standardization that takes into account merely SBC physical layer and cross talk requirements may jeopardize the ADSL reach extension in non-standard LDSL countries. Other drawbacks of current systems also exist.

SUMMARY OF THE INVENTION

A "Smart DSL System" for addressing the performance objectives of LDSL and examples of smart systems for LDSL are disclosed.

The present invention relates generally to the field of telecommunications and, more particularly, to data communications over telephone networks and more specifically the invention addresses some of the fundamental issues in coping with the performance objectives for LDSL (Long reach digital subscriber Line) systems which is sometimes called last mile DSL.

The present invention overcomes all of the aforementioned problems by defining two upstream masks (U1, U2) and two downstream masks (D1, D2) and using a mask selectable system for the long reach digital subscriber line (LDSL), in which a unique modem feature is activated during handshake to automatically check for physical layer status in terms of spectral compatibility and, thus, automatically optimize the boosted mode with the use of the mask selectable system choose the best combination of upstream/downstream masks in any physical layer noise scenario.

Crosstalk noise environments are varied, which include NEXT and FEXT disturbance from ISDN, HDSL, SHDSL, T1, and Self-disturbers at both the CO and CPE ends. NEXT from HDSL and SHDSL tend to limit the performance in the upstream channel while NEXT from T1 systems tend to severely limit the downstream channel performance. Also, loops containing bridged taps will degrade performance on the ADSL downstream channel more so than the upstream channel. It appears almost impossible that only one single pair of Upstream and Downstream masks will maximize the performance against any noise-loop field scenario, while ensuring spectral compatibility and at the same time, keeping a desirable balance between Upstream and Downstream rates. A realistic approach for LDSL relies on different Upstream and Downstream masks exhibiting complementary features. Realistically, all these chosen masks are available on any LDSL Platform. At the modem start up, based on a certain protocol, the best Upstream-Downstream pair of masks are automatically chosen. Whether the best pair is manually chosen is at the discretion of the operator, or it is automatically selected, this concept is identified as "smart DSL for LDSL".

It is emphasized that other rationales advocate for smart DSL: The use of a single mask may prevent to provide some areas in the US dominated by T1 noise for instance; A spectrally compatible mask can't be ruled out; One can't prevent service providers to have access to an array of mask/tools provided as long as they are spectrally compatible; Service providers may decide to use only one mask according to the physical layer conditions, or any combination for the same reasons. The present invention defines two upstream masks (U1, U2) and two downstream masks (D1, D2) and using a mask selectable system as well as a tunable mask system for the long reach digital subscriber line (LDSL), in which a unique modem feature is activated during handshake to automatically check for physical layer status in terms of spectral compatibility and, thus, automatically optimize the boosted mode with the use of the mask selectable system choose the best combination of upstream/downstream masks in any physical layer noise scenario.

In accordance with some embodiments of the invention there is provided a method for implementing smart DSL for LDSL systems. Embodiments of the method may comprise defining a candidate system to be implemented by an LDSL system, optimizing criteria associated with the candidate system, and selecting a candidate system to implement in an LDSL system.

In some embodiments the method may further comprise determining features of upstream transmission and determining one or more of: cut-off frequencies, side lobe shapes, overlap, partial overlap or FDD characteristics. Other advantages and embodiments of the invention are also disclosed in the following sections.

BRIEF DESCRIPTION OF THE DRAWINGS

Figure 1 is a graph illustrating peak values for U1 and D1 PSD masks according to embodiments of the invention.
Figure 2 is a graph illustrating peak values for U2 and D2 PSD masks according to embodiments of the invention.
Figure 3 is a graph illustrating average values for U3 and D3 PSD templates according to embodiments of the invention.
Figure 4 is a bar chart illustrating upstream rate, noise case #1, for ADSL2, M OJ-074, NON EC Smart LDSL systems in accordance with embodiments of the invention.
Figure 5 is a bar chart illustrating upstream rate, noise case #2, ADSL2, M OJ-074, NON EC Smart LDSL systems in accordance with embodiments of the invention.
Figure 6 is a bar chart illustrating upstream rate, noise case #3, ADSL2, M OJ-074, NON EC Smart LDSL systems in accordance with embodiments of the invention.
Figure 7 is a bar chart illustrating upstream rate, noise case #4, ADSL2, M OJ-074, NON EC Smart LDSL systems in accordance with embodiments of the invention.

Figure 8 is a bar chart illustrating upstream rate, noise case #5, ADSL2, M OJ-074, NON EC Smart LDSL systems in accordance with embodiments of the invention.

Figure 9 is a bar chart illustrating upstream rate, noise case #6, ADSL2, M OJ-074, NON EC Smart LDSL systems in accordance with embodiments of the invention.

Figure 10 is a bar chart illustrating upstream rate, noise case #7, ADSL2, M OJ-074, NON EC Smart LDSL systems in accordance with embodiments of the invention.

Figure 11 is a bar chart illustrating upstream rate, noise case #T1, ADSL2, M OJ-074, NON EC Smart LDSL systems in accordance with embodiments of the invention.

Figure 12 is a bar chart illustrating downstream rate, noise case #1, ADSL2, M OJ-074, NON EC Smart LDSL systems in accordance with embodiments of the invention.

Figure 13 is a bar chart illustrating downstream rate, noise case #2, ADSL2, M OJ-074, NON EC Smart LDSL systems in accordance with embodiments of the invention.

Figure 14 is a bar chart illustrating downstream rate, noise case #3, ADSL2, M OJ-074, NON EC Smart LDSL systems in accordance with embodiments of the invention.

Figure 15 is a bar chart illustrating downstream rate, noise case #4, ADSL2, M OJ-074, NON EC Smart LDSL systems in accordance with embodiments of the invention.

Figure 16 is a bar chart illustrating downstream rate, noise case #5, ADSL2, M OJ-074, NON EC Smart LDSL systems in accordance with embodiments of the invention.

Figure 17 is a bar chart illustrating downstream rate, noise case #6, ADSL2, M OJ-074, NON EC Smart LDSL systems in accordance with embodiments of the invention.

Figure 18 is a bar chart illustrating downstream rate, noise case #7, ADSL2, M OJ-074, NON EC Smart LDSL systems in accordance with embodiments of the invention.

Figure 19 is a bar chart illustrating downstream rate, noise case #T1, ADSL2, M OJ-074, NON EC Smart LDSL systems in accordance with embodiments of the invention.

Figure 20 is a bar chart illustrating upstream rate, noise case #1, ADSL2, M OJ-074, EC Smart LDSL systems in accordance with embodiments of the invention.

Figure 21 is a bar chart illustrating upstream rate, noise case #2, ADSL2, M OJ-074, EC Smart LDSL systems in accordance with embodiments of the invention.

Figure 22 is a bar chart illustrating upstream rate, noise case #3, ADSL2, M OJ-074, EC Smart LDSL systems in accordance with embodiments of the invention.

Figure 23 is a bar chart illustrating upstream rate, noise case #4, ADSL2, M OJ-074, EC Smart LDSL systems in accordance with embodiments of the invention.

Figure 24 is a bar chart illustrating upstream rate, noise case #5, ADSL2, M OJ-074, EC Smart LDSL systems in accordance with embodiments of the invention.

Figure 25 is a bar chart illustrating upstream rate, noise case #6, ADSL2, M OJ-074, EC Smart LDSL systems in accordance with embodiments of the invention.

Figure 26 is a bar chart illustrating upstream rate, noise case #7, ADSL2, M OJ-074, EC Smart LDSL systems in accordance with embodiments of the invention.

Figure 27 is a bar chart illustrating upstream rate, noise case #T1, ADSL2, M OJ-074, EC Smart LDSL systems in accordance with embodiments of the invention.

Figure 28 is a bar chart illustrating downstream rate, noise case #1, ADSL2, M OJ-074, EC Smart LDSL systems in accordance with embodiments of the invention.

Figure 29 is a bar chart illustrating downstream rate, noise case #2, ADSL2, M OJ-074, EC Smart LDSL systems in accordance with embodiments of the invention.

Figure 30 is a bar chart illustrating downstream rate, noise case #3, ADSL2, M OJ-074, EC Smart LDSL systems in accordance with embodiments of the invention.

Figure 31 is a bar chart illustrating downstream rate, noise case #4, ADSL2, M OJ-074, EC Smart LDSL systems in accordance with embodiments of the invention.

Figure 32 is a bar chart illustrating downstream rate, noise case #5, ADSL2, M OJ-074, EC Smart LDSL systems in accordance with embodiments of the invention.

Figure 33 is a bar chart illustrating downstream rate, noise case #6, ADSL2, M OJ-074, EC Smart LDSL systems in accordance with embodiments of the invention.

Figure 34 is a bar chart illustrating downstream rate, noise case #7, ADSL2, M OJ-074, EC Smart LDSL systems in accordance with embodiments of the invention.

Figure 35 is a bar chart illustrating downstream rate, noise case #T1, ADSL2, M OJ-074, EC Smart LDSL systems in accordance with embodiments of the invention.

Figure 36 illustrates a flow diagram for selecting a pair of masks in a smart DSL system in accordance with embodiments of the invention.

Figure 37 is a state diagram illustrating options for selecting a pair of masks in a smart DSL systems in accordance with embodiments of the invention.

Figure 38 illustrates an option for implementing smart DSL systems in accordance with embodiments of the invention.

Figure 39 illustrates an option for implementing smart DSL systems in accordance with embodiments of the invention.

Figure 40 illustrates an option for implementing smart DSL systems in accordance with embodiments of the invention.

Figure 41 illustrates LDSL nominal values for downstream wide mask and G.992.1 upstream mask in accordance with embodiments of the invention.

Figure 42 illustrates LDSL downstream narrow mask and G.992.1 upstream mask in accordance with embodiments of the invention.

Figure 43 illustrates a peak values quad spectrum mask plot in accordance with embodiments of the invention.

Figure 44 illustrates G.992.5 peak values upstream mask plot in accordance with embodiments of the invention.

Figure 45 illustrates extended overlap quad spectrum overlap downstream mask, plot based on peak values in accordance with embodiments of the invention.

Figure 46 illustrates extended overlap quad spectrum upstream mask plot based on peak values in accordance with embodiments of the invention.

Figure 47 illustrates quad spectrum reduced overlap downstream mask plot based on peak values in accordance with embodiments of the invention.

Figure 48 illustrates extended upstream mask plot based on peak values in accordance with embodiments of the invention.

Figure 49 illustrates OL quad spectrum downstream mask plot, peak values in accordance with embodiments of the invention.

Figure 50 illustrates G.992.5 peak values upstream mask plot in accordance with embodiments of the invention.

Figure 51 is a plot of U1 and D1 PSD nominal templates according to embodiments of the invention.

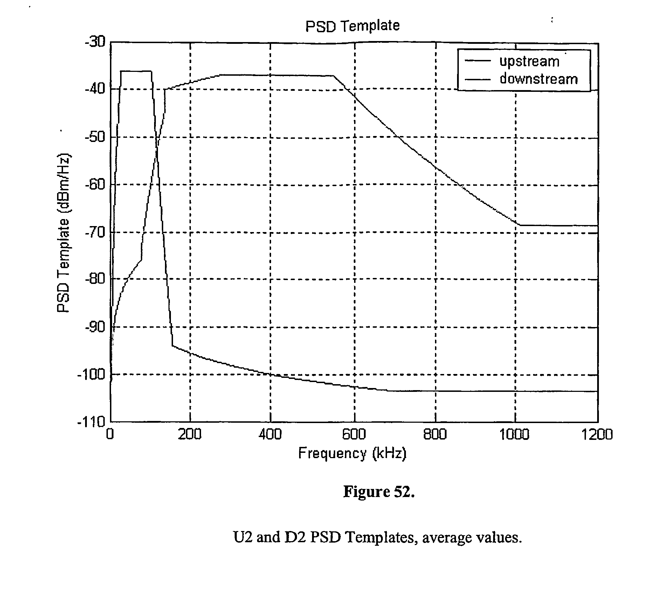

Figure 52 is an average values plot of U2 and D2 PSD templates according to embodiments of the invention.

## DETAILED DESCRIPTION OF PREFERRED EMBODIMENTS

Smart DSL Concept for LDSL.

This section defines a Smart DSL concept for LDSL. In some embodiments, operating with smart DSL systems for LDSL may include the below listed steps. The first and second steps may be completed, in some embodiments, during a standardization process and other steps may be performed during a modem's handshake/initialization phase in order to optimize the performance for any type of loops and noises.

Step 1. Smart DSL Systems members for LDSL (S).

In some embodiments it is preferable to complete step 1 during standardization processes. Alternatively, step 1 may be performed off line, for example, if no standardization is at stake.

In some embodiments, the first step consists of defining candidate systems that aim to be picked up based on optimization criteria defined below. Typically, these candidate systems may exhibit sufficient versatility features for both Upstream and

Downstream spectra, such as cut off frequencies, side lobes shapes, overlap, partial overlap, FDD characteristics, etc.

In some embodiments it may be desirable for candidate systems to also meet additional constraints. For example, an additional constraint may be that no new channel coding scheme should be considered in the candidate systems. In this manner, smart DSL systems in accordance with the invention exhibit several degrees of freedom that are summarized in what follows by parameter set S.

Step 2. Optimization criteria (C).

In some embodiments, it is preferable that the second step be completed during the standardization process. Alternatively, the second step may be completed off line if no standardization is at stake.

The second step comprises defining optimization criteria. Optimization criteria drive smart DSL systems members definition and, of course, the performance outcomes. For some embodiments, optimization criteria (C) may be summarized as covering Upstream and Downstream performance targets. In addition, optimization criteria may cover the margin within which performance targets should be met, such as, whether the deployment is Upstream or Downstream limited. The last point is important since often, in order to keep the optimization process simple priority should be given to Upstream or Downstream channels.

In some embodiments, optimization criteria may also comprise spectral compatibility requirements. This criteria may also include assumptions about neighboring services. Other optimization criteria are also possible.

Step 3. Choice of an optimal system amongst the smart DSL systems candidates (S*).

In some embodiments it may be preferable to complete step 3 during handshake/initialization. Completing step 3 during handshake/initialization may enable better handling of any type of loops and noise/cross talk conditions. Alternatively, this step could be completed off line, for example, if the operator has accurate prior knowledge of loops and noise conditions.

In some embodiments, completion of step 3 may be as simple as picking up one of two masks already defined. In other embodiments, completion of step 3 may comprise tuning a continuous parameter such as a cut off frequency. Other methods of completing step 3 are also possible.

In some embodiments, the outcome of step 3 may comprise an optimal system (S*) that will be run by the modem in the conditions that lead to its optimality.

Two Examples of Smart DSL system for LDSL, based on SBC requirements.

Example 1: Definition of the Masks to be used in the two smart systems.

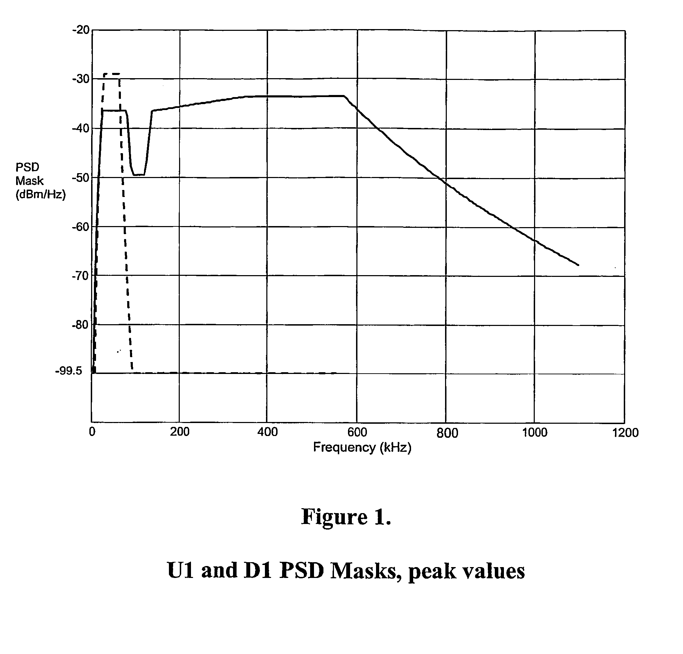

Three Upstream masks U1, U2, U3 and three Downstream masks D1, D2, D3 are used in what follows to define embodiments of smart systems. U1 (dashed line) and D1 (solid line) masks are plotted in Figure 1. Note that in this section the masks for peak values are defined. As defined by some standards, the PSD templates, or average PSD values, are 3.5 dB lower than the mask values. Tables 1 and 2 show some values for U1 and D1 (respectively) according to some embodiments of the invention.

**Table 1. U1 PSD Mask Definition, peak values**

| Frequency Band $f$ (kHz) | Equation for the PSD <u>mask</u> (dBm/Hz) |
|---|---|
| $0 < f \leq 4$ | -97.5, with max power in the in 0-4 kHz band of +15 dBm |
| $4 < f \leq 25.875$ | $-92.5 + 23.43 \times \log_2(f/4)$; |
| $25.875 < f \leq 60.375$ | -29.0 |
| $60.375 < f \leq 90.5$ | $-34.5 - 95 \times \log_2(f/60.375)$ |
| $90.5 < f \leq 1221$ | -90 |
| $1221 < f \leq 1630$ | -99.5 peak, with max power in the $[f, f+1\text{ MHz}]$ window of $(-90 - 48 \times \log_2(f/1221) + 60)$ dBm |
| $1630 < f \leq 11\ 040$ | -99.5 peak, with max power in the $[f, f+1\text{ MHz}]$ window of -50 dBm |

**Table 2. D1 PSD Mask Definition, peak values**

| Frequency Band $f$ (kHz) | Equation for the PSD <u>mask</u> (dBm/Hz) |
|---|---|
| $0 < f \leq 4$ | -97.5, with max power in the in 0-4 kHz band of +15 dBm |
| $4 < f \leq 25.875$ | $-92.5 + 20.79 \times \log_2(f/4)$ |
| $25.875 < f \leq 81$ | -36.5 |
| $81 < f \leq 92.1$ | $-36.5 - 70 \times \log_2(f/81)$ |
| $92.1 < f \leq 121.4$ | -49.5 |
| $121.4 < f \leq 138$ | $-49.5 + 70 \times \log_2(f/121.4)$ |
| $138 < f \leq 353.625$ | $-36.5 + 0.0139 \times (f-138)$ |
| $353.625 < f \leq 569.25$ | -33.5 |
| $569.25 < f \leq 1622.5$ | $-33.5 - 36 \times \log_2(f/569.25)$ |
| $1622.5 < f \leq 3093$ | -90 |

(continued)

| Frequency Band $f$(kHz) | Equation for the PSD mask (dBm/Hz) |
|---|---|
| 3093 < $f$ ≤ 4545 | -90 peak, with maximum power in the [$f$, $f$+1 MHz] window of (-36.5-36 $\times$ log$_2$($f$/1104) +60)dBm |
| 4545 < $f$ ≤ 11040 | -90 peak, with maximum power in the [f, f+1 MHz] window of -50 dBm |

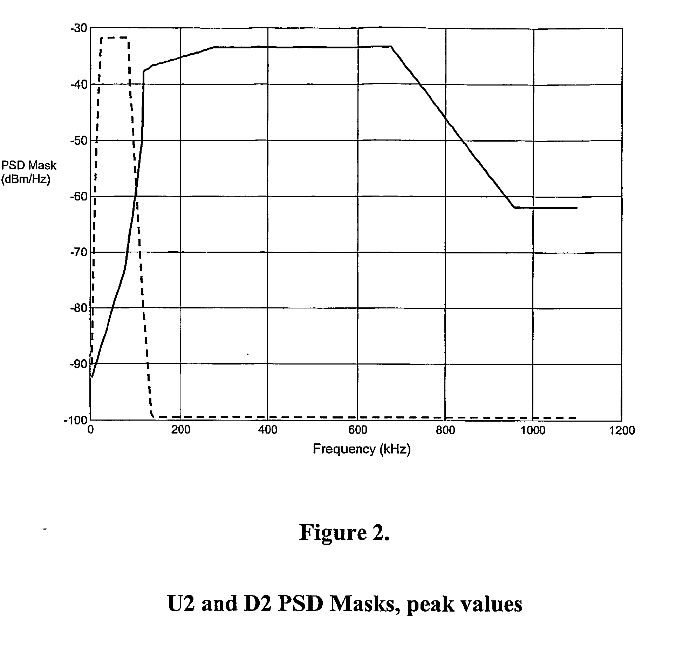

According to some embodiments of the invention U2 (dashed line) and D2 (solid line) spectrum masks may be plotted as shown in Figure 2. Note that, as above, the masks for peak values are defined. The PSD templates, or average PSD values, are 3.5 dB lower than the mask values. Tables 3 and 4 show some values for U2 and D2 (respectively) in accordance with some embodiments of the invention.

**Table 3. U2 Mask Definition, peak values**

| Frequency Band $f$ (kHz) | Equation for the PSD mask (dBm/Hz) |
|---|---|
| 0 < $f$ ≤ 4 | -97.5, with max power in the in 0-4 kHz band of +15 dBm |
| 4 < $f$ ≤ 25.875 | -92.5 22.5$\times$ log$_2$($f$/4); |
| 25.875 < $f$ ≤ 86.25 | -30.9 |
| 86.25 < $f$ ≤ 138.6 | -34.5- 95 $\times$ log$_2$ ($f$/86.25) |
| 138.6 < $f$ ≤ 1221 | -99.5 |
| 1221 < $f$ ≤ 1630 | -99.5 peak, with max power in the [$f$,$f$+ 1 MHz] window of (-90 - 48 $\times$ log$_2$($f$/1221) + 60) dBm |
| 1630 < $f$ ≤ 11 040 | -99.5 peak, with max power in the [$f$,$f$+ 1 MHz] window of -50 dBm |

**Table 4. D2 Mask Definition, peak values**

| Starting Frequency (kHz) | Starting PSD mask value (dBm/Hz) |
|---|---|
| 0.000000 | -98.000000 |
| 3.990000 | -98.000000 |
| 4.000000 | -92.500000 |
| 80.000000 | -72.500000 |
| 120.740000 | -47.500000 |
| 120.750000 | -37.800000 |
| 138.000000 | -36.800000 |
| 276.000000 | -33.500000 |
| 677.062500 | -33.500000 |
| 956.000000 | -62.000000 |
| 1800.000000 | -62.000000 |
| 2290.000000 | -90.000000 |
| 3093.000000 | -90.000000 |
| 4545.000000 | -110.000000 |
| 12000.000000 | -110.000000 |

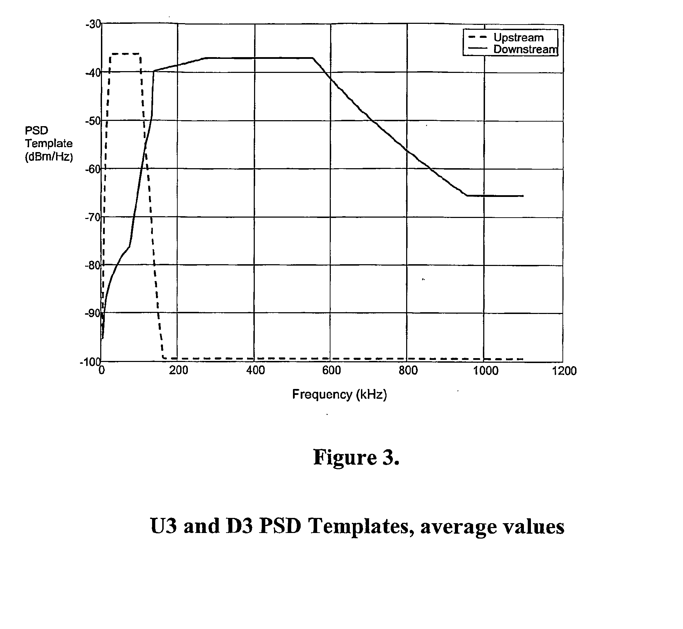

Similarly, tables 5 and 6 give the breakpoints of U3 and D3 PSD Templates (*average values*) in accordance with some embodiments of the invention. Figure 3 shows U3 (dashed line) and D3 (solid line) according to some embodiments of the invention.

**Table 5. U3 Spectrum PSD Template, average values**

| Frequency [KHz] | Nominal Upstream PSD [dBm/Hz] |
|---|---|
| 0 | -101.5 |
| 4 | -101.5 |
| 4 | -96 |
| 25.875 | -36.30 |
| 103.5 | -36.30 |
| 164.1 | -99.5 |
| 1221 | -99.5 |
| 1630 | -113.5 |
| 12000 | -113.5 |

**Table 6. D3 Spectrum PSD Template, average values**

| Frequency [kHz] | Nominal Downstream PSD [dBm/Hz] |
|---|---|
| 0 | -101.5 |
| 4 | -101.5 |
| 4 | -96 |
| 80 | -76 |
| 138 | -47.5 |
| 138 | -40 |
| 276 | -37 |
| 552 | -37 |
| 956 | -65.5 |
| 1800 | -65.5 |
| 2290 | -93.5 |
| 3093 | -93.5 |
| 4545 | -113.5 |
| 12000 | -113.5 |

Smart system scenario detection.

In this scenario, it is assumed that the Smart LDSL system has the capability either to analyze *a priori* the cross talk/physical layer conditions, or to pick up a mask after testing all of them based on performance and spectral compatibility criteria. Under this feature, all the modems located in the same area will detect the same type of cross talk/impairments. Therefore, the worst case catastrophic scenario based on the use of all the possible masks at any location happens to be a completely unrealistic view for a genuine smart system. This feature was incorporated with success in the already deployed smart enhanced Annex C for Japan.

Example 1: NON EC Smart LDSL

Definition

In this exemplary embodiment, a first smart system makes use of U1, U2, U3 and D1, D3 masks. According to the features of all these masks, no Echo canceller is required by this embodiment of a smart system that will be identified as NON EC Smart LDSL.

Simulation Results

Tables 7 and 8 gives the ADSL2 upstream and downstream performance for calibration purposes.

**Table 7. ADSL2 Upstream Channel performance**

| | | upstream | | | | | | | |
|---|---|---|---|---|---|---|---|---|---|
| | | case 1 | case 2 | case 3 | case 4 | case 5 | case 6 | case 7 | |
| | | Self Ne: | ADSL | ISDN | SHDSL | HDSL | MIX | TIA | T1 |
| ADSL2 | xDSL 10 | 1107 | 1107 | 596 | 294 | 305 | 570 | 646 | 1133 |
| | xDSL 11 | 884 | 884 | 319 | 120 | 130 | 291 | 361 | 894 |
| | xDSL 12 | 846 | 846 | 275 | 90 | 102 | 248 | 314 | 854 |
| | xDSL 13 | 692 | 692 | 142 | 48 | 54 | 99 | 163 | 697 |
| | xDSL 160 | 969 | 969 | 406 | 141 | 157 | 380 | 452 | 986 |
| | xDSL 165 | 925 | 925 | 360 | 116 | 130 | 330 | 404 | 944 |
| | xDSL 170 | 881 | 881 | 313 | 94 | 106 | 287 | 354 | 897 |
| | xDSL 175 | 837 | 837 | 269 | 78 | 89 | 243 | 306 | 851 |
| | xDSL 180 | 798 | 798 | 225 | 63 | 74 | 202 | 266 | 805 |
| | xDSL 185 | 755 | 755 | 185 | 51 | 60 | 162 | 224 | 764 |

**Table 8. ADSL2 Downstream Channel performance**

| | | downstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| ADSL2 | xDSL 10 | 298 | 298 | 305 | 328 | 326 | 307 | 162 | 170 |
| | xDSL 11 | 0 | 0 | 0 | 0 | 0 | 0 | 0 | 0 |
| | xDSL 12 | 0 | 0 | 0 | 0 | 0 | 0 | 0 | 0 |
| | xDSL 13 | 0 | 0 | 0 | 0 | 0 | 0 | 0 | 0 |
| | xDSL 160 | 300 | 300 | 303 | 323 | 321 | 303 | 88 | 91 |
| | xDSL 165 | 201 | 201 | 203 | 224 | 224 | 207 | 43 | 49 |
| | xDSL 170 | 125 | 125 | 113 | 141 | 140 | 123 | 8 | 13 |
| | xDSL 175 | 59 | 66 | 57 | 74 | 74 | 63 | 0 | 0 |
| | xDSL 180 | 0 | 8 | 12 | 17 | 17 | 12 | 0 | 0 |
| | xDSL 185 | 0 | 0 | 0 | 0 | 0 | 0 | 0 | 0 |

Tables 9 and 10 display the results of the Modified OJ-074. These results may be taken as references for LDSL.

**Table 9. M OJ-074 Upstream Channel Performance Results**

| | | upstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| M OJ-074 | ADSL 10 | 839 | 841 | 488 | 300 | 315 | 458 | 510 | 844 |
| | xDSL 11 | 667 | 667 | 312 | 144 | 159 | 283 | 332 | 669 |
| | xDSL 12 | 622 | 623 | 270 | 111 | 124 | 242 | 289 | 624 |
| | xDSL 13 | 496 | 496 | 157 | 59 | 69 | 136 | 176 | 497 |
| | xDSL 160 | 709 | 710 | 353 | 174 | 191 | 324 | 374 | 711 |
| | xDSL 165 | 675 | 675 | 319 | 145 | 161 | 291 | 340 | 677 |
| | xDSL 170 | 641 | 641 | 287 | 120 | 134 | 259 | 307 | 642 |
| | xDSL 175 | 606 | 606 | 255 | 101 | 110 | 227 | 275 | 608 |
| | xDSL 180 | 572 | 572 | 224 | 80 | 92 | 198 | 243 | 573 |
| | xDSL 185 | 537 | 537 | 195 | 66 | 76 | 169 | 212 | 539 |

**Table 10. M OJ-074 Upstream Channel Performance Results**

| | | downstream | | | | | | | |
|---|---|---|---|---|---|---|---|---|---|
| | | case 1 | case 2 | case 3 | case 4 | case 5 | case 6 | case 7 | |
| | | Self Ne; | ADSL | ISDN | SHDSL | HDSL | MIX | TIA | T1 |
| M OJ-074 | LDSL 10 | 2396 | 1659 | 1784 | 2023 | 1991 | 1616 | 224 | 436 |
| | xDSL 11 | 997 | 407 | 431 | 861 | 892 | 358 | 0 | 79 |
| | xDSL 12 | 1202 | 643 | 622 | 974 | 969 | 546 | 0 | 48 |
| | xDSL 13 | 855 | 398 | 449 | 696 | 776 | 350 | 0 | 52 |
| | xDSL 160 | 2048 | 1333 | 1413 | 1752 | 1725 | 1268 | 150 | 331 |
| | xDSL165 | 1788 | 1086 | 1179 | 1527 | 1518 | 1027 | 92 | 261 |
| | xDSL170 | 1553 | 875 | 933 | 1326 | 1332 | 809 | 53 | 205 |
| | xDSL175 | 1343 | 754 | 755 | 1145 | 1163 | 648 | 25 | 152 |
| | xDSL180 | 1147 | 633 | 694 | 985 | 1011 | 579 | 4 | 111 |
| | xDSL 185 | 978 | 529 | 608 | 840 | 872 | 500 | 0 | 76 |

Tables 11 and 12 give the results of NON EC Smart LDSL system.

**Table 11. NON EC Smart LDSL Upstream Channel Performance Results**

| | | upstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| NON EC SMART | xDSL 10 | 839 | 841 | 488 | 310 | 324 | 458 | 510 | 851 |
| | xDSL 11 | 667 | 667 | 312 | 179 | 196 | 283 | 332 | 673 |
| | xDSL 12 | 622 | 623 | 270 | 146 | 157 | 242 | 289 | 628 |
| | xDSL 13 | 496 | 496 | 176 | 102 | 110 | 142 | 176 | 500 |
| | xDSL 160 | 709 | 710 | 353 | 206 | 219 | 324 | 374 | 716 |
| | xDSL 165 | 675 | 675 | 319 | 182 | 195 | 291 | 340 | 681 |
| | xDSL 170 | 641 | 641 | 287 | 152 | 168 | 259 | 307 | 646 |
| | xDSL175 | 606 | 606 | 255 | 136 | 145 | 227 | 275 | 611 |
| | xDSL 180 | 572 | 572 | 226 | 122 | 130 | 198 | 243 | 577 |
| | xDSL 185 | 537 | 537 | 200 | 108 | 116 | 169 | 212 | 542 |

**Table 12. NON EC Smart LDSL Downstream Channel Performance Results**

| | | downstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| NON EC SMART | xDSL 10 | 2615 | 1711 | 1946 | 2148 | 2169 | 1679 | 224 | 572 |
| | xDSL 11 | 1060 | 407 | 445 | 902 | 958 | 358 | 0 | 135 |
| | xDSL 12 | 1265 | 643 | 634 | 998 | 1025 | 546 | 0 | 105 |
| | xDSL 13 | 885 | 398 | 449 | 705 | 816 | 350 | 0 | 79 |
| | xDSL 160 | 2156 | 1333 | 1466 | 1797 | 1816 | 1268 | 150 | 429 |
| | xDSL 165 | 1885 | 1086 | 1222 | 1572 | 1604 | 1027 | 92 | 349 |
| | xDSL170 | 1639 | 875 | 967 | 1370 | 1413 | 809 | 53 | 278 |
| | xDSL 175 | 1418 | 754 | 782 | 1187 | 1237 | 648 | 25 | 220 |
| | xDSL 180 | 1213 | 633 | 720 | 1025 | 1079 | 579 | 4 | 169 |
| | xDSL 185 | 1034 | 529 | 629 | 877 | 932 | 500 | 0 | 126 |

Tables 13 and 14 give the selected Upstream and Downstream masks by the smart system. These tables confirm that, for this embodiment, a single mask can't handle all the noise scenarios and all the loops.

**Table 13. NON EC Smart LDSL: Upstream Selection Table**

| | | Upstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| selection index | xDSL 10 | 3 | 3 | 3 | 2 | 2 | 3 | 3 | 3 |
| | xDSL 11 | 3 | 3 | 3 | 2 | 2 | 3 | 3 | 3 |
| | xDSL 12 | 3 | 3 | 3 | | 1 2 | 3 | 3 | 3 |
| | xDSL 13 | 3 | 3 | 2 | 1 | 1 | 2 | 2 | 3 |
| | xDSL 160 | 3 | 3 | 3 | 2 | 2 | 3 | 3 | 3 |
| | xDSL 165 | 3 | 3 | 3 | 2 | 2 | 3 | 3 | 3 |
| | xDSL 170 | 3 | 3 | 3 | 2 | 2 | 3 | 3 | 3 |
| | xDSL 175 | 3 | 3 | 3 | 1 | 1 | 3 | 3 | 3 |
| | xDSL 180 | 3 | 3 | 2 | 1 | 1 | 3 | 3 | 3 |
| | xDSL 185 | 3 | 3 | 2 | 1 | 1 | 3 | 3 | 3 |
| 1 = ends at ~60KHz, 2 = ends at ~86KHz, 3 = ends at ~103KHz | | | | | | | | | |

**Table 14. NON EC Smart LDSL: Downstream Selection Table**

| | | Downstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| selection index | xDSL 10 | 1 | 1 | 1 | 1 | 1 | 1 | 2 | 1 |
| | xDSL 11 | 1 | 2 | 1 | 1 | 1 | 2 | 1 | 1 |
| | xDSL 12 | 1 | 2 | 1 | 1 | 1 | 2 | 1 | 1 |
| | xDSL 13 | 1 | 2 | 2 | 1 | 1 | 2 | 1 | 1 |
| | xDSL 160 | 1 | 2 | 1 | 1 | 1 | 2 | 2 | 1 |
| | xDSL 165 | 1 | 2 | 1 | 1 | 1 | 2 | 2 | 1 |
| | xDSL 170 | 1 | 2 | 1 | 1 | 1 | 2 | 2 | 1 |
| | xDSL 175 | 1 | 2 | 1 | 1 | 1 | 2 | 2 | 1 |
| | xDSL 180 | 1 | 2 | 1 | 1 | 1 | 2 | 2 | 1 |
| | xDSL 185 | 1 | 2 | 1 | 1 | 1 | 2 | 1 | 1 |
| 1 = starts at ~ 120KHz ; 2 = starts at ~ 138KHz | | | | | | | | | |

Tables 15 and 16 provide the performance improvement inherent to the NON EC Smart LDSL versus M OJ-074. As can be seen from the tables, this embodiment of a smart system performs better than the system disclosed in M OJ-074. This embodiment of a smart system compensates for the M OJ-074 Upstream channel weaknesses in the presence of SHDSL and HDSL.

**Table 15. (NON EC SMART LDSL US rate - M OJ074 US rate)**

| upstream difference with M OJ-074 | | | | | | | |
|---|---|---|---|---|---|---|---|
| case 1 | case 2 | case 3 | case 4 | case 5 | case 6 | case 7 | |
| Self Nex | ADSL | ISDN | SHDSL | HDSL | MIX | TIA | T1 |
| 0 | 0 | 0 | 10 | 9 | 0 | 0 | 7 |
| 0 | 0 | 0 | 35 | 37 | 0 | 0 | 4 |
| 0 | 0 | 0 | 35 | 33 | 0 | 0 | 4 |
| 0 | 0 | 19 | 43 | 41 | 6 | 0 | 3 |
| 0 | 0 | 0 | 32 | 28 | 0 | 0 | 5 |
| 0 | 0 | 0 | 37 | 34 | 0 | 0 | 4 |
| 0 | 0 | 0 | 32 | 34 | 0 | 0 | 4 |
| 0 | 0 | 0 | 35 | 35 | 0 | 0 | 3 |
| 0 | 0 | 2 | 42 | 38 | 0 | 0 | 4 |
| 0 | 0 | 5 | 42 | 40 | 0 | 0 | 3 |

**Table 16. (NON EC SMART LDSL DS rate - M OJ074 DS rate)**

| downstream difference with M OJ-074 | | | | | | | |
|---|---|---|---|---|---|---|---|
| case 1 | case 2 | case 3 | case 4 | case 5 | case 6 | case 7 | |
| Self Nex | ADSL | ISDN | SHDSL | HDSL | MIX | TIA | T1 |
| 219 | 52 | 162 | 125 | 178 | 63 | 0 | 136 |
| 63 | 0 | 14 | 41 | 66 | 0 | 0 | 56 |
| 63 | 0 | 12 | 24 | 56 | 0 | 0 | 57 |
| 30 | 0 | 0 | 9 | 40 | 0 | 0 | 27 |
| 108 | 0 | 53 | 45 | 91 | 0 | 0 | 98 |
| 97 | 0 | 43 | 45 | 86 | 0 | 0 | 88 |
| 86 | 0 | 34 | 44 | 81 | 0 | 0 | 73 |
| 75 | 0 | 27 | 42 | 74 | 0 | 0 | 68 |
| 66 | 0 | 26 | 40 | 68 | '0 | 0 | 58 |
| 56 | 0 | 21 | 37 | 60 | 0 | 0 | 50 |

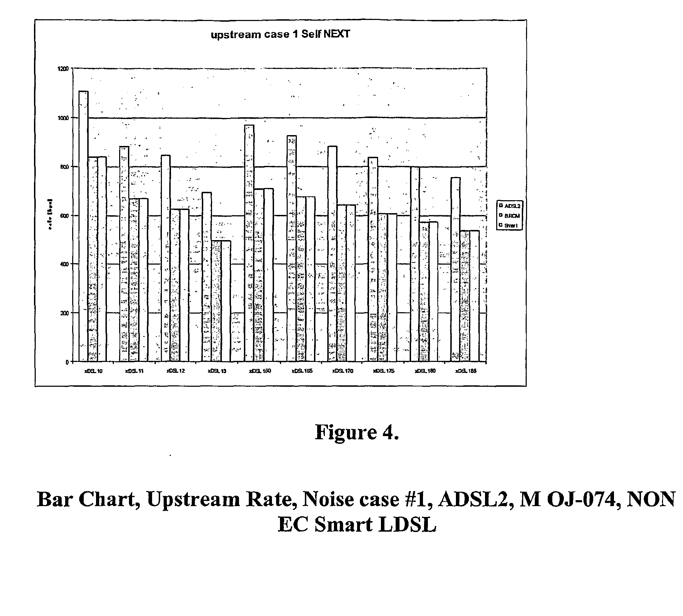

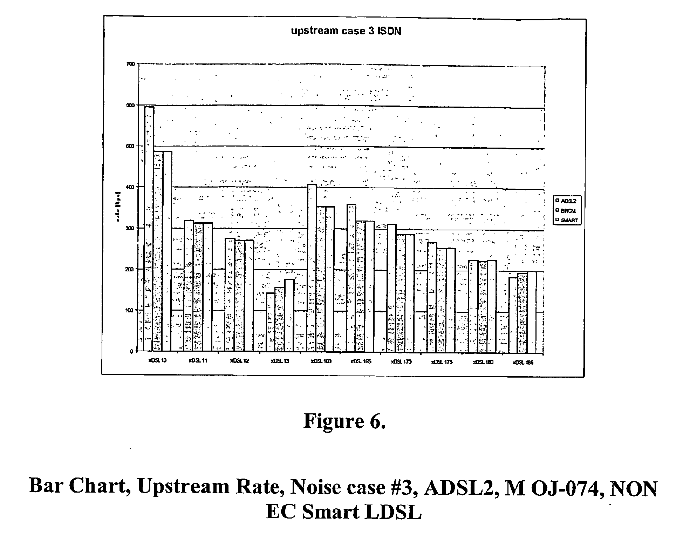

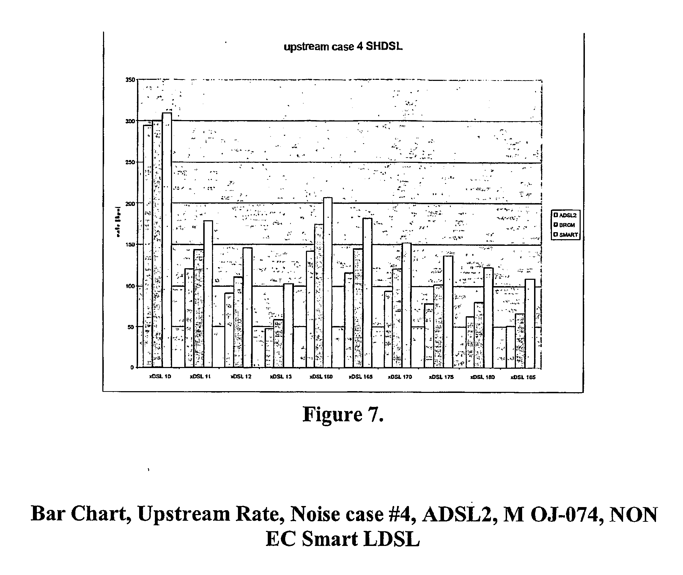

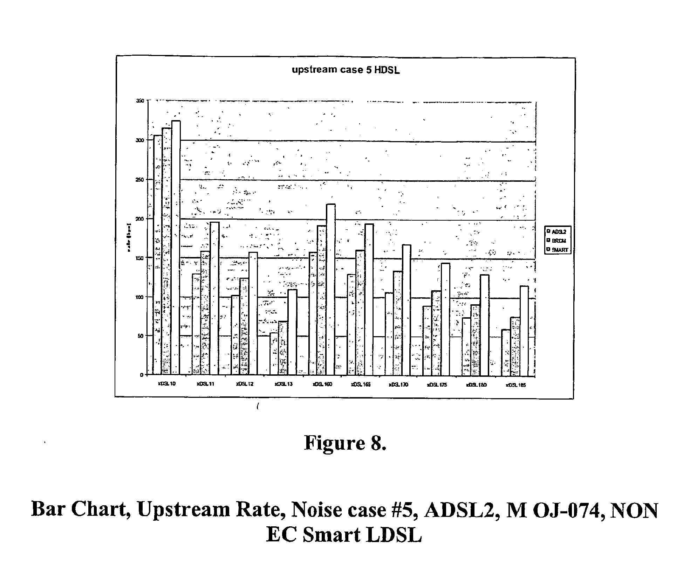

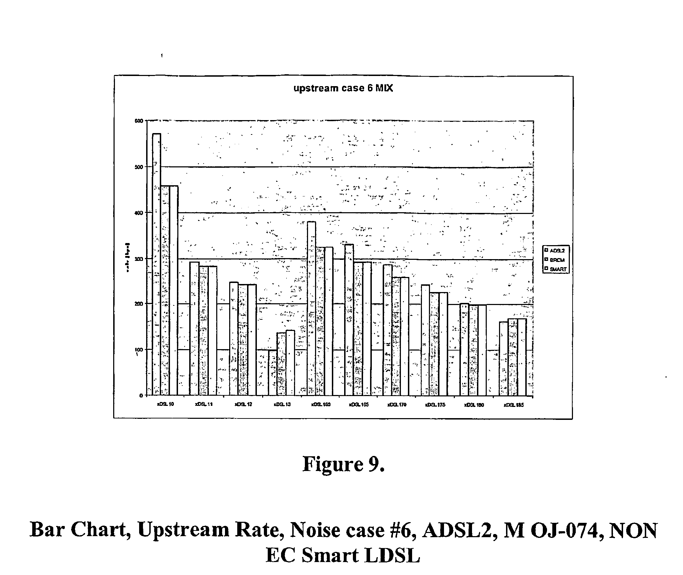

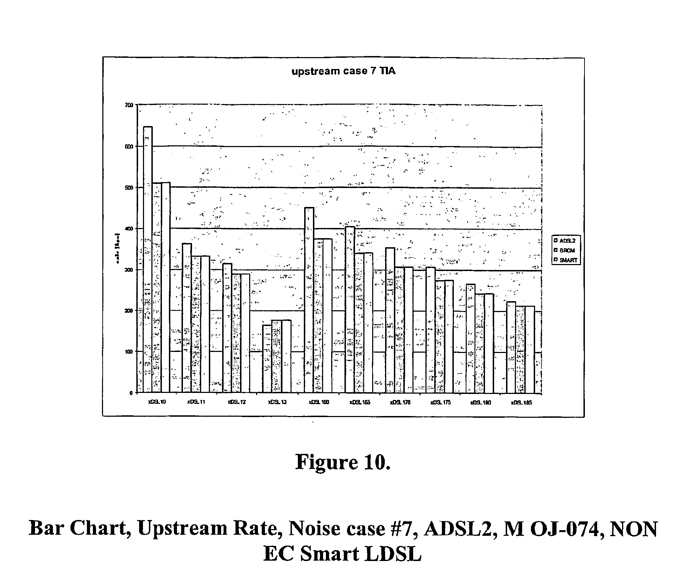

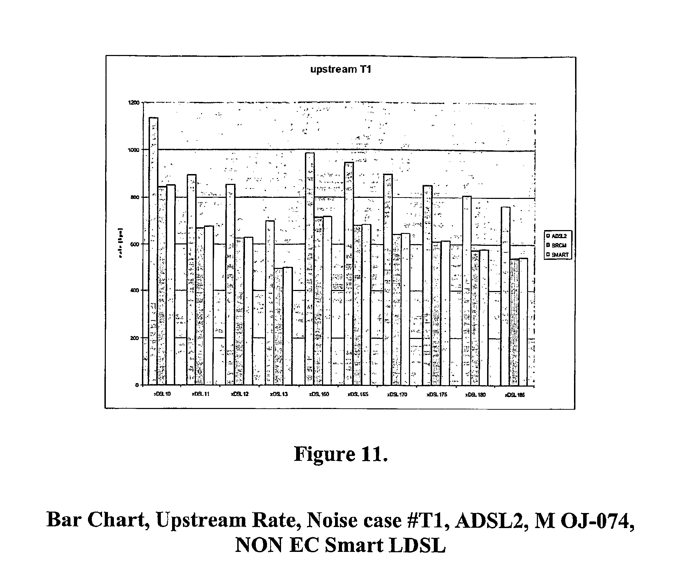

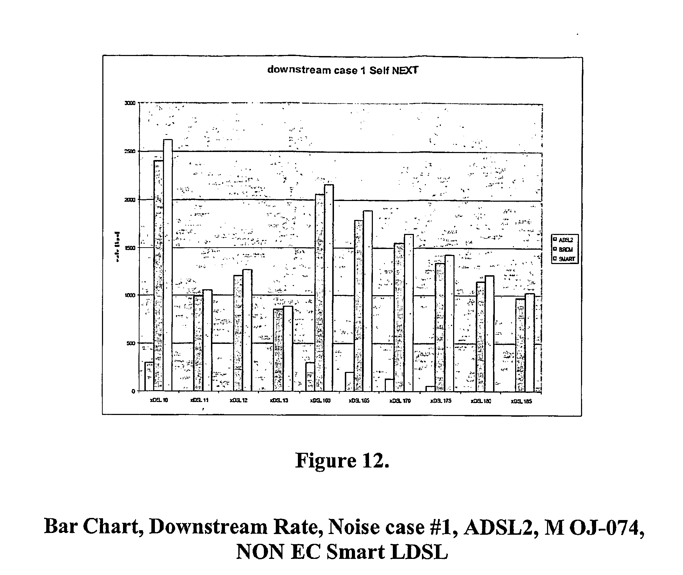

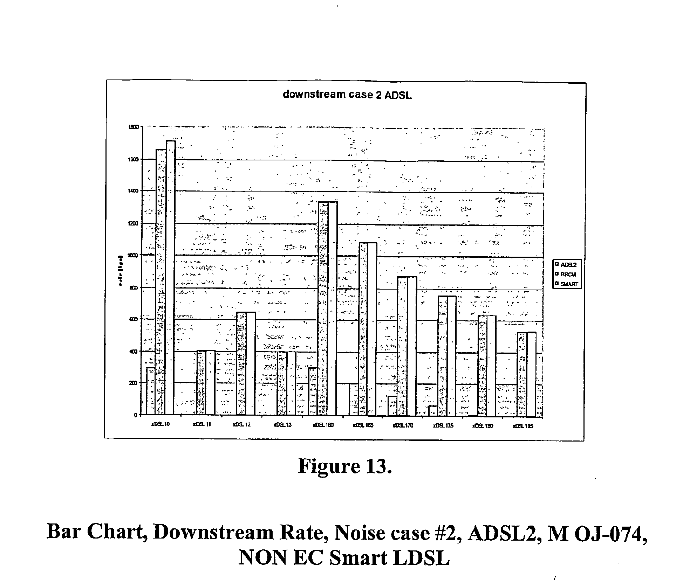

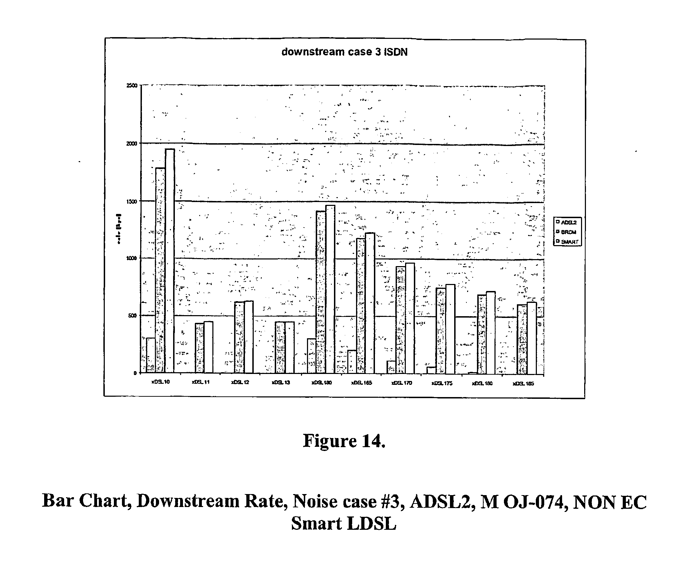

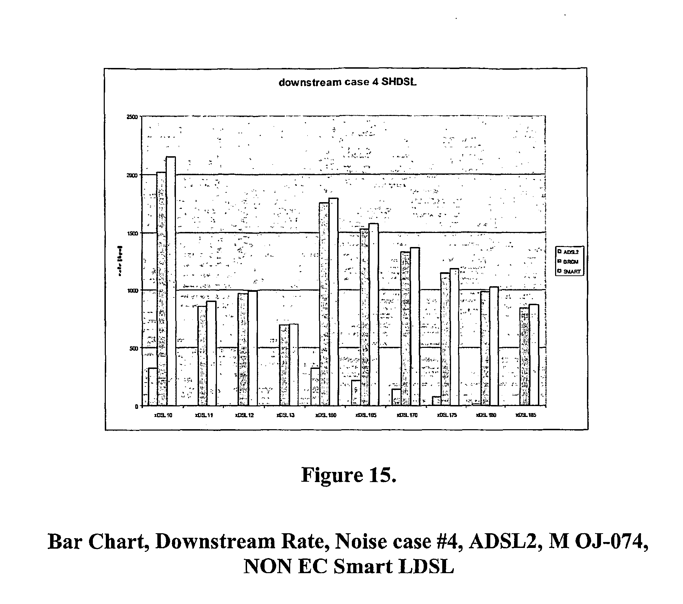

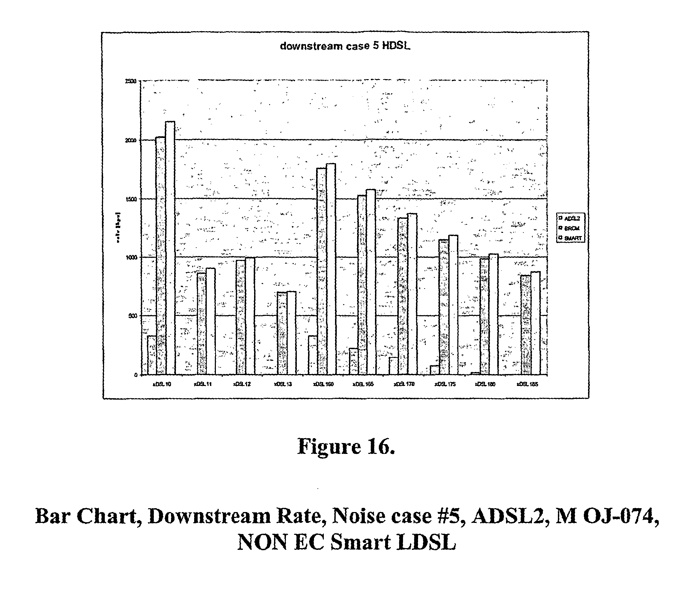

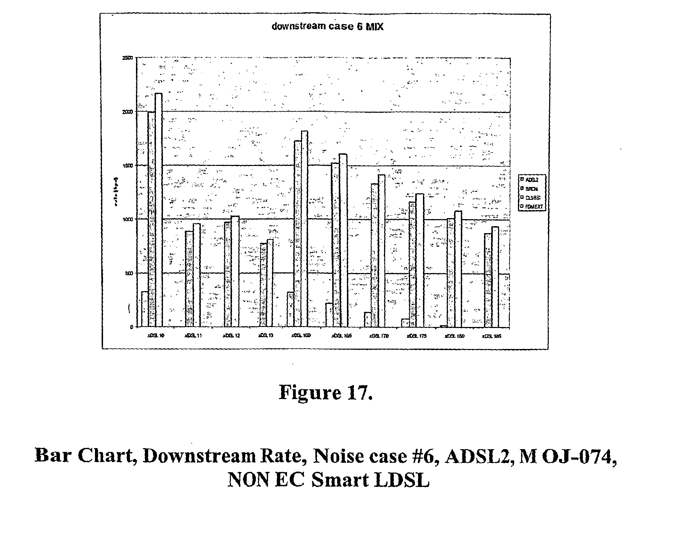

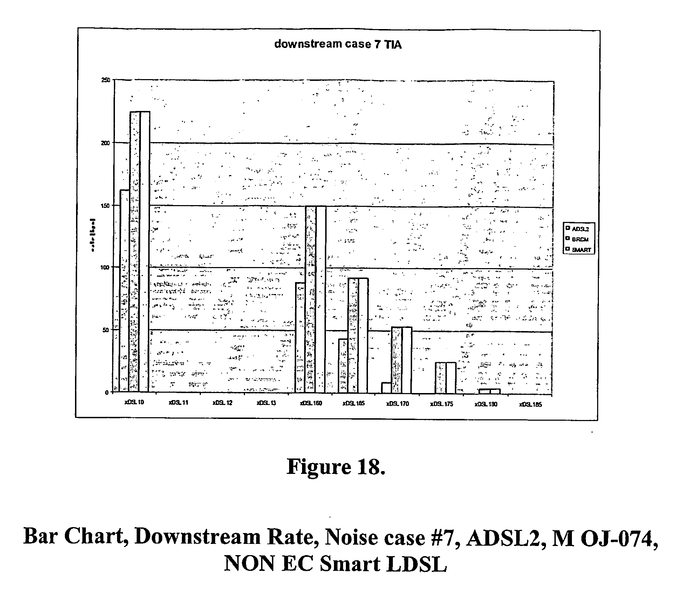

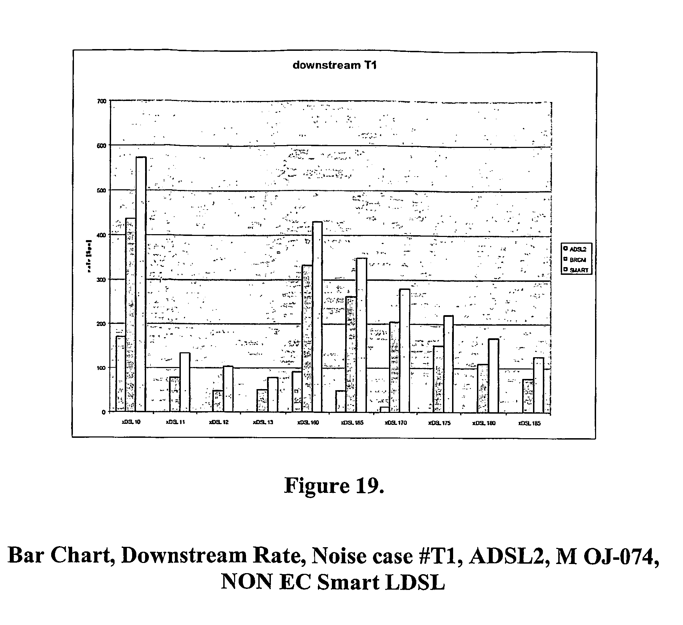

Figures 4-19 show bar chart performance plots of ADSL2, non-EC smart LDSL and the system disclosed in M OJ-074, for the above described noise cases.

EC Smart LDSL system

Definition

As described above, a first exemplary smart system may make use of U1, U2, U3 and D1, D2, D3. In accordance with the features of all these masks, an Echo canceller may be advantageous when D2 is used. A second exemplary smart system may be identified as the EC Smart LDSL. For this embodiment, the Smart LDSL system may have the capability to analyze *a priori* the cross talk/physical layer conditions for all the Smart LDSL modems located in the same area. In addition the system may detect the same type of cross talks/impairments and, therefore, the worst case self NEXT due to the Downstream mask D2 may only apply when this mask is used.

EC Smart LDSL: Simulation results

**Table 17. EC Smart LDSL Upstream Channel Performance Results**

|  |  | upstream | | | | | | | |
|---|---|---|---|---|---|---|---|---|---|
|  |  | case 1 | case 2 | case 3 | case 4 | case 5 | case 6 | case 7 |  |
|  |  | Self Nex | ADSL | ISDN | SHDSL | HDSL | MIX | TIA | T1 |
| EC SMART LDSL | xDSL 10 | 839 | 841 | 488 | 310 | 324 | 458 | 456 | 423 |
|  | LDSL 11 | 667 | 667 | 312 | 179 | 196 | 283 | 280 | 253 |
|  | ADSL 12 | 622 | 623 | 270 | 146 | 157 | 242 | 239 | 214 |
|  | xDSL 13 | 496 | 496 | 176 | 102 | 110 | 142 | 135 | 130 |
|  | xDSL 160 | 709 | 710 | 353 | 206 | 219 | 324 | 321 | 291 |
|  | xDSL 165 | 675 | 675 | 319 | 182 | 195 | 291 | 288 | 259 |
|  | xDSL 170 | 641 | 641 | 287 | 152 | 168 | 259 | 256 | 229 |
|  | xDSL 175 | 606 | 606 | 255 | 136 | 145 | 227 | 225 | 200 |
|  | xDSL 180 | 572 | 572 | 226 | 122 | 130 | 198 | 195 | 168 |
|  | xDSL 185 | 537 | 537 | 200 | 108 | 116 | 169 | 166 | 139 |

**Table 18. EC Smart LDSL Downstream Channel Performance Results**

|  |  | Downstream | | | | | | | |
|---|---|---|---|---|---|---|---|---|---|
|  |  | case 1 | case 2 | case 3 | case 4 | case 5 | case 6 | case 7 |  |
|  |  | Self Nex | ADSL | ISDN | SHDSL | HDSL | MIX | TIA | T1 |
| EC SMART LDSL | ADSL 10 | 2615 | 1711 | 1946 | 2148 | 2169 | 1679 | 381 | 719 |
|  | xDSL 11 | 1060 | 407 | 445 | 902 | 958 | 358 | 54 | 193 |
|  | ADSL 12 | 1265 | 643 | 634 | 998 | 1025 | 546 | 38 | 140 |
|  | xDSL 13 | 885 | 398 | 449 | 705 | 816 | 350 | 18 | 80 |
|  | xDSL 160 | 2156 | 1333 | 1466 | 1797 | 1816 | 1268 | 216 | 476 |
|  | xDSL 170 | 1885 | 1086 | 1222 | 1572 | 1604 | 1027 | 140 | 388 |
|  | xDSL 170 | 1639 | 875 | 967 | 1370 | 1413 | 809 | 86 | 308 |
|  | xDSL 175 | 1418 | 754 | 782 | 1187 | 1237 | 648 | 62 | 237 |
|  | xDSL 180 | 1213 | 633 | 720 | 1025 | 1079 | 579 | 28 | 181 |
|  | xDSL 185 | 1034 | 529 | 629 | 877 | 932 | 500 | 20 | 127 |

**Table 19. EC Smart LDSL: Upstream Selection Table**

| | | Upstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| EC SMART LDSL | xDSL 10 | 3 | 3 | 3 | 2 | 2 | 3 | 3 | 3 |
| | xDSL 11 | 3 | 3 | 3 | 2 | 2 | 3 | 3 | 3 |
| | xDSL 12 | 3 | 3 | 3 | 1 | 2 | 3 | 3 | 3 |
| | xDSL 13 | 3 | 3 | 2 | 1 | 1 | 2 | 2 | 1 |
| | xDSL 160 | 3 | 3 | 3 | 2 | 2 | 3 | 3 | 3 |
| | xDSL 165 | 3 | 3 | 3 | 2 | 2 | 3 | 3 | 3 |
| | xDSL 170 | 3 | 3 | 3 | 2 | 2 | 3 | 3 | 3 |
| | xDSL 175 | 3 | 3 | 3 | 1 | 1 | 3 | 3 | 3 |
| | xDSL 180 | 3 | 3 | 2 | 1 | 1 | 3 | 3 | 2 |
| | xDSL 185 | 3 | 3 | 2 | 1 | 1 | 3 | 3 | 2 |
| 1 = ends at ~60KHz, 2 = ends at ~86KHz, 3 = ends at ~103KHz | | | | | | | | | |

**Table 20. EC Smart LDSL: Downstream Selection Table**

| | | Downstream | | | | | | | |
|---|---|---|---|---|---|---|---|---|---|
| | | case 1 | case 2 | case 3 | case 4 | case 5 | case 6 | case 7 | |
| | | Self Nex | ADSL | ISDN | SHDSL | HDSL | MIX | TIA | T1 |
| EC SMART LDSL | xDSL 10 | 2 | 2 | 2 | 2 | 2 | 2 | 1 | 1 |
| | xDSL 11 | 2 | 3 | 2 | 2 | 2 | 3 | 1 | 1 |
| | xDSL 12 | 2 | 3 | 2 | 2 | 2 | 3 | 1 | 1 |
| | xDSL 13 | 2 | 3 | 3 | 2 | 2 | 3 | 1 | 1 |
| | xDSL160 | 2 | 3 | 2 | 2 | 2 | 3 | 1 | 1 |
| | xDSL 165 | 2 | 3 | 2 | 2 | 2 | 3 | 1 | 1 |
| | xDSL 170 | 2 | 3 | 2 | 2 | 2 | 3 | 1 | 1 |
| | xDSL 175 | 2 | 3 | 2 | 2 | 2 | 3 | 1 | 1 |
| | xDSL 180 | 2 | 3 | 2 | 2 | 2 | 3 | 1 | 1 |
| | xDSL 185 | 2 | 3 | 2 | 2 | 2 | 3 | 1 | 1 |
| 1 = starts at ~ 120KHz ; 2 = starts at ~ 138KHz | | | | | | | | | |

**Table 21. (EC SMART LDSL US rate - M OJ074 US rate)**

| upstream difference with M OJ-074 | | | | | | | |
|---|---|---|---|---|---|---|---|
| case 1 | case 2 | case 3 | case 4 | case 5 | case 6 | case 7 | |
| Self Nex | ADSL | ISDN | SHDSL | HDSL | MIX | TIA | T1 |
| 0 | 0 | 0 | 10 | 9 | 0 | -54 | -421 |
| 0 | 0 | 0 | 35 | 37 | 0 | -52 | -416 |
| 0 | 0 | 0 | 35 | 33 | 0 | -50 | -410 |

(continued)

| upstream difference with M OJ-074 | | | | | | | |
|---|---|---|---|---|---|---|---|
| case 1 | case 2 | case 3 | case 4 | case 5 | case 6 | case 7 | |
| Self Nex | ADSL | ISDN | SHDSL | HDSL | MIX | TIA | T1 |
| 0 | 0 | 19 | 43 | 41 | 6 | -41 | -367 |
| 0 | 0 | 0 | 32 | 28 | 0 | -53 | -420 |
| 0 | 0 | 0 | 37 | 34 | 0 | -52 | -418 |
| 0 | 0 | 0 | 32 | 34 | 0 | -51 | -413 |
| 0 | 0 | 0 | 35 | 35 | 0 | -50 | -408 |
| 0 | 0 | 2 | 42 | 38 | 0 | -48 | -405 |
| 0 | 0 | 5 | 42 | 40 | 0 | -46 | -400 |

**Table 22. (EC SMART LDSL DS rate - M OJ074 DS rate)**

| downstream difference with M OJ-074 | | | | | | | |
|---|---|---|---|---|---|---|---|
| case 1 | case 2 | case 3 | case 4 | case 5 | case 6 | case 7 | |
| Self Nex | ADSL | ISDN | SHDSL | HDSL | MIX | TIA | T1 |
| 219 | 52 | 162 | 125 | 178 | 63 | 157 | 283 |
| 63 | 0 | 14 | 41 | 66 | 0 | 54 | 114 |
| 63 | 0 | 12 | 24 | 56 | 0 | 38 | 92 |
| 30 | 0 | 0 | 9 | 40 | 0 | 18 | 28 |
| 108 | 0 | 53 | 45 | 91 | 0 | 66 | 145 |
| 97 | 0 | 43 | 45 | 86 | 0 | 48 | 127 |
| 86 | 0 | 34 | 44 | 81 | 0 | 33 | 103 |
| 75 | 0 | 27 | 42 | 74 | 0 | 37 | 85 |
| 66 | 0 | 26 | 40 | 68 | 0 | 24 | 70 |
| 56 | 0 | 21 | 37 | 60 | 0 | 20 | 51 |

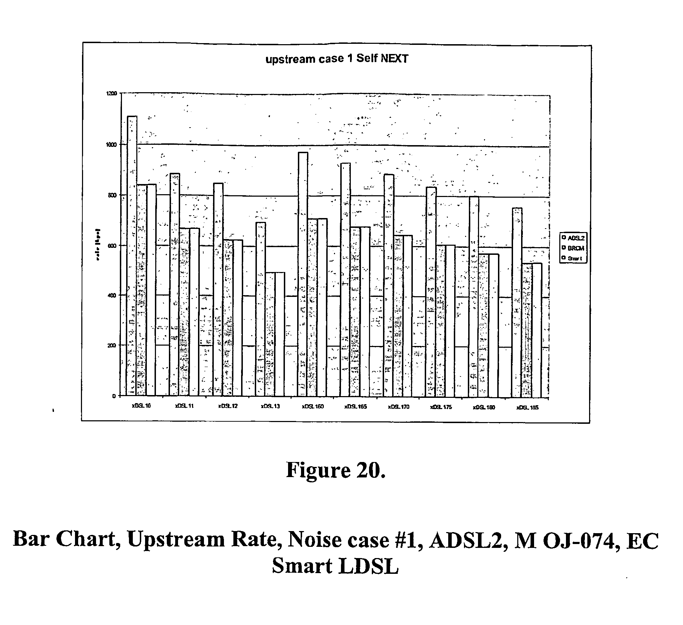

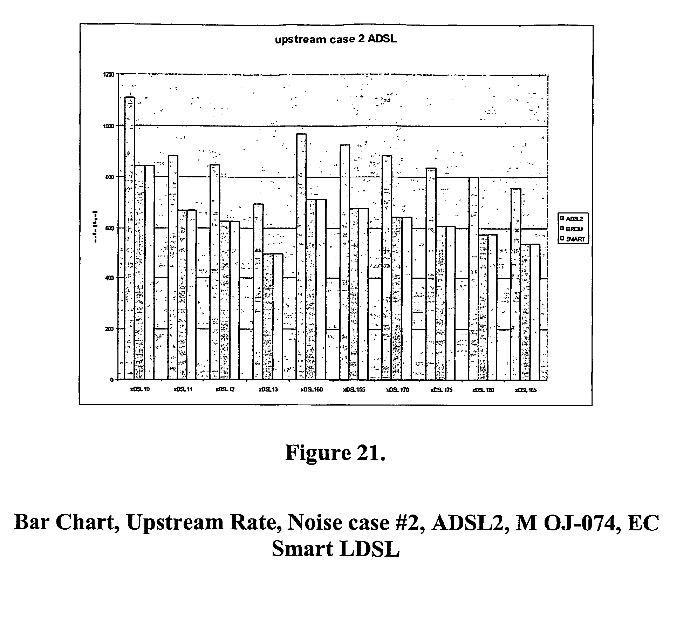

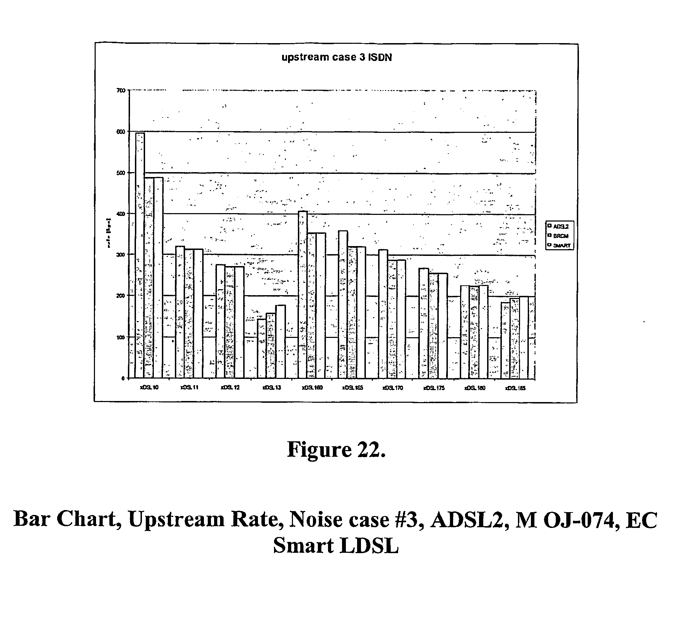

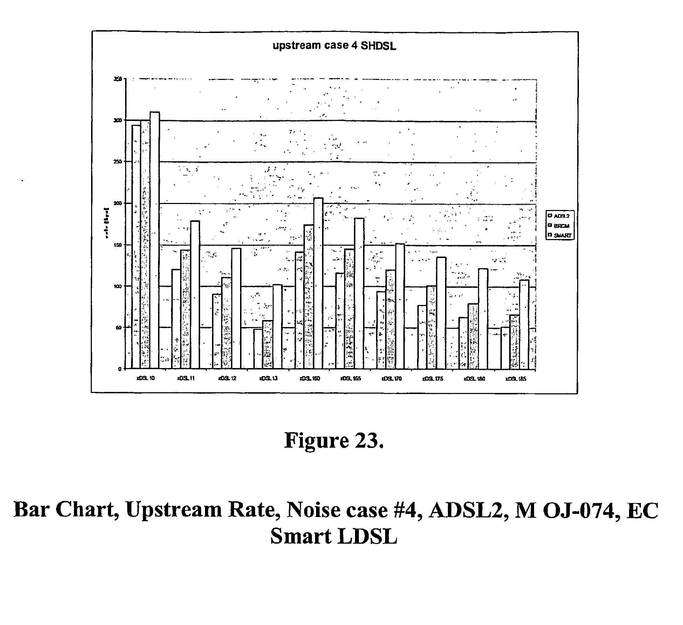

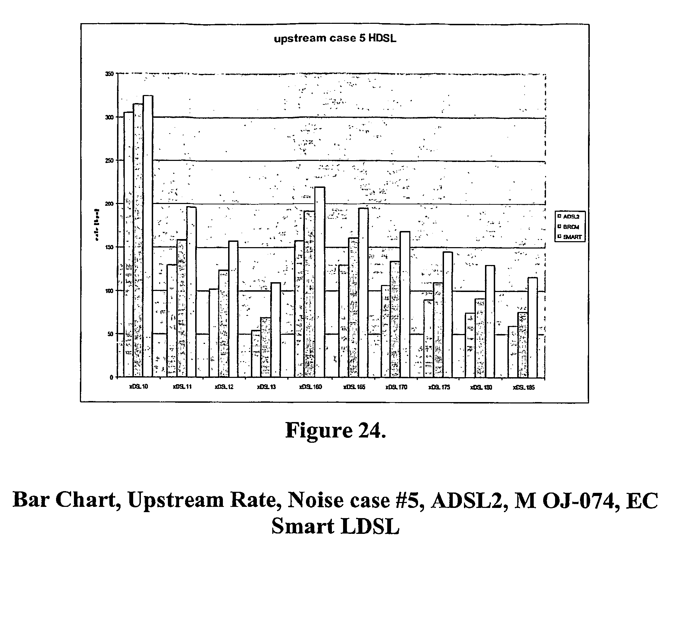

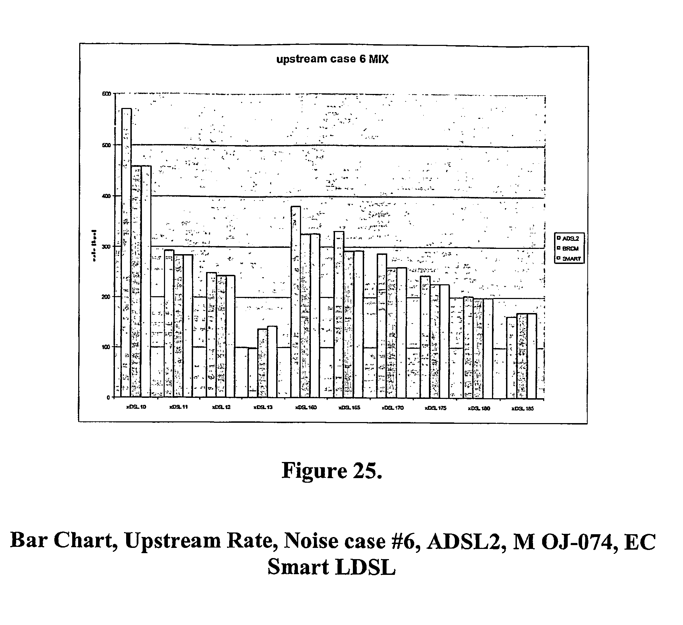

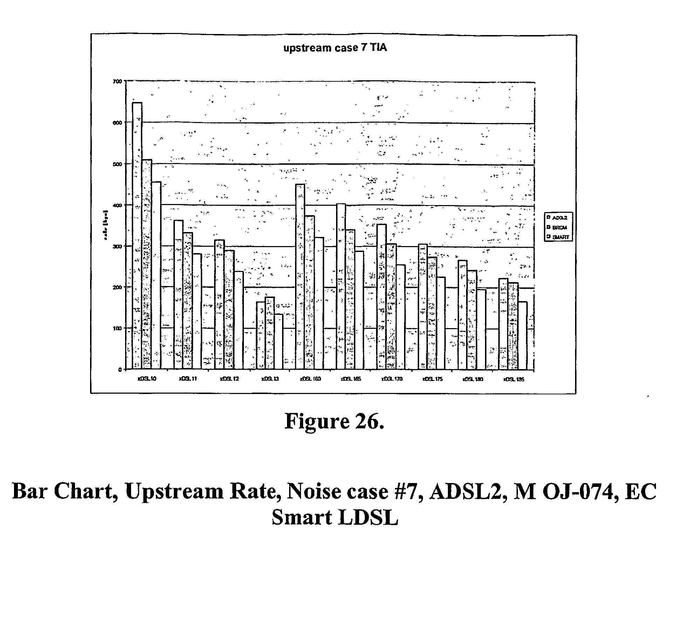

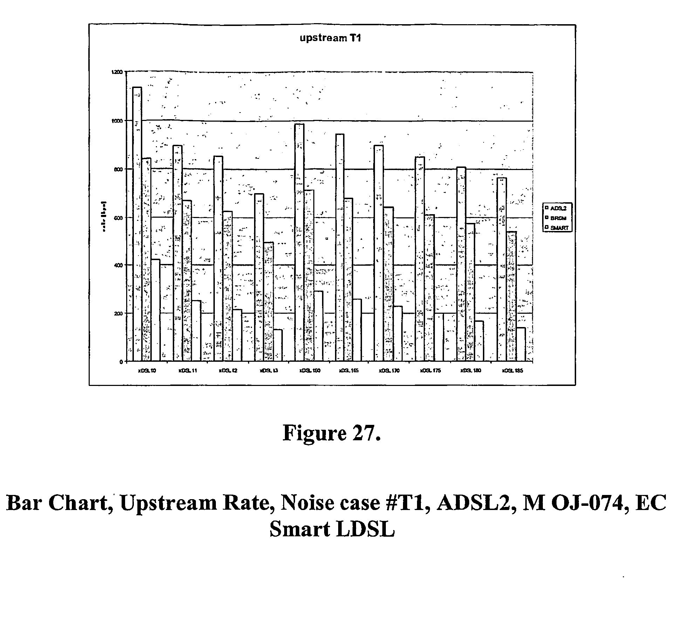

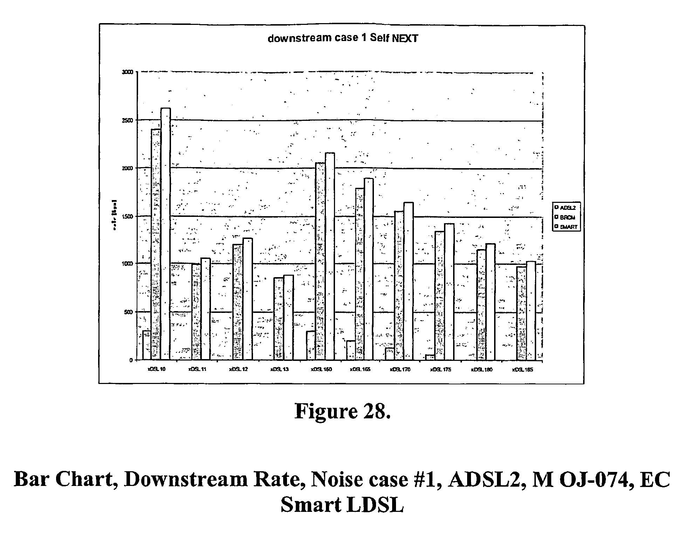

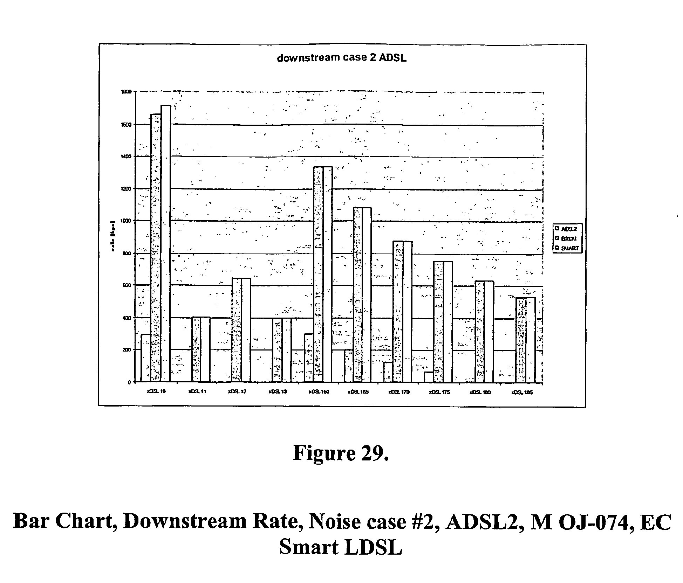

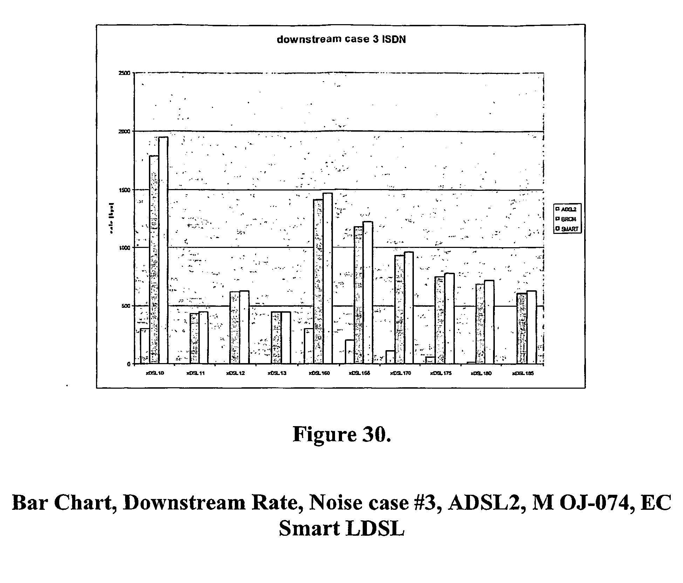

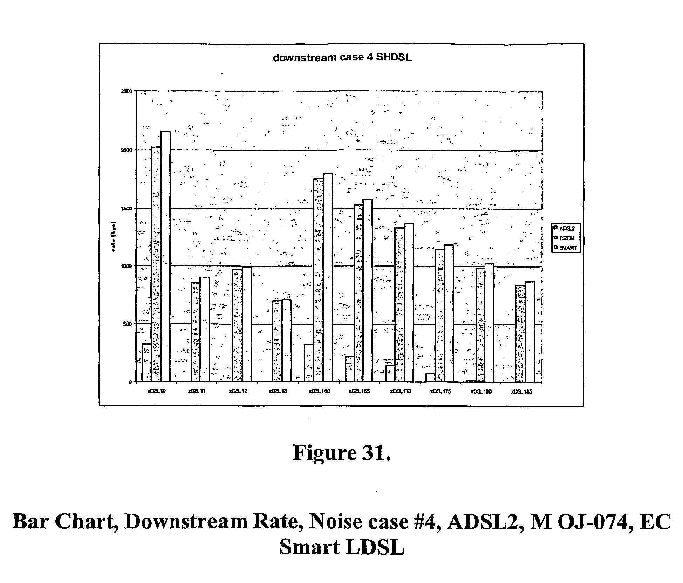

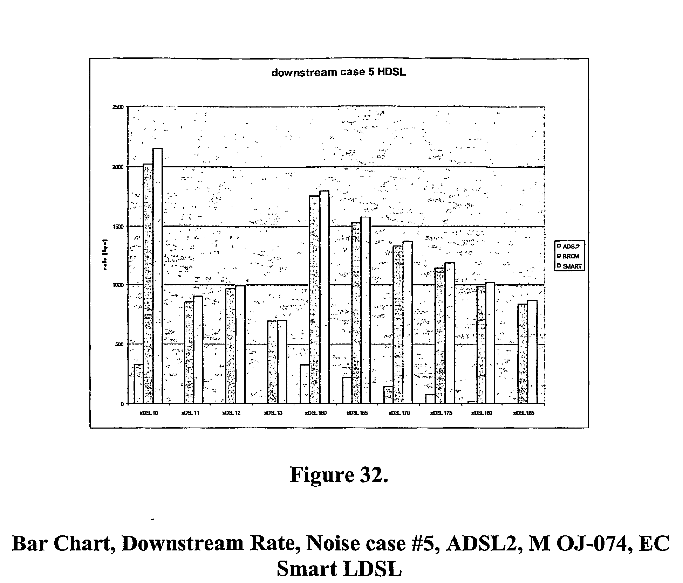

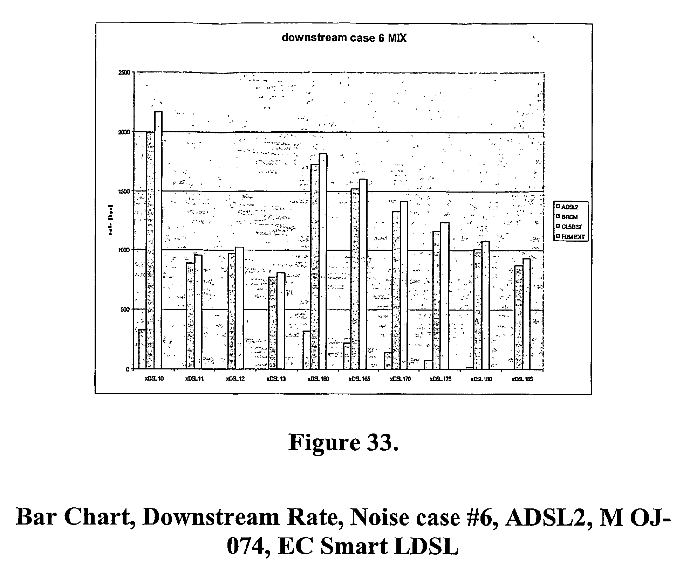

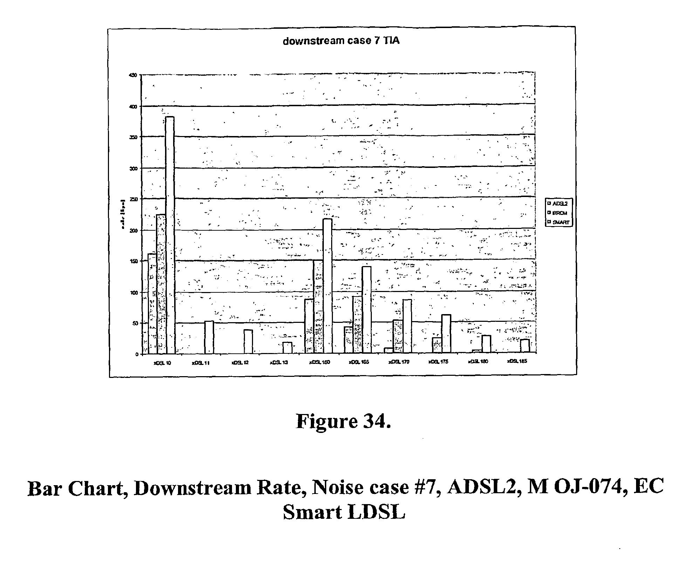

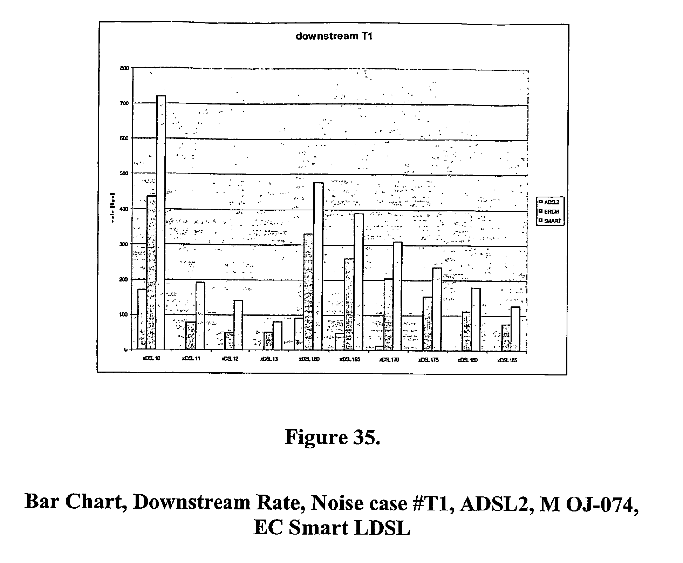

Figures 20-35 show bar chart performance plots of ADSL2, EC smart LDSL and the system disclosed in M OJ-074, for the above described noise cases. **Smart DSL Implementation based on ITU-T Recommendation G.992.3**

Two steps

Deciding to access one of the mask amongst all the possible choices offered by a smart DSL platform may be facilitated by using a two step process in the following order:

(1) Masks Choice based on Performance/Physical layer status criterion: Smart functionality; and (2) Protocol to activate one particular mask based on CP/CO capabilities.

**Step (1): Mask Choice based on Performance/Physical layer Status: Smart Functionality.**

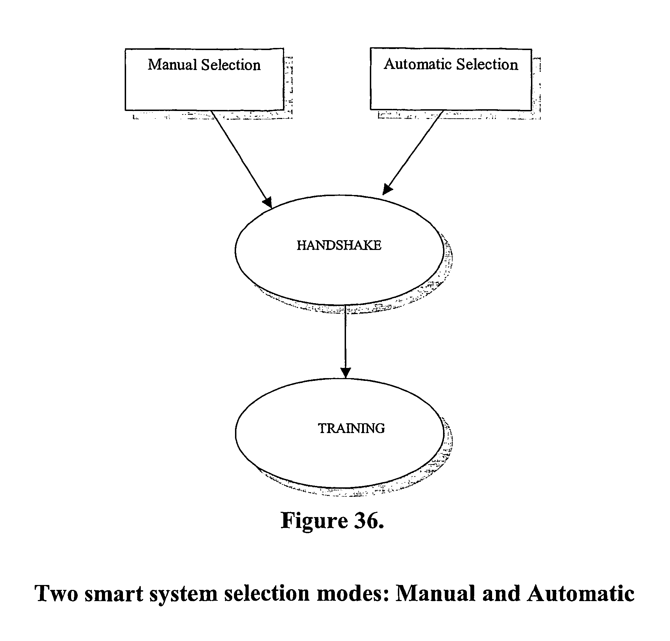

Figure 36 displays the org chart that describes the two selection modes inherent to smart DSL: manual or automatic.

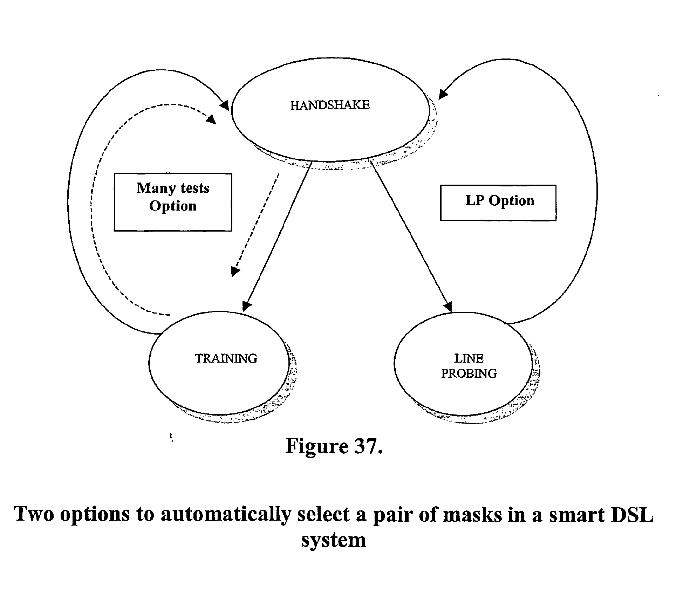

The automatic selection may be completed in two different ways: by making use of the Line Probing capabilities of G.992.3 (LP Option) or by trying different masks up to the training and choosing at the end the best (Many Tests Option). Figure 37 gives the state diagram of the two approaches to automatically select a pair of mask for a smart DSL platform.

The LP option needs to complete the right loop of operations in figure 37 one time only. The Many tests option requires to complete the left loop of operations in figure 37 as many times as the number of available possibilities.

**Step 2: Protocol to activate one mask based on CO / CP capabilities.**

This section discloses three protocol examples to activate one mask based on CO/CP capabilities.

**Option 1: CP decides**

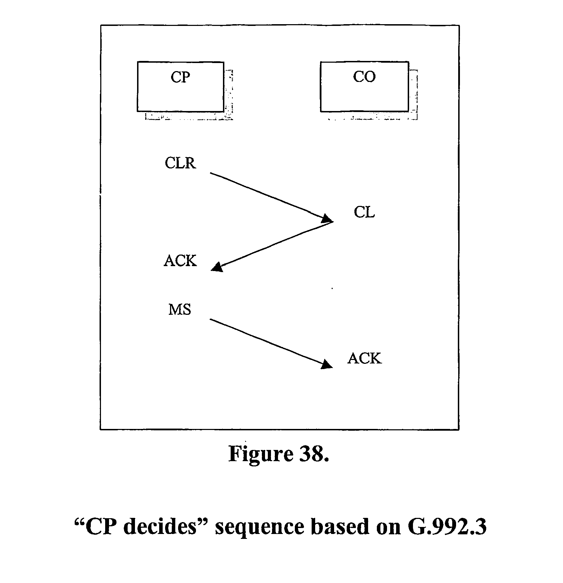

Figure 38 describes the "CP decides" which mask is to be used sequence, based on G.992.3. CLR and CL allow CP and CO to signify their list of capabilities.

**Option 2: CO decides**

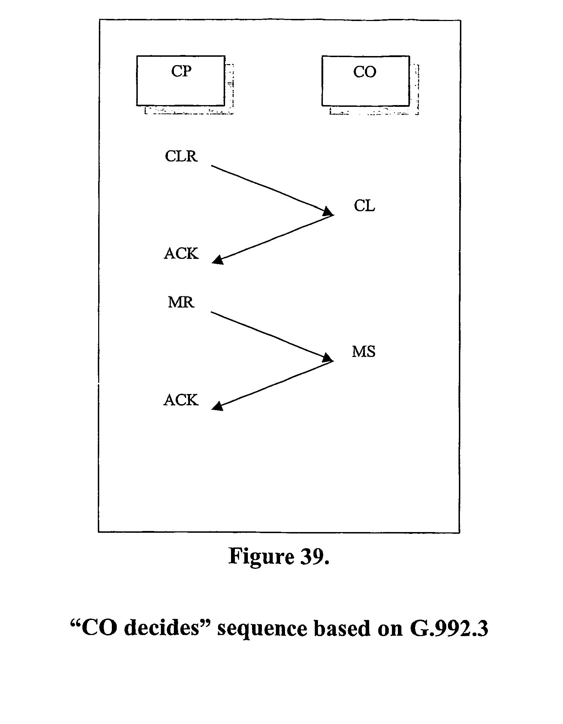

Figure 39 describes the "CO decides" which mask is to be used sequence, based on G.992.3, after being requested by the CP to do so. CLR and CL allow CP and CO to signify their list of capabilities.

**Option 3: CP is overruled by CO**

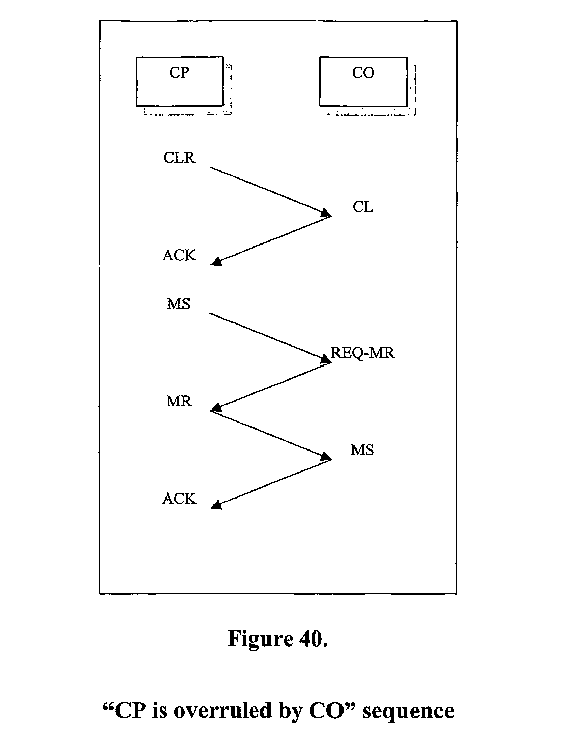

Figure 40 describes the "CO overrules CP" about which mask is to be used sequence, based on G.992.3, after CP has mentioned which mask is to be used CLR and CL allow CP and CO to signify their list of capabilities.

**LDSL Wide and Narrow Downstream Masks**

The following evaluates the spectral compatibility of two LDSL modes based on two different downstream masks identified herein as LDSL Wide and Narrow and a known same G.992.1 upstream mask. Spectral compatibility is evaluated according to the 2003 Soumusho updated rules. Other compatibility rules may also be used. Some LDSL Wide and Narrow modes of operation are spectrally compatible with protected systems in Japan, known as TCM-ISDN, Annex A G.992.1 and G.992.2, Annex C DBM G.992.1 and G.992.2, Annex C FBM G.992.1 and G.992.2.

As noted above, both LDSL modes of operation may make use of a single upstream mask preferably identical to the G.992.1 PSD (power spectral density) Upstream Mask. The LDSL Wide and Narrow modes may be based on two different downstream masks identified herein as the LDSL Downstream Wide Mask and LDSL Downstream Narrow Mask, respectively.

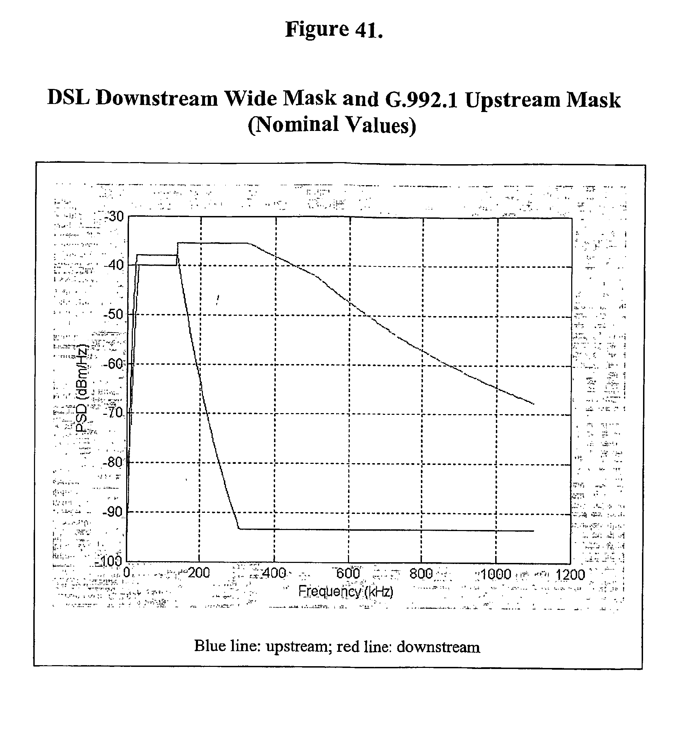

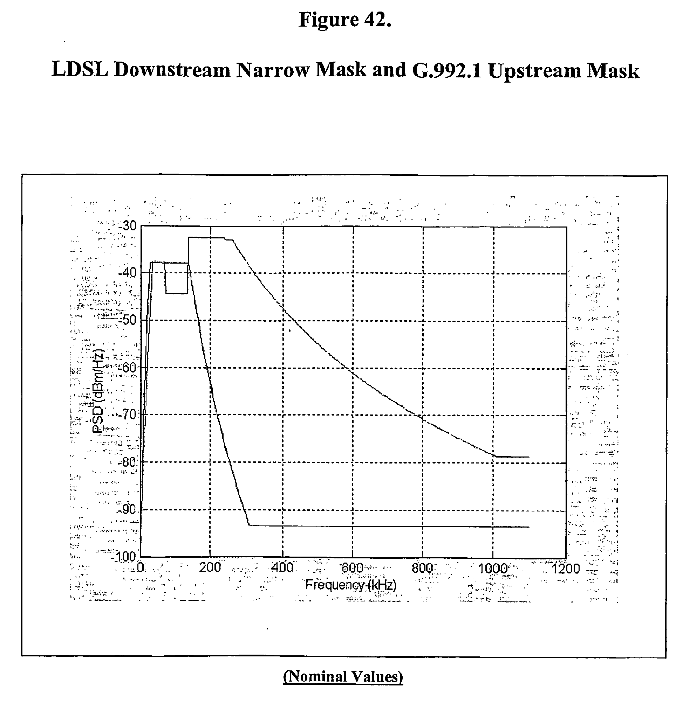

Note that the values provided in the following Figures 41 and 42 and in Tables 35-40 are approximate, or mean values, and may have a variance of up to 10%.

Figure 41 displays the LDSL Downstream Wide Mask and the G.992.1 Upstream Nominal Mask. Table 23 provides exemplary LDSL Downstream Wide Mask peak values. Note that the values provided in Table 23 are approximate, or mean values, and may have a variance of 10% or more.

Figure 42 displays the LDSL Downstream Narrow Mask and the G.992.1 Upstream Nominal Mask. Table 24 provides exemplary LDSL Downstream Narrow Mask peak values.

LDSL Wide Mode, as defined herein, combines the use of the G.992.1 Upstream Mask and the LDSL Wide Downstream Mask defined above. Table 25 provides the spectral compatibility impact of LDSL Wide Mode with upstream channels of protected systems. Table 25 further gives also the reference numbers. It may be derived from Table 25 that LDSL Wide Mode is always spectrally compatible with the upstream channels of protected systems.

Table 26 provides the spectral compatibility impact of the LDSL Wide Mode with downstream channels of protected systems. Table 26 also gives the reference numbers. It may be derived from Table 26 that LDSL Wide Mode is always spectrally compatible with the downstream channels of protected systems.

LDSL Narrow Mode, as defined herein, combines the G.992.1 Upstream Mask and the LDSL Narrow Mask described above. Table 27 provides the spectral compatibility impact of the LDSL Narrow Mode with upstream channels of protected systems. Table 27 also provides the reference numbers. It may be derived from Table 27 that the LDSL Narrow Mode is always spectrally compatible with the upstream channels of protected systems.

Table 28 provides the spectral compatibility impact of the LDSL Narrow Mode with downstream channels of protected systems. Table 28 also provides the reference numbers. It may be derived from Table 28 that the LDSL Narrow Mode is always spectrally compatible with the downstream channels of protected systems.

Based on the above, it may be shown that both LDSL Wide and Narrow modes of operation are spectrally compatible with protected systems in Japan.

**Table 23. LDSL Downstream Wide Mask Peak Values**

| Frequency f (KHz) | PSD (dBm/Hz) Peak values |
|---|---|
| $0 < f \leq 4$ | -97.5, with max power in the in 0-4 kHz band of +15 dBm |
| $4 < f \leq 5$ | -92.5+18.64log2($f$/4) |
| $5 < f \leq 5.25$ | -86.5 |
| $5.25 < f \leq 16$ | -86.5+15.25log2(f/5.25) |
| $16 < f \leq 32$ | -62+25.5log2($f$/16) |
| $32 < f \leq 138$ | -36.5 |
| $138 < f \leq 323.4375$ | -31.8 |
| $323.4375 < f \leq 517.5$ | -31.8- 0.0371$\times$ (f-323.4375) |
| $258.75 < f \leq 1800$ | max(-39 - 23.27 $\times$ $\log_2$ ($f$/517.5),-65) |
| $1800 < f \leq 2290$ | -65 - 72 $\times$ $\log_2$ ($f$/1800) |
| $2290 < f \leq 3093$ | -90 |
| $3093 < f \leq 4545$ | -90 peak, with max power in the [$f,f$+ 1 MHz] window of (-36.5 - 36 $\times$ $\log_2$ ($f$/1104) + 60) dBm |
| $4545 < f \leq 11\ 040$ | -90 peak, with max power in the [$f,f$+ 1 MHz] window of -50 dBm |

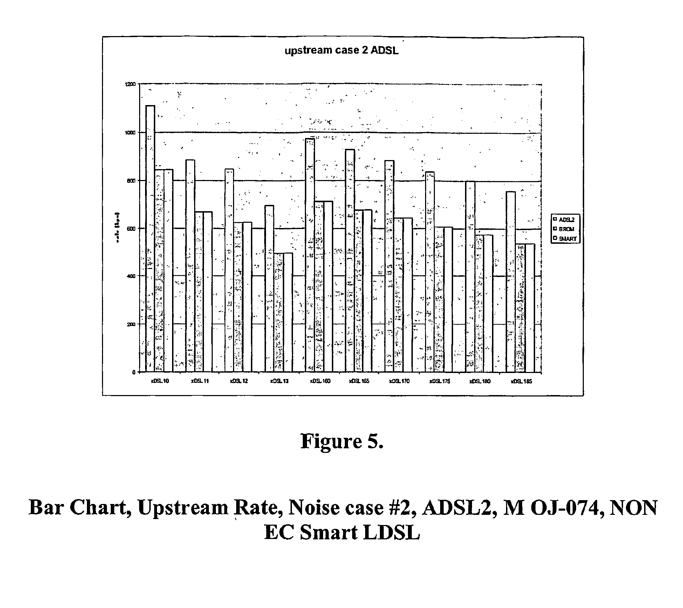

NOTE 1 - All PSD measurements are in 100 Ω; the POTS band total power measurement is in 600 Ω.
NOTE 2 - The breakpoint frequencies and PSD values are exact; the indicated slopes are approximate.
NOTE 3 - Above 25.875 kHz, the peak PSD shall be measured with a 10 kHz resolution bandwidth.
NOTE 4 - The power in a 1 MHz sliding window is measured in a 1 MHz bandwidth, starting at the measurement frequency.
NOTE 5 - The step in the PSD mask at 4 kHz is to protect V.90 performance. Originally, the PSD mask continued the 21 dB/octave slope below 4 kHz hitting a floor of -97.5 dBm/Hz at 3400 Hz. It was recognized that this might impact V.90 performance, and so the floor was extended to 4 kHz.
NOTE 6 - All PSD and power measurements shall be made at the U-C interface (see Figure 5-4 and Figure 5-5); the signals delivered to the PSTN are specified in Annex E.
NOTE 7 - frequencies are in kHz in the formulas.

**Table 24. LDSL Downstream Wide Mask Peak Values**

| Frequency f (KHz) | PSD (dBm/Hz) Peak values |
|---|---|
| $0 < f \leq 4$ | -97.5, with max power in the in 0-4 kHz, band of +15 dBm |
| $4 < f \leq 5$ | -92.5+18.64log2($f$/4) |
| $5 < f \leq 5.25$ | -86.5 |
| $5.25 < f \leq 16$ | -86.5+15.25log2(f/5.25) |
| $16 < f \leq 32$ | -62+25.5log2($f$/16) |
| $32 < f \leq 73.3125$ | -34 |
| $73.3125 < f \leq 138$ | -40.9 |
| $138 < f \leq 237.1875$ | -28.9 |
| $237.1875 < f \leq 258.75$ | -29.5 |
| $258.75 < f \leq 1800$ | max(-29.5 - 23.27 $\times$ $\log_2$ ($f$/258.75),-65) |
| $1800 < f \leq 2290$ | -65 - 72 $\times$ $\log_2$ ($f$/1800) |
| $2290 < f \leq 3093$ | -90 |
| $3093 < f \leq 4545$ | -90 peak, with max power in the [$f,f$+ 1 MHz] window of (-36.5 -36 $\times$ $\log_2$ ($f$/1104) + 60) dBm |

(continued)

| Frequency f (KHz) | PSD (dBm/Hz) Peak values |
|---|---|
| 4545 < $f \leq$ 11 040 | -90 peak, with max power in the [$f,f$ + 1 MHz] window of -50 dBm |

NOTE 1 - All PSD measurements are in 100 $\Omega$; the POTS band total power measurement is in 600 $\Omega$.
NOTE 2 - The breakpoint frequencies and PSD values are exact; the indicated slopes are approximate.
NOTE 3 - Above 25.875 kHz, the peak PSD shall be measured with a 10 kHz resolution bandwidth.
NOTE 4 - The power in a 1 MHz sliding window is measured in a 1 MHz bandwidth, starting at the measurement frequency.
NOTE 5 - The step in the PSD mask at 4 kHz is to protect V.90 performance. Originally, the PSD mask continued the 21 dB/octave slope below 4 kHz hitting a floor of -97.5 dBm/Hz at 3400 Hz. It was recognized that this might impact V.90 performance, and so the floor was extended to 4 kHz.
NOTE 6 - All PSD and power measurements shall be made at the U-C interface (see Figure 5-4 and Figure 5-5); the signals delivered to the PSTN are specified in Annex E.
NOTE 7 - frequencies are in kHz in the formulas.

**Table 25. LDSL Wide Mode Upstream Spectral Compatibility vs Reference numbers**

| km | TCM_ISDN | | A | | A_lite | | C_DBM | | C_DBM_lite | | C_FBM | | C_FBM_lite | |
|---|---|---|---|---|---|---|---|---|---|---|---|---|---|---|
| | ref | actual | ref | actual | ref | actual | ref | actual | ref | actual | ref | actual | ref | actual |
| 0.5 | 61 | 68 | 832 | 832 | 832 | 832 | 832 | 832 | 832 | 832 | 288 | 288 | 288 | 288 |
| 0.75 | 58 | 66 | 832 | 832 | 832 | 832 | 832 | 832 | 832 | 832 | 288 | 288 | 288 | 288 |
| 1.0 | 55 | 65 | 832 | 832 | 832 | 832 | 832 | 832 | 832 | 832 | 288 | 288 | 288 | 288 |
| 1.25 | 52 | 64 | 800 | 832 | 800 | 832 | 800 | 832 | 800 | 832 | 288 | 288 | 288 | 288 |
| 1.5 | 49 | 63 | 768 | 832 | 768 | 832 | 800 | 832 | 800 | 832 | 288 | 288 | 288 | 288 |
| 1.75 | 46 | 63 | 736 | 800 | 736 | 800 | 768 | 800 | 768 | 800 | 288 | 288 | 288 | 288 |
| 2.0 | 43 | 62 | 704 | 768 | 704 | 768 | 736 | 800 | 736 | 800 | 288 | 288 | 288 | 288 |
| 225 | 41 | 62 | 640 | 736 | 640 | 736 | 704 | 768 | 704 | 768 | 288 | 288 | 288 | 288 |
| 2.5 | 38 | 61 | 576 | 672 | 576 | 672 | 672 | 736 | 672 | 736 | 288 | 288 | 288 | 288 |
| 2.75 | 35 | 61 | 512 | 608 | 512 | 608 | 640 | 672 | 640 | 672 | 288 | 288 | 288 | 288 |
| 3.0 | 32 | 60 | 448 | 544 | 448 | 544 | 576 | 640 | 576 | 640 | 288 | 288 | 288 | 288 |
| 3.25 | 29 | 60 | 352 | 480 | 352 | 480 | 512 | 608 | 512 | 608 | 256 | 288 | 256 | 288 |
| 3.5 | 26 | 60 | 288 | 384 | 288 | 384 | 480 | 544 | 480 | 544 | 256 | 288 | 256 | 288 |
| 3.75 | 23 | 59 | 224 | 288 | 224 | 288 | 448 | 480 | 448 | 480 | 256 | 288 | 256 | 288 |
| 4.0 | 20 | 59 | 192 | 224 | 192 | 224 | 416 | 448 | 416 | 448 | 256 | 288 | 256 | 288 |
| 4.25 | 17 | 58 | 160 | 160 | 160 | 160 | 416 | 416 | 416 | 416 | 224 | 288 | 224 | 288 |
| 4.5 | 14 | 57 | 128 | 128 | 128 | 128 | 384 | 384 | 384 | 384 | 224 | 288 | 224 | 288 |
| 4.75 | 11 | 56 | 96 | 96 | 96 | 96 | 352 | 352 | 352 | 352 | 224 | 288 | 224 | 288 |
| 5.0 | 8 | 55 | 64 | 64 | 64 | 64 | 352 | 352 | 352 | 352 | 192 | 288 | 192 | 288 |

**Table 26. LDSL Wide Mode Downstream Spectral Compatibility vs Reference numbers**

| | TCM_ISDN | | A | | A_lite | | C_DBM | | C_DBM_lite | | C_FBM | | C_FBM_lite | |
|---|---|---|---|---|---|---|---|---|---|---|---|---|---|---|
| km | ref | actual | ref | actual | ref | actual | ref | km | ref | actual | ref | actual | ref | actual |
| 0.5 | 60 | 65 | 7104 | 7104 | 3008 | 3008 | 7104 | 7104 | 3008 | 3008 | 2624 | 2624 | 1088 | 1088 |
| 0.75 | 57 | 63 | 6784 | 7104 | 2784 | 3008 | 6912 | 7104 | 2848. | 3008 | 2624 | 2624 | 1088 | 1088 |
| 1.0 | 55 | 62 | 5952 | 7104 | 2400 | 3008 | 6368 | 7104 | 2624 | 3008 | 2624 | 2624 | 1088 | 1088 |
| 1.25 | 52 | 61 | 4896 | 7104 | 2016 | 3008 | 5696 | 7104 | 2368 | 3008 | 2624 | 2624 | 1088 | 1088 |
| 1.5 | 50 | 60 | 3840 | 7072 | 1632 | 2976 | 5024 | 7072 | 2144 | 2976 | 2624 | 2624 | 1088 | 1088 |
| 1.75 | 47 | 59 | 2496 | 7072 | 1184 | 2976 | 4192 | 7072 | 1856 | 2976 | 2624 | 2624 | 1088 | 1088 |
| 2.0 | 45 | 59 | 1696 | 7040 | 736 | 2944 | 3680 | 7072 | 1568 | 2976 | 2528 | 2624 | 1088 | 1088 |
| 2.25 | 43 | 58 | 1088 | 6784 | 448 | 2944 | 3296 | 6880 | 1376 | 2944 | 2464 | 2624 | 1088 | 1088 |
| 2.5 | 40 | 58 | 704 | 6176 | 224 | 2880 | 3008 | 6464 | 1248 | 2912 | 2368 | 2560 | 1088 | 1088 |
| 2.75 | 38 | 57 | 480 | 5344 | 128 | 2784 | 2720 | 5792 | 1184 | 2880 | 2240 | 2400 | 1088 | 1088 |
| 3.0 | 35 | 57 | 320 | 4384 | 96 | 2688 | 2368 | 4928 | 1152 | 2816 | 1984 | 2112 | 1056 | 1056 |
| 3.25 | 32 | 57 | 224 | 3520 | 64 | 2528 | 1984 | 4096 | 1152 | 2720 | 1696 | 1760 | 1024 | 1024 |
| 3.5 | 30 | 56 | 128 | 2848 | 32 | 2304 | 1632 | 3328 | 1120 | 2560 | 1408 | 1440 | 992 | 992 |
| 3.75 | 27 | 56 | 64 | 2304 | 0 | 2048 | 1344 | 2720 | 1056 | 2336 | 1152 | 1216 | 928 | 960 |
| 4.0 | 25 | 56 | 32 | 1792 | 0 | 1728 | 1088 | 2208 | 960 | 2048 | 928 | 992 | 832 | 896 |
| 4.25 | 22 | 55 | 0 | 1376 | 0 | 1376 | 928 | 1728 | 896 | 1696 | 768 | 832 | 736 | 800 |
| 4.5 | 20 | 55 | 0 | 992 | 0 | 992 | 768 | 1344 | 768 | 1344 | 576 | 704 | 576 | 704 |
| 4.75 | 17 | 54 | 0 | 672 | 0 | 672 | 608 | 1024 | 608 | 1024 | 448 | 576 | 448 | 576 |
| 5.0 | 15 | 53 | 0 | 416 | 0 | 416 | 512 | 768 | 512 | 768 | 320 | 480 | 320 | 480 |

**Table 27. LDSL Narrow Mode Upstream Spectral Compatibility vs Reference numbers**

| km | TCM_ISDN | | A | | A_lite | | C_DBM | | C_DBM_lite | | C_FBM | | C_FBM_lite | |
|---|---|---|---|---|---|---|---|---|---|---|---|---|---|---|
| | ref | actual | ref | actual | ref | actual | ref | actual | ref | actual | ref | actual | ref | actual |
| 0.5 | 61 | 68 | 832 | 832 | 832 | 832 | 832 | 832 | 832 | 832 | 288 | 288 | 288 | 288 |
| 0.75 | 58 | 66 | 832 | 832 | 832 | 832 | 832 | 832 | 832 | 832 | 288 | 288 | 288 | 288 |
| 1.0 | 55 | 65 | 832 | 832 | 832 | 832 | 832 | 832 | 832 | 832 | 288 | 288 | 288 | 288 |
| 1.25 | 52 | 64 | 800 | 832 | 800 | 832 | 800 | 832 | 800 | 832 | 288 | 288 | 288 | 288 |
| 1.5 | 49 | 63 | 768 | 832 | 768 | 832 | 800 | 832 | 800 | 832 | 288 | 288 | 288 | 288 |
| 1.758 | 46 | 63 | 736 | 832 | 736 | 832 | 768 | 832 | 768 | 832 | 288 | 288 | 288 | 288 |
| 2.0 | 43 | 62 | 704 | 832 | 704 | 832 | 736 | 832 | 736 | 832 | 288 | 288 | 288 | 288 |
| 2.25 | 41 | 62 | 640 | 800 | 640 | 800 | 704 | 800 | 704 | 800 | 288 | 288 | 288 | 288 |
| 2.5 | 38 | 61 | 576 | 736 | 576 | 736 | 672 | 768 | 672 | 768 | 288 | 288 | 288 | 288 |
| 2.75 | 35 | 61 | 512 | 672 | 512 | 672 | 640 | 736 | 640 | 736 | 288 | 288 | 288 | 288 |
| 3.0 | 32 | 60 | 448 | 608 | 448 | 608 | 576 | 672 | 576 | 672 | 288 | 288 | 288 | 288 |
| 3.25 | 29 | 60 | 352 | 512 | 352 | 512 | 512 | 640 | 512 | 640 | 256 | 288 | 256 | 288 |
| 3.5 | 56 | 60 | 288 | 448 | 288 | 448 | 480 | 576 | 480 | 576 | 156 | 288 | 256 | 288 |
| 3.75 | 23 | 59 | 224 | 384 | 224 | 384 | 448 | 544 | 448 | 544 | 256 | 288 | 256 | 288 |
| 4.0 | 20 | 59 | 192 | 288 | 192 | 288 | 416 | 480 | 416 | 480 | 256 | 288 | 256 | 288 |
| 4.25 | 17 | 58 | 160 | 192 | 160 | 192 | 416 | 416 | 416 | 416 | 224 | 288 | 224 | 288 |
| 4.5 | 14 | 57 | 128 | 128 | 128 | 128 | 384 | 384 | 384 | 384 | 224 | 288 | 224 | 288 |
| 4.75 | 11 | 56 | 96 | 96 | 96 | 96 | 352 | 352 | 352 | 352 | 224 | 288 | 224 | 288 |
| 5.0 | 8 | 55 | 64 | 64 | 64 | 64 | 352 | 320 | 352 | 320 | 192 | 288 | 192 | 288 |

**Table 28. LDSL Narrow Mode Downstream Spectral Compatibility vs Reference numbers**

| km | TCMJSDN | | A | | A_lite | | C_DBM | | C_DBM_lite | | C_FBM | | c_FBM_lite | |
|---|---|---|---|---|---|---|---|---|---|---|---|---|---|---|
| | ref | actual | ref | actual | ref | actual | ref | km | ref | actual | ref | actual | ref | actual |
| 0.5 | 60 | 63 | 7104 | 7104 | 3008 | 3008 | 7104 | 7104 | 3008 | 3008 | 2624 | 2624 | 1088 | 1088 |
| 0.75 | 57 | 61 | 6784 | 7104 | 2784 | 3008 | 6912 | 7104 | 2848 | 3008 | 2624 | 2624 | 1088 | 1088 |
| 1.0 | 55 | 60 | 5952 | 7104 | 2400 | 3008 | 6368 | 7104 | 2624 | 3008 | 2624 | 2624 | 1088 | 1088 |
| 1.25 | 52 | 59 | 4896 | 7104 | 2016 | 3008 | 5696 | 7104 | 2368 | 3008 | 2624 | 2624 | 1088 | 1088 |
| 1.5 | 50 | 58 | 3840 | 7072 | 1632 | 2976 | 5024 | 7072 | 2144 | 2976 | 2624 | 2624 | 1088 | 1088 |
| 1.758 | 47 | 57 | 2496 | 7072 | 1184 | 2976 | 4192 | 7072 | 1856 | 2976 | 2624 | 2624 | 1088 | 1088 |
| 2.0 | 45 | 57 | 1696 | 7040 | 736 | 2944 | 3680 | 7072 | 1568 | 2976 | 2528 | 2624 | 1088 | 1088 |
| 2.25 | 43 | 56 | 1088 | 6784 | 448 | 2912 | 3296 | 6880 | 1376 | 2944 | 2464 | 2624 | 1088 | 1088 |
| 2.5 | 40 | 56 | 704 | 6176 | 224 | 2880 | 3008 | 6464 | 1248 | 2912 | 2368 | 2560 | 1088 | 1088 |
| 2.75 | 38 | 55 | 480 | 5376 | 128 | 2784 | 2720 | 5824 | 1184 | 2880 | 2240 | 2400 | 1088 | 1088 |
| 3.0 | 35 | 55 | 320 | 4416 | 96 | 2752 | 2368 | 4960 | 1152 | 2848 | 1984 | 2144 | 1056 | 1088 |
| 3.25 | 32 | 55 | 224 | 3616 | 64 | 2624 | 1984 | 4128 | 1152 | 2784 | 1696 | 1824 | 1024 | 1088 |
| 3.5 | 30 | 54 | 128 | 2944 | 32 | 2432 | 1632 | 3392 | 1120 | 2624 | 1408 | 1504 | 992 | 1056 |
| 3.75 | 27 | 54 | 64 | 2368 | 0 | 2144 | 1344 | 2784 | 1056 | 2400 | 1152 | 1248 | 928 | 1024 |
| 4.0 | 25 | 54 | 32 | 1856 | 0 | 1824 | 1088 | 2240 | 960 | 2080 | 928 | 1056 | 832 | 928 |
| 4.25 | 22 | 53 | 0 | 1408 | 0 | 1408 | 928 | 1760 | 896 | 1728 | 768 | 864 | 736 | 832 |
| 4.5 | 20 | 53 | 0 | 992 | 0 | 992 | 768 | 1344 | 768 | 1344 | 576 | 704 | 576 | 704 |
| 4.75 | 17 | 52 | 0 | 672 | 0 | 672 | 608 | 992 | 608 | 992 | 448 | 576 | 448 | 576 |
| 5.0 | 15 | 52 | 0 | 416 | 0 | 416 | 512 | 736 | 512 | 736 | 320 | 480 | 320 | 480 |

**FDM Quad Spectrum Mode.**

Described in the following is a FDM Quad Spectrum mode for high speed ADSL and an evaluation of its spectral compatibility according to the 2003 revised TTC-Soumusho spectral compatibility rules. The FDM Quad Spectrum mode, in one embodiment, combines an extended downstream bandwidth PSD (from approximately 138 KHz up to approximately 3.75 MHz) with the G.992.5 upstream PSD (with steep side lobes of approximately -95 dB per octave slope). The FDM Quad Spectrum downstream channel total power preferably is equal to approximately 20 dBm.

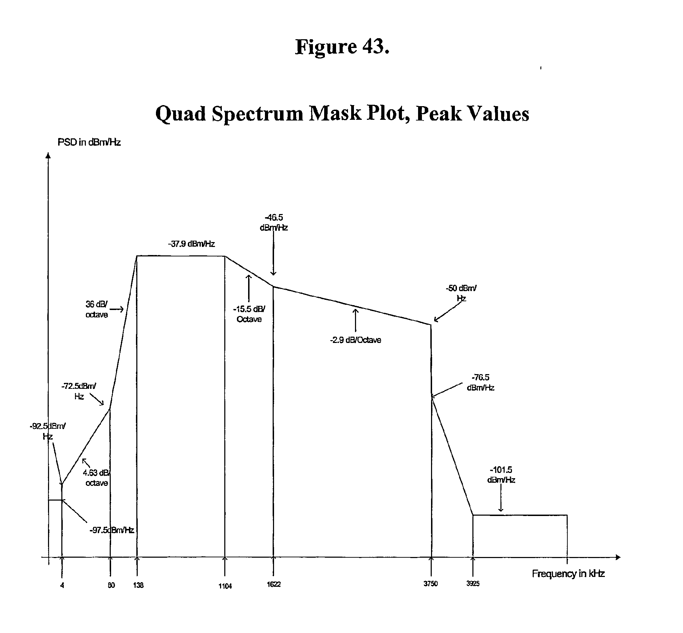

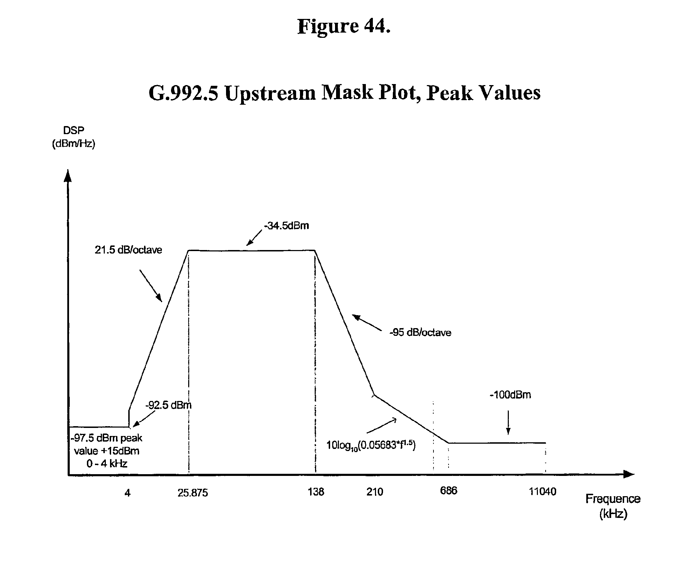

Note that the values provided in the following Figures 43 and 44 and in Tables 41-45 are approximate, or mean values, and may have a variance of up to 10%.

Figure 43 and Table 29 provide an exemplary embodiment of the FDM Quad Spectrum Mask features based on peak values.

Figure 44 and Table 30 provide the G.992.5 Upstream Mask features based on peak values.

Table 31 provides the spectral compatibility reference performance of protected systems, according to the Revised 2003 Soumusho-TTC rules.

Table 32 provides the performance of protected systems in the presence of five FDM Quad Spectrum system disturbers.

Table 33 gives the delta between the reference performance (Table 31) and the performance in the presence of five FDM quad spectrum systems (Table 32). To be spectrally compatible, these numbers may be negative in the presence of a new system. The performance of the protected systems may be greater or equal to the reference performance.

The FDM Quad Spectrum mode is spectrally compatible with protected systems in Japan identified as TCM-ISDN, Annex A G.992.1 and G.992.2, Annex C DBM G.992.1 and G.992.2, Annex C FBM G.992.1 and G.992.2.

**Table 29 Quad Spectrum Mask definition, Peak Values**

| Frequency (kHz) | PSD (dBm/Hz) Peak values |
|---|---|
| 0<f<4 | -97.5 |
| 4<f<80 | "-92.5 + 4.63.log2.(f/4)" |
| 80<f<138 | "-72.5 + 36.log2.(f/80)" |
| 138<f<1104 | -37.9 |
| 1104<f<1622 | "-37.9 - 15.5.log2.(f/1104)" |
| 1622<f<3750 | "-46.5 - 2.9.log2.(f/1622)" |
| 3750 | -76.5 |
| f=3925 & f>3925 | -101.5 |

**Table 30. G.992.5 Upstream Mask Definition, Peak Values**

| Frequency (kHz) | PSD (dBm/Hz) Peak values |
|---|---|
| 0<f<4 | -97.5 |
| 4<f<25.875 | "-92.5 + 21.5.log2.(f/4)" |
| 25.875<f<138 | -34.5 |
| 138<f<f_int | "-34.5 - 95.log2.(f/138)" |
| f_int<f<686 | 10log10(0.05683'f^(1.5)) |
| f>686 | -100 |

## Table 31. Spectral Compatibility Reference Performance, Protected Systems

| Dist | TCM-ISDN | | G.992.1 Annex A (FDM) | | G.992.2 Annex A | | G.992.1 Annex C DBM | | FBM | | G.992.2 Annex C DBM | | FBM | |
|---|---|---|---|---|---|---|---|---|---|---|---|---|---|---|
| | DS | US | DS | US | DS | US | DS | US | DS | US | DS | US | DS | US |
| 0.5 | 144 | 144 | 7104 | 832 | 3008 | 832 | 7104 | 832 | 2624 | 288 | 3008 | 832 | 1088 | 288 |
| 0.75 | 144 | 144 | 6784 | 832 | 2944 | 832 | 6912 | 832 | 2592 | 288 | 2944 | 832 | 1088 | 288 |
| 1 | 144 | 144 | 5952 | 832 | 2624 | 832 | 6368 | 832 | 2528 | 288 | 2752 | 832 | 1088 | 288 |
| 1.25 | 144 | 144 | 4896 | 800 | 2272 | 800 | 5696 | 800 | 2496 | 288 | 2528 | 800 | 1088 | 288 |
| 1.5 | 144 | 144 | 3840 | 768 | 1824 | 768 | 5024 | 800 | 2432 | 288 | 2272 | 800 | 1088 | 288 |
| 1.75 | 144 | 144 | 2496 | 736 | 1440 | 736 | 4192 | 768 | 2400 | 288 | 2016 | 768 | 1088 | 288 |
| 2 | 144 | 144 | 1696 | 704 | 960 | 704 | 3680 | 736 | 2336 | 288 | 1696 | 736 | 1088 | 288 |
| 2.25 | 144 | 144 | 1068 | 640 | 640 | 640 | 3296 | 704 | 2240 | 288 | 1504 | 704 | 1088 | 288 |
| 2.5 | 144 | 144 | 704 | 576 | 352 | 576 | 3008 | 672 | 2080 | 288 | 1312 | 672 | 1056 | 288 |
| 2.75 | 144 | 144 | 480 | 512 | 160 | 512 | 2720 | 640 | 1856 | 288 | 1216 | 640 | 1056 | 288 |
| 3 | 144 | 144 | 320 | 448 | 96 | 448 | 2368 | 576 | 1536 | 288 | 1184 | 576 | 1024 | 288 |
| 3.25 | 144 | 144 | 224 | 352 | 64 | 352 | 1984 | 512 | 1280 | 288 | 1152 | 512 | 992 | 288 |
| 3.5 | 144 | 0 | 128 | 288 | 32 | 288 | 1632 | 480 | 1056 | 288 | 1120 | 480 | 928 | 288 |
| 3.75 | 0 | 0 | 64 | 224 | 32 | 224 | 1344 | 448 | 832 | 256 | 1088 | 448 | 832 | 256 |
| 4 | 0 | 0 | 32 | 192 | 0 | 192 | 1088 | 416 | 640 | 256 | 1024 | 416 | 704 | 256 |
| 4.25 | 0 | 0 | 0 | 160 | 0 | 160 | 928 | 416 | 480 | 256 | 928 | 416 | 576 | 256 |
| 4.5 | 0 | 0 | 0 | 128 | 0 | 128 | 768 | 384 | 352 | 224 | 832 | 384 | 416 | 224 |
| 4.75 | 0 | 0 | 0 | 96 | 0 | 96 | 608 | 352 | 224 | 224 | 704 | 352 | 288 | 224 |
| 5 | 0 | 0 | 0 | 64 | 0 | 64 | 416 | 352 | 128 | 224 | 544 | 352 | 192 | 224 |

## Table 32. Protected Systems performance with 5 FDM Quad Spectrum Systems (1 Intra-Quad, 4 Inter-Quad)

| Dist | TCM-ISDN | | G.992.1 Annex A (FDM) | | G.992.2 Annex A | | G.992.1 Annex C DBM | | FBM | | G.992.2 Annex C DBM | | FBM | |
|---|---|---|---|---|---|---|---|---|---|---|---|---|---|---|
| | DS | US | DS | US | DS | US | DS | US | DS | US | DS | US | DS | US |
| 0.5 | 144 | 144 | 7104 | 832 | 3008 | 832 | 7104 | 832 | 2624 | 288 | 3008 | 832 | 1088 | 288 |
| 0.75 | 144 | 144 | 7104 | 832 | 3008 | 832 | 7104 | 832 | 2624 | 288 | 3008 | 832 | 1088 | 288 |
| 1 | 144 | 144 | 7008 | 832 | 3008 | 832 | 7008 | 832 | 2592 | 288 | 3008 | 832 | 1088 | 288 |
| 1.25 | 144 | 144 | 6912 | 832 | 3008 | 832 | 6912 | 832 | 2560 | 288 | 3008 | 832 | 1088 | 288 |
| 1.5 | 144 | 144 | 6848 | 832 | 3008 | 832 | 6848 | 832 | 2528 | 288 | 3008 | 832 | 1088 | 288 |
| 1.75 | 144 | 144 | 6752 | 832 | 2976 | 832 | 6752 | 832 | 2496 | 288 | 2976 | 832 | 1088 | 288 |
| 2 | 144 | 144 | 6624 | 832 | 2976 | 832 | 6624 | 832 | 2432 | 288 | 2976 | 832 | 1088 | 288 |
| 2.25 | 144 | 144 | 6496 | 832 | 2976 | 832 | 6496 | 832 | 2400 | 288 | 2976 | 832 | 1088 | 288 |
| 2.5 | 144 | 144 | 6240 | 832 | 2976 | 832 | 6240 | 832 | 2304 | 288 | 2976 | 832 | 1088 | 288 |
| 2.75 | 144 | 144 | 5856 | 800 | 2944 | 800 | 5856 | 800 | 2144 | 288 | 2944 | 800 | 1088 | 288 |
| 3 | 144 | 144 | 5248 | 800 | 2944 | 800 | 5248 | 800 | 1920 | 288 | 2944 | 800 | 1088 | 288 |
| 3.25 | 144 | 144 | 4416 | 800 | 2912 | 800 | 4416 | 800 | 1632 | 288 | 2912 | 800 | 1056 | 288 |
| 3.5 | 144 | 144 | 3712 | 768 | 2816 | 768 | 3712 | 768 | 1376 | 288 | 2816 | 768 | 1024 | 288 |
| 3.75 | 0 | 0 | 3104 | 736 | 2688 | 736 | 3104 | 736 | 1120 | 256 | 2688 | 736 | 992 | 256 |
| 4 | 0 | 0 | 2560 | 736 | 2464 | 736 | 2560 | 736 | 928 | 256 | 2464 | 736 | 896 | 256 |
| 4.25 | 0 | 0 | 2080 | 704 | 2240 | 704 | 2080 | 704 | 768 | 256 | 2240 | 704 | 800 | 256 |
| 4.5 | 0 | 0 | 1696 | 672 | 1920 | 672 | 1696 | 672 | 608 | 224 | 1920 | 672 | 704 | 224 |
| 4.75 | 0 | 0 | 1344 | 640 | 1536 | 640 | 1344 | 640 | 480 | 224 | 1536 | 640 | 544 | 224 |
| 5 | 0 | 0 | 1024 | 608 | 1184 | 608 | 1024 | 608 | 352 | 224 | 1184 | 608 | 448 | 224 |

## Table 33. Reference Performance minus Performance with 5 FDM Quad Spectrum

| Dist | TCM-ISDN | | G.992.1 Annex A (FDM) | | G.992.2 Annex A | | G.992.1 Annex C DBM | | G.992.1 Annex C FBM | | G.992.2 Annex C DBM | | G.992.2 Annex C FBM | |
|---|---|---|---|---|---|---|---|---|---|---|---|---|---|---|
| | DS | US | DS | US | DS | US | DS | US | DS | US | DS | US | DS | US |
| 0.5 | 0 | 0 | 0 | 0 | 0 | 0 | 0 | 0 | 0 | 0 | 0 | 0 | 0 | 0 |
| 0.75 | 0 | 0 | -320 | 0 | -64 | 0 | -192 | 0 | -32 | 0 | -64 | 0 | 0 | 0 |
| 1 | 0 | 0 | -1056 | 0 | -384 | 0 | -640 | 0 | -64 | 0 | -256 | 0 | 0 | 0 |
| 1.25 | 0 | 0 | -2016 | -32 | -736 | -32 | -1216 | -32 | -64 | 0 | -480 | -32 | 0 | 0 |
| 1.5 | 0 | 0 | -3008 | -64 | -1184 | -64 | -1824 | -32 | -96 | 0 | -736 | -32 | 0 | 0 |
| 1.75 | 0 | 0 | -4256 | -96 | -1536 | -96 | -2560 | -64 | -96 | 0 | -960 | -64 | 0 | 0 |
| 2 | 0 | 0 | -4928 | -128 | -2016 | -128 | -2944 | -96 | -96 | 0 | -1280 | -96 | 0 | 0 |
| 2.25 | 0 | 0 | -5408 | -192 | -2336 | -192 | -3200 | -128 | -160 | 0 | -1472 | -128 | 0 | 0 |
| 2.5 | 0 | 0 | -5536 | -256 | -2624 | -256 | -3232 | -160 | -224 | 0 | -1664 | -160 | -32 | 0 |
| 2.75 | 0 | 0 | -5376 | -288 | -2784 | -288 | -3136 | -160 | -288 | 0 | -1728 | -160 | -32 | 0 |
| 3 | 0 | 0 | -4928 | -352 | -2848 | -352 | -2880 | -224 | -384 | 0 | -1760 | -224 | -64 | 0 |
| 3.25 | 0 | 0 | -4192 | -448 | -2848 | -448 | -2432 | -288 | -352 | 0 | -1760 | -288 | -64 | 0 |
| 3.5 | 0 | -144 | -3584 | -480 | -2784 | -480 | -2080 | -288 | -320 | 0 | -1696 | -288 | -96 | 0 |
| 3.75 | 0 | 0 | -3040 | -512 | -2656 | -512 | -1760 | -288 | -288 | 0 | -1600 | -288 | -160 | 0 |
| 4 | 0 | 0 | -2528 | -544 | -2464 | -544 | -1472 | -320 | -288 | 0 | -1440 | -320 | -192 | 0 |
| 4.25 | 0 | 0 | -2080 | -544 | -2240 | -544 | -1152 | -288 | -288 | 0 | -1312 | -288 | -224 | 0 |
| 4.5 | 0 | 0 | -1696 | -544 | -1920 | -544 | -928 | -288 | -256 | 0 | -1088 | -288 | -288 | 0 |
| 4.75 | 0 | 0 | -1344 | -544 | -1536 | -544 | -736 | -288 | -256 | 0 | -832 | -288 | -256 | 0 |
| 5 | 0 | 0 | -1024 | -544 | -1184 | -544 | -608 | -256 | -224 | 0 | -640 | -256 | -256 | 0 |

**Extended Upstream OL Overlap Mode**

Described in the following is the spectral compatibility of a high speed system that combines an extended upstream channel up to approximately 276 KHz and an Overlap OL Quad Spectrum downstream channel that starts at approximately 25.875 KHz. Based on the results described below and according to the 2003 refined Soumusho Spectral compatibility rules, in some embodiments it is preferable to deploy the Extended Upstream Overlap System in the same quad as protected systems up to approximately 3.25 km.

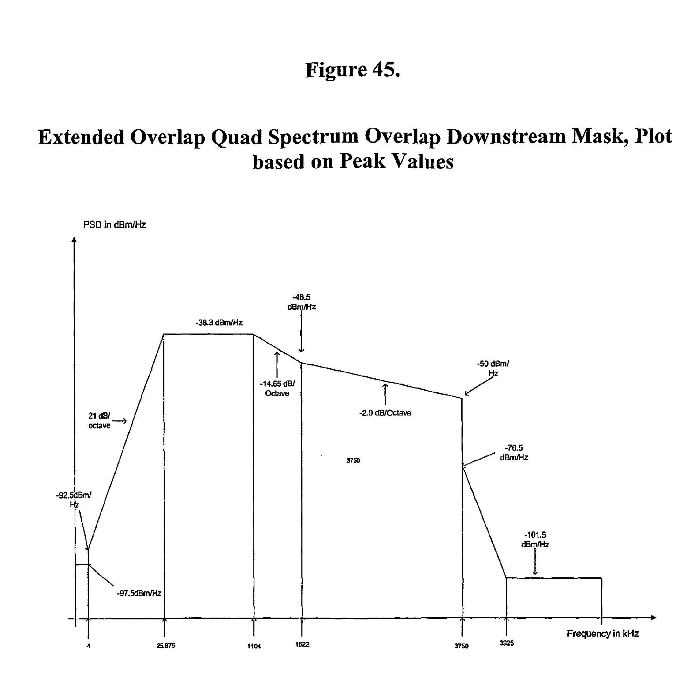

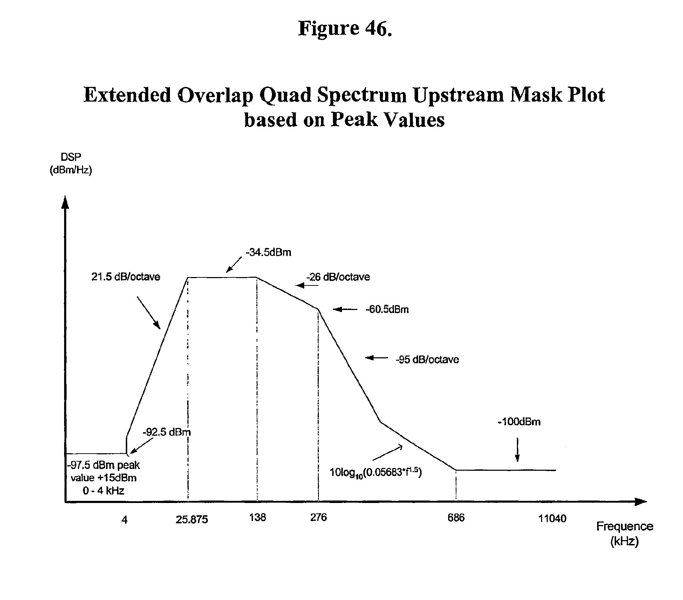

Note that the values provided in the following Figures 45 and 46 and in Tables 46-50 are approximate, or mean values, and may have a variance of up to 10%.

Figure 45 and Table 34 provided exemplary features of the Extended Overlap Quad Spectrum Downstream Mask.

Figure 46 and Table 35 provide exemplary features of the Extended Overlap Quad Spectrum Upstream Mask.

Table 36 provides the spectral compatibility reference performance of protected systems, according to the Revised 2003 Soumusho-TTC rules.

Table 37 provides the performance of protected systems in the presence of five Extended Overlap upstream systems as disturbers (1 Infra-Quad plus 4 Inter-Quad).

Table 38 describes the difference between reference performance of protected systems and their performance in the presence of five Extended Overlap upstream systems as overlap systems disturbers. According to Table 38, the Extended Upstream system has little or no impact with Annex C DBM and TCM-ISDN systems up to approximately 3.25 km.

### Table 34. Extended Overlap Quad Spectrum Downstream Mask Peak Values

| Frequency (kHz) | PSD (dBm/Hz) Peak values |
|---|---|
| 0<f<4 | -97.5 |
| 4<f<25.875 | "-92.5 + 21.log2.(f/4)" |
| 25.875<f<1104 | -38.3 |
| 1104<f<1622 | "-38.3 - 14.75.Log2.(f/1104)" |
| 1622<f<3750 | "-46.5 - 2.9.Log2.(f/1622)" |
| f=3750 | -76.5 |
| f>3925 | -101.5 |

**Table 35. Extended Overlap Quad Spectrum Upstream Mask, Peak values**

| Frequency (kHz) | PSD (dBm/Hz) Peak values |
|---|---|
| 0<f<4 | -97.5 |
| 4<f<25.875 | "-92.5 + 21.5.log2.(f/4)" |
| 25.875<f<138 | -34.5 |
| 138<f<278 | "-34.5 - 26.log2.(f/138)" |
| 276<f<f_int | "-60.5 - 95.log2.(f/276)" |
| f_int<f<686 | 10log10(0.05683"f"^(1.5)) |

## Table 36. Protected Systems Reference table

| Dist | TCM-ISDN | | G.992.1 Annex A (FDM) | | G.992.2 Annex A | | G.992.1 Annex C | | | | G.992.2 Annex C | | | |
|---|---|---|---|---|---|---|---|---|---|---|---|---|---|---|
| | | | | | | | DBM | | FBM | | DBM | | FBM | |
| | DS | US | DS | US | DS | US | DS | US | DS | US | DS | US | DS | US |
| 0.5 | 144 | 144 | 7104 | 832 | 3008 | 832 | 7104 | 832 | 2624 | 288 | 3008 | 832 | 1088 | 288 |
| 0.75 | 144 | 144 | 6784 | 832 | 2944 | 832 | 6912 | 832 | 2592 | 288 | 2944 | 832 | 1088 | 288 |
| 1 | 144 | 144 | 5952 | 832 | 2624 | 832 | 6368 | 832 | 2528 | 288 | 2752 | 832 | 1088 | 288 |
| 1.25 | 144 | 144 | 4896 | 800 | 2272 | 800 | 5696 | 800 | 2496 | 288 | 2528 | 800 | 1088 | 288 |
| 1.5 | 144 | 144 | 3840 | 768 | 1824 | 768 | 5024 | 800 | 2432 | 288 | 2272 | 800 | 1088 | 288 |
| 1.75 | 144 | 144 | 2496 | 736 | 1440 | 736 | 4192 | 768 | 2400 | 288 | 2016 | 768 | 1088 | 288 |
| 2 | 144 | 144 | 1696 | 704 | 960 | 704 | 3680 | 736 | 2336 | 288 | 1696 | 736 | 1088 | 288 |
| 2.25 | 144 | 144 | 1088 | 640 | 640 | 640 | 3296 | 704 | 2240 | 288 | 1504 | 704 | 1088 | 288 |
| 2.5 | 144 | 144 | 704 | 576 | 352 | 576 | 3008 | 672 | 2080 | 288 | 1312 | 672 | 1056 | 288 |
| 2.75 | 144 | 144 | 480 | 512 | 160 | 512 | 2720 | 640 | 1856 | 288 | 1216 | 640 | 1056 | 288 |
| 3 | 144 | 144 | 320 | 448 | 96 | 448 | 2368 | 576 | 1536 | 288 | 1184 | 576 | 1024 | 288 |
| 3.25 | 144 | 144 | 224 | 352 | 64 | 352 | 1984 | 512 | 1280 | 288 | 1152 | 512 | 992 | 288 |
| 3.5 | 144 | 0 | 128 | 288 | 32 | 288 | 1632 | 480 | 1056 | 288 | 1120 | 480 | 928 | 288 |
| 3.75 | 0 | 0 | 64 | 224 | 32 | 224 | 1344 | 448 | 832 | 256 | 1088 | 448 | 832 | 256 |
| 4 | 0 | 0 | 32 | 192 | 0 | 192 | 1088 | 416 | 640 | 256 | 1024 | 416 | 704 | 256 |
| 4.25 | 0 | 0 | 0 | 160 | 0 | 160 | 928 | 416 | 480 | 256 | 928 | 416 | 576 | 256 |
| 4.5 | 0 | 0 | 0 | 128 | 0 | 128 | 768 | 384 | 352 | 224 | 832 | 384 | 416 | 224 |
| 4.75 | 0 | 0 | 0 | 96 | 0 | 96 | 608 | 352 | 224 | 224 | 704 | 352 | 288 | 224 |
| 5 | 0 | 0 | 0 | 64 | 0 | 64 | 416 | 352 | 128 | 224 | 544 | 352 | 192 | 224 |

## Table 37. Extended Overlap Upstream System Spectral Compatibility Impact.

| Dist | TCM-ISDN | | G.992.1 Annex A (FDM) | | G.992.2 Annex A | | G.992.1 Annex C | | | | G.992.2 Annex C | | | |
|---|---|---|---|---|---|---|---|---|---|---|---|---|---|---|
| | | | | | | | DBM | | FBM | | DBM | | FBM | |
| | DS | US | DS | US | DS | US | DS | US | DS | US | DS | US | DS | US |
| 0.5 | 144 | 144 | 7104 | 832 | 3008 | 832 | 7104 | 832 | 2624 | 288 | 3008 | 832 | 1088 | 288 |
| 0.75 | 144 | 144 | 7104 | 832 | 3008 | 832 | 7104 | 832 | 2624 | 288 | 3008 | 832 | 1088 | 288 |
| 1 | 144 | 144 | 7072 | 832 | 3008 | 832 | 7072 | 832 | 2592 | 288 | 3008 | 832 | 1088 | 288 |
| 1.25 | 144 | 144 | 6944 | 832 | 3008 | 832 | 6944 | 832 | 2560 | 288 | 3008 | 832 | 1088 | 288 |
| 1.5 | 144 | 144 | 6848 | 832 | 2976 | 832 | 6848 | 832 | 2528 | 288 | 2976 | 832 | 1088 | 288 |
| 1.75 | 144 | 144 | 6752 | 832 | 2976 | 832 | 6752 | 832 | 2496 | 288 | 2976 | 832 | 1088 | 288 |
| 2 | 144 | 144 | 6592 | 800 | 2912 | 800 | 6592 | 800 | 2432 | 288 | 2912 | 800 | 1088 | 288 |
| 2.25 | 144 | 144 | 6368 | 768 | 2848 | 768 | 6368 | 768 | 2336 | 288 | 2848 | 768 | 1056 | 288 |
| 2.5 | 144 | 144 | 6016 | 704 | 2752 | 704 | 6016 | 704 | 2208 | 256 | 2752 | 704 | 1024 | 256 |
| 2.75 | 144 | 144 | 5504 | 672 | 2624 | 672 | 5504 | 672 | 2016 | 224 | 2624 | 672 | 960 | 224 |
| 3 | 144 | 144 | 4768 | 608 | 2496 | 608 | 4768 | 608 | 1760 | 224 | 2496 | 608 | 928 | 224 |
| 3.25 | 144 | 144 | 3776 | 512 | 2368 | 512 | 3776 | 512 | 1376 | 192 | 2368 | 512 | 864 | 192 |
| 3.5 | 0 | 0 | 2944 | 448 | 2144 | 448 | 2944 | 448 | 1088 | 160 | 2144 | 448 | 768 | 160 |
| 3.75 | 0 | 0 | 2208 | 352 | 1856 | 352 | 2208 | 352 | 800 | 128 | 1856 | 352 | 672 | 128 |
| 4 | 0 | 0 | 1568 | 288 | 1536 | 288 | 1568 | 288 | 576 | 96 | 1536 | 288 | 544 | 96 |
| 4.25 | 0 | 0 | 1088 | 224 | 1216 | 224 | 1088 | 224 | 384 | 64 | 1216 | 224 | 448 | 64 |
| 4.5 | 0 | 0 | 704 | 160 | 896 | 160 | 704 | 160 | 256 | 32 | 896 | 160 | 320 | 32 |
| 4.75 | 0 | 0 | 416 | 96 | 576 | 96 | 416 | 96 | 128 | 32 | 576 | 96 | 192 | 32 |
| 5 | 0 | 0 | 192 | 64 | 320 | 64 | 192 | 64 | 64 | 32 | 320 | 64 | 96 | 32 |

## Table 38. Reference Performance minus Performance with Extended Overlap Upstream System

| Dist | TCM-ISDN | | G.992.1 Annex A (FDM) | | G.992.2 Annex A | | G.992.1 Annex C DBM | | FBM | | G.992.2 Annex C DBM | | FBM | |
|---|---|---|---|---|---|---|---|---|---|---|---|---|---|---|
| | DS | US | DS | US | DS | US | DS | US | DS | US | DS | US | DS | US |
| 0.5 | 0 | 0 | 0 | 0 | 0 | 0 | 0 | 0 | 0 | 0 | 0 | 0 | 0 | 0 |
| 0.75 | 0 | 0 | -320 | 0 | -64 | 0 | -192 | 0 | -32 | 0 | -64 | 0 | 0 | 0 |
| 1 | 0 | 0 | -1120 | 0 | -384 | 0 | -704 | 0 | -64 | 0 | -256 | 0 | 0 | 0 |
| 1.25 | 0 | 0 | -2048 | -32 | -736 | -32 | -1248 | -32 | -64 | 0 | -480 | -32 | 0 | 0 |
| 1.5 | 0 | 0 | -3008 | -64 | -1152 | -64 | -1824 | -32 | -96 | 0 | -704 | -32 | 0 | 0 |
| 1.75 | 0 | 0 | -4256 | -96 | -1536 | -96 | -2560 | -64 | -96 | 0 | -960 | -64 | 0 | 0 |
| 2 | 0 | 0 | -4896 | -96 | -1952 | -96 | -2912 | -64 | -96 | 0 | -1216 | -64 | 0 | 0 |
| 2.25 | 0 | 0 | -5280 | -128 | -2208 | -128 | -3072 | -64 | -96 | 0 | -1344 | -64 | 32 | 0 |
| 2.5 | 0 | 0 | -5312 | -128 | -2400 | -128 | -3008 | -32 | -128 | -32 | -1440 | -32 | 32 | 32 |
| 2.75 | 0 | 0 | -5024 | -160 | -2464 | -160 | -2784 | -32 | -160 | 64 | -1408 | -32 | 96 | 64 |
| 3 | 0 | 0 | -4448 | -160 | -2400 | -160 | -2400 | -32 | -224 | 64 | -1312 | -32 | 96 | 64 |
| 3.25 | 0 | 0 | -3552 | -160 | -2304 | -160 | -1792 | 0 | -98 | 98 | -1216 | 0 | 128 | 96 |
| 3.5 | 144 | 0 | -2816 | -160 | -2112 | -160 | -1312 | 32 | -32 | 128 | -1024 | 32 | 160 | -128 |
| 3.75 | 0 | 0 | -2144 | -128 | -1824 | -128 | -864 | 96 | 32 | 128 | -768 | 96 | 160 | 128 |
| 4 | 0 | 0 | -1536 | -96 | -1536 | -96 | -480 | 128 | 64 | 160 | -512 | 128 | 160 | -160 |
| 4.25 | 0 | 0 | -1088 | -64 | -1216 | -64 | -160 | 192 | 96 | 192 | -288 | 192 | 128 | 192 |
| 4.5 | 0 | 0 | -704 | -32 | -896 | -32 | 64 | 224 | 96 | 192 | -64 | 224 | 96 | 192 |
| 4.75 | 0 | 0 | -416 | 0 | -576 | 0 | 192 | 256 | 96 | 192 | 128 | 256 | 96 | 192 |
| 5 | 0 | 0 | -192 | 0 | -320 | 0 | 224 | 288 | 64 | 192 | 224 | 288 | 96 | 192 |

**Extended Upstream Reduced Overlap (ROL) Spectrum Mode**

Described in the following is an Extended Upstream Reduced Overlap (ROL) system that combines an extended upstream channel up to approximately 276 KHz and a Reduced Overlap ROL Quad Spectrum downstream channel that starts at approximately 138 KHz.

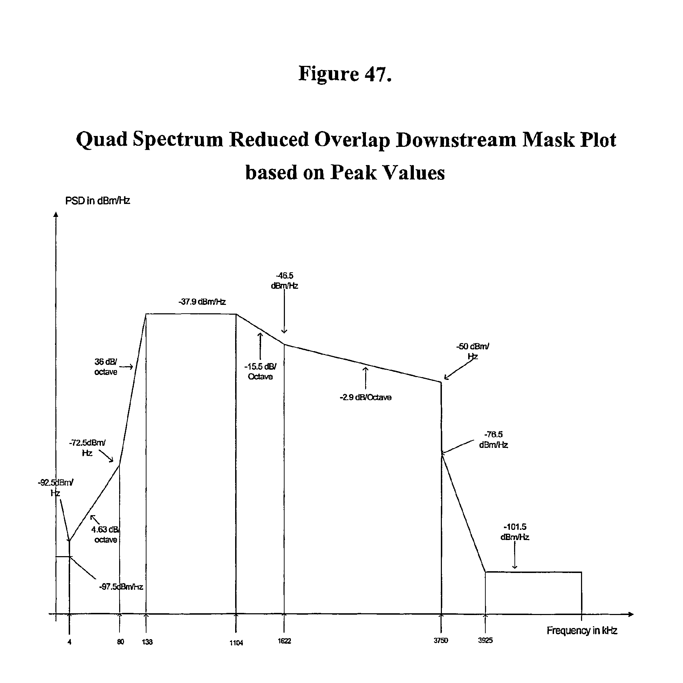

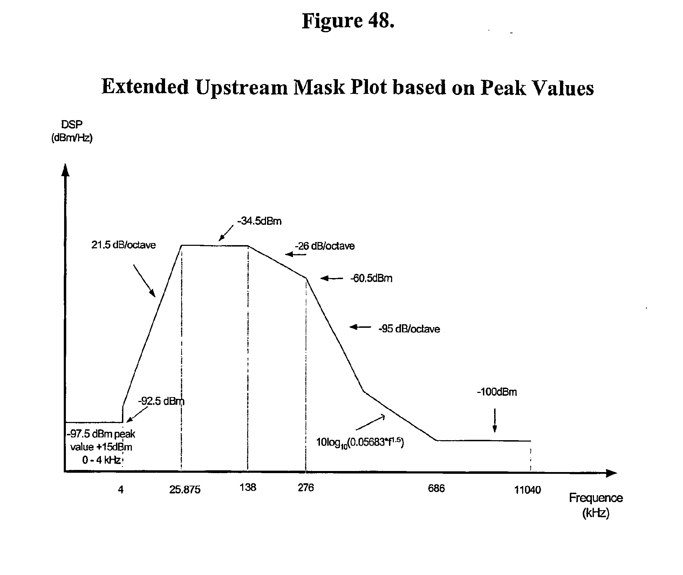

Note that the values provided in the following Figures 47 and 48 and in Tables 51-54 are approximate, or mean values, and may have a variance of up to 10%.

Figure 47 and Table 39 provides exemplary features of one embodiment of the Reduced Overlap Quad Spectrum Downstream Mask.

Figure 48 and Table 40 provides exemplary features of one embodiment of the Reduced Overlap Quad Spectrum Downstream Mask.

Table 41 provides the performance of protected systems in the presence of five extended Upstream ROL systems as disturbers (1 Intra-Quad plus 4 Inter-Quad).

Table 42 describes the difference between reference performance of protected systems and their performance in the presence of five Extended Upstream ROL system disturbers. According to Table 42, Extended Upstream ROL System has little or no impact with TCM-ISDN systems up to approximately 3.25 km.

### Table 39. Quad Spectrum Reduced Overlap Downstream Mask Peak Values

| Frequency (kHz) | PSD (dBm/Hz) Peak values |
|---|---|
| 0<f<4 | -97.5 |
| 4<f<80 | "-92.5 + 4.63.log2.(f/4)" |
| 80<f<138 | "-72.5 + 36.log2.(f/80)" |
| 138<f<1104 | -37.9 |
| 1104<f<1622 | "-37.9 - 15.5.log2.(f/1104)" |
| 1622<f<3750 | "-46.5 - 2.9.log2.(f/1622)" |
| 3750 | -76.5 |
| f=3925 & f>3925 | -101.5 |

### Table 40. Extended Upstream Mask, Peak values

| Frequency (kHz) | PSD (dBm/Hz) Peak values |
|---|---|
| 0<f<4 | -97.5 |
| 4<f<25.875 | "-92.5 + 21.5.log2.(f/4)" |
| 25.875<f<138 | -34.5 |
| 138<f<276 | "-34.5 - 26.log2.(f/138)" |
| 276<f<f_int | "-60.5 - 95.log2.(f/276)" |
| f_int<f<686 | 10log10(0.05683*f^(1.5)) |
| f>686 | -100 |

### Table 41. Extended Upstream ROL System Spectral Compatibility Impact.

| Dist | TCM-ISDN | | G.992.1 Annex A (FDM) | | G.992.2 Annex A | | G.992.1 Annex C DBM | | FBM | | G.992 DBM |
|---|---|---|---|---|---|---|---|---|---|---|---|
| | DS | US | DS | US | DS | US | DS | US | DS | US | DS |
| 0.5 | 144 | 144 | 7104 | 832 | 3008 | 832 | 7104 | 832 | 2624 | 288 | 3008 |
| 0.75 | 144 | 144 | 7104 | 832 | 3008 | 832. | 7104 | 832 | 2624 | 288 | 3008 |
| 1 | 144 | 144 | 7008 | 832 | 3008 | 832 | 7008 | 832 | 2592 | 288 | 3008 |
| 1.25 | 144 | 144 | 6912 | 832 | 3008 | 832 | 6912 | 832 | 2560 | 288 | 3008 |
| 1.5 | 144 | 144 | 6816 | 832 | 2976 | 832 | 6816 | 832 | 2528 | 288 | 2976 |
| 1.75 | 144 | 144 | 6720 | 832 | 2976 | 832 | 6720 | 832 | 2464 | 288 | 2976 |
| 2 | 144 | 144 | 6528 | 832 | 2912 | 832 | 6528 | 832 | 2400 | 288 | 2912 |
| 2.25 | 144 | 144 | 6304 | 832 | 2848 | 832 | 6304 | 832 | 2336 | 288 | 2848 |
| 2.5 | 144 | 144 | 5984 | 832 | 2752 | 832 | 5984 | 832 | 2208 | 288 | 2752 |
| 2.75 | 144 | 144 | 5472 | 800 | 2624 | 800 | 5472 | 800 | 2016 | 288 | 2624 |
| 3 | 144 | 144 | 4736 | 800 | 2496 | 800 | 4736 | 800 | 1728 | 288 | 2496 |
| 3.25 | 144 | 144 | 3776 | 800 | 2336 | 800 | 3776 | 800 | 1376 | 288 | 2336 |
| 3.5 | 0 | 144 | 2912 | 768 | 2144 | 768 | 2912 | 768 | 1088 | 288 | 2144 |
| 3.75 | 0 | 0 | 2176 | 738 | 1856 | 736 | 2176 | 736 | 800 | 256 | 1858 |
| 4 | 0 | 0 | 1536 | 738 | 1504 | 736 | 1536 | 736 | 576 | 256 | 1504 |
| 4.25 | 0 | 0 | 1088 | 704 | 1184 | 704 | 1088 | 704 | 384 | 256 | 1184 |
| 4.5 | 0 | 0 | 704 | 672 | 896 | 672 | 704 | 672 | 256 | 224 | 896 |

### Table 42. Reference Performance minus Performance with Extended Upstream ROL System

| Dist | TCM-ISDN | | G.992.1 Annex A (FDM) | | G.992.2 Annex A | | G.992.1 Annex C DBM | | FBM | | G.992.2 Annex C DBM | | FBM | |
|---|---|---|---|---|---|---|---|---|---|---|---|---|---|---|
| | DS | US | DS | US | DS | US | DS | US | DS | US | DS | US | DS | US |
| 0.5 | 0 | 0 | 0 | 0 | 0 | 0 | 0 | 0 | 0 | 0 | 0 | 0 | 0 | 0 |
| 0.75 | 0 | 0 | -320 | 0 | -64 | 0 | -192 | 0 | -32 | 0 | -64 | 0 | 0 | 0 |
| 1 | 0 | 0 | -1056 | 0 | -384 | 0 | -640 | 0 | -64 | 0 | -256 | 0 | 0 | 0 |
| 1.25 | 0 | 0 | -2016 | -32 | -736 | -32 | -1216 | -32 | -64 | 0 | -480 | -32 | 0 | 0 |
| 1.5 | 0 | 0 | -2976 | -64 | -1152 | -64 | -1792 | -32 | -96 | 0 | -704 | -32 | 0 | 0 |
| 1.75 | 0 | 0 | -4224 | -96 | -1536 | -96 | -2528 | -64 | -64 | 0 | -960 | -64 | 0 | 0 |
| 2 | 0 | 0 | -4832 | -128 | -1952 | -128 | -2848 | -96 | -64 | 0 | -1216 | -96 | 0 | 0 |
| 2.25 | 0 | 0 | -5216 | -192 | -2208 | -192 | -3008 | -128 | -96 | 0 | -1344 | -128 | 32 | 0 |
| 2.5 | 0 | 0 | -5280 | -256 | -2400 | -256 | -2976 | -160 | -128 | 0 | -1440 | -160 | 32 | 0 |
| 2.75 | 0 | 0 | -4992 | -288 | -2464 | -288 | -2752 | -160 | -160 | 0 | -1408 | -160 | 96 | 0 |
| 3 | 0 | 0 | -4416 | -352 | -2400 | -352 | -2368 | -224 | -192 | 0 | -1312 | -224 | 96 | 0 |
| 3.25 | 0 | 0 | -3552 | -448 | -2272 | -448 | -1792 | -288 | -96 | 0 | -1184 | -288 | 128 | 0 |
| 3.5 | 144 | -144 | -2784 | -480 | -2112 | -480 | -1280 | -288 | -32 | 0 | -1024 | -288 | 160 | 0 |
| 3.75 | 0 | 0 | -2112 | -512 | -1824 | -512 | -832 | -288 | 32 | 0 | -768 | -288 | 160 | 0 |
| 4 | 0 | 0 | -1504 | -544 | -1504 | -544 | -448 | -320 | 64 | 0 | -480 | -320 | 160 | 0 |
| 4.25 | 0 | 0 | -1088 | -544 | -1184 | -544 | -160 | -288 | 96 | 0 | -256 | -288 | 128 | 0 |
| 4.5 | 0 | 0 | -704 | -544 | -896 | -544 | -64 | -288 | 98 | 0 | -64 | -288 | 96 | 0 |
| 4.75 | 0 | 0 | -416 | -544 | -576 | -544 | 192 | -288 | 96 | 0 | 128 | -288 | 96 | 0 |
| 5 | 0 | 0 | -192 | -544 | -320 | -544 | 224 | -256 | 64 | 0 | 224 | -256 | 96 | 0 |

**Extended Upstream Reduced Overlap (ROL) Spectrum Mode:**

Described in the following is an Overlap OL Quad Spectrum System for high speed ADSL and an evaluation of its spectral compatibility according to the 2003 revised TTC-Soumusho spectral compatibility rules. The OL Quad Spectrum System combines an extended downstream Bandwidth PSD (from approximately 25.875 KHz up to approximately 3.75 MHz) and the G.992.5 Upstream PSD (with steep side lobes of -95 dB per octave slope). The Quad spectrum Downstream channel total power preferably is equal to approximately 20 dBm. The following demonstrates that that the Quad Spectrum Overlap system has a smaller spectral compatibility impact than G.992.1 OL with protected systems. It is therefore preferable in some embodiments to deploy the Quad Spectrum Overlap System in the same quad as protected systems at longer range than G.992.1 OL.

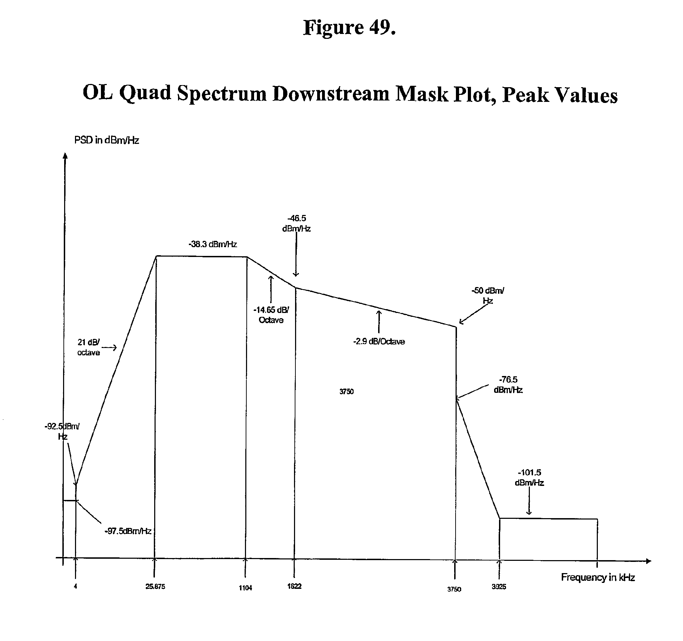

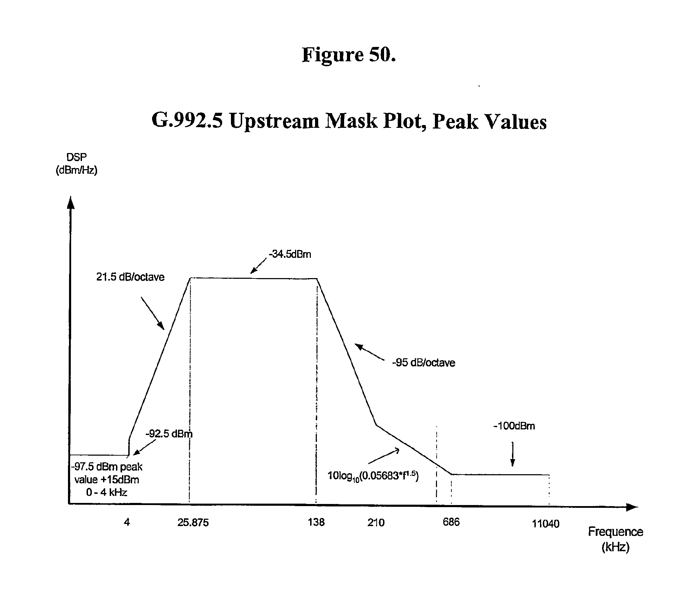

Note that the values provided in the following Figures 49 and 50 and in Tables 55-60 are approximate, or mean values, and may have a variance of up to 10%.

Figure 49 and Table 43 disclose exemplary Overlap Quad Spectrum Downstream Mask features based on peak values.

Figure 50 and Table 44 disclose the G.992.5 Upstream Mask features based on peak values.

Table 45 provides the performance of protected systems in the presence of 5 g.992.1 OL systems disturbers.

Table 46 provides the performance of protected systems in the presence of five OL Quad Spectrum systems disturbers.

Table 47 provides the delta between the reference performance and the performance in the presence of five OL quad spectrum systems (Table 46).

Table 48 provides the delta between the reference performance and the performance in the presence of 5 OL quad spectrum systems (Table 46).

**Table 43 OL Quad Spectrum Downstream Mask Definition, Peak Values**

| Frequency (kHz) | PSD (dBm/Hz) Peak values |
|---|---|
| 0<f<4 | -97.5 |
| 4<f<25.875 | "-92.5 + 21.log2.(f/4)" |
| 25.875<f<1104 | -38.3 |
| 1104<f<1622 | "-38.3 - 14.75.log2.(f/1104)" |
| 1622<f<3750 | "-46.5 - 2.9.log2.(f/1622)" |
| f=3750 | -76.5 |
| f>3925 | -101.5 |

**Table 44. G.992.5 Upstream Mask Definition, Peak Values**

| Frequency (kHz) | PSD (dBm/Hz) Peak values |
|---|---|
| 0<f<4 | -97.5 |
| 4<f<25.875 | "-92.5 + 21.5.log2.(f/4)" |
| 25.875<f<138 | -34.5 |
| 138<f<f_int | "-34.5 - 95.log2.(f/138)" |
| f_int<f<686 | 10log10(0.05683*f^(1.5)) |
| f>686 | -100 |

## Table 45. Protected Systems Performance with 5 G.992.1 OL Systems (1 Intra-Quad,4 Inter-Quad)

| Dist | TCM-ISDN | | G.992.1 Annex A (FDM) | | G.992.2 Annex A | | G.992.1 Annex C | | | | G.992.2 Annex C | | | |
|---|---|---|---|---|---|---|---|---|---|---|---|---|---|---|
| | | | | | | | DBM | | FBM | | DBM | | FBM | |
| | DS | US | DS | US | DS | US | DS | US | DS | US | DS | US | DS | US |
| 0.5 | 144 | 144 | 7104 | 832 | 3008 | 832 | 7104 | 832 | 2624 | 288 | 3008 | 832 | 1088 | 288 |
| 0.75 | 144 | 144 | 7008 | 832 | 3008 | 832 | 7008 | 832 | 2592 | 288 | 3008 | 832 | 1088 | 288 |
| 1 | 144 | 144 | 6880 | 832 | 3008 | 832 | 6880 | 832 | 2528 | 288 | 3008 | 832 | 1088 | 288 |
| 1.25 | 144 | 144 | 6784 | 832 | 3008 | 832 | 6784 | 832 | 2496 | 288 | 3008 | 832 | 1088 | 288 |
| 1.5 | 144 | 144 | 6624 | 832 | 2976 | 832 | 6624 | 832 | 2432 | 288 | 2976 | 832 | 1088 | 288 |
| 1.75 | 144 | 144 | 6464 | 800 | 2976 | 800 | 6464 | 800 | 2400 | 288 | 2976 | 800 | 1088 | 288 |
| 2 | 144 | 144 | 6336 | 768 | 2976 | 768 | 6336 | 768 | 2336 | 288 | 2976 | 768 | 1088 | 288 |
| 2.25 | 144 | 144 | 6080 | 736 | 2944 | 736 | 6080 | 736 | 2240 | 256 | 2944 | 736 | 1088 | 256 |
| 2.5 | 144 | 144 | 5664 | 672 | 2912 | 672 | 5664 | 672 | 2080 | 256 | 2912 | 672 | 1056 | 256 |
| 2.75 | 144 | 144 | 5024 | 608 | 2880 | 608 | 5024 | 608 | 1856 | 224 | 2880 | 608 | 1056 | 224 |
| 3 | 144 | 144 | 4192 | 544 | 2816 | 544 | 4192 | 544 | 1536 | 192 | 2816 | 544 | 1024 | 192 |
| 3.25 | 144 | 144 | 3488 | 480 | 2688 | 480 | 3488 | 480 | 1280 | 160 | 2688 | 480 | 992 | 160 |
| 3.5 | 144 | 0 | 2848 | 384 | 2528 | 384 | 2848 | 384 | 1056 | 128 | 2528 | 384 | 928 | 128 |
| 3.75 | 0 | 0 | 2304 | 288 | 2272 | 288 | 2304 | 288 | 832 | 96 | 2272 | 288 | 832 | 96 |
| 4 | 0 | 0 | 1792 | 224 | 1984 | 224 | 1792 | 224 | 640 | 64 | 1984 | 224 | 704 | 64 |
| 4.25 | 0 | 0 | 1344 | 160 | 1568 | 160 | 1344 | 160 | 480 | 64 | 1568 | 160 | 576 | 64 |
| 4.5 | 0 | 0 | 960 | 128 | 1152 | 128 | 960 | 128 | 352 | 32 | 1152 | 128 | 416 | 32 |
| 4.75 | 0 | 0 | 672 | 96 | 832 | 96 | 672 | 96 | 224 | 32 | 832 | 96 | 288 | 32 |
| 5 | 0 | 0 | 416 | 64 | 544 | 64 | 416 | 64 | 128 | 0 | 544 | 64 | 192 | 0 |

## Table 46. Protected Systems performance with 5 OL Quad Spectrum Systems (1 Intra-Quad,4 Inter-Quad)

| Dist | TCM-ISDN | | G.992.1 Annex A (FDM) | | G.992.2 Annex A | | G.992.1 Annex C | | | | G.992.2 Annex C | | | |
|---|---|---|---|---|---|---|---|---|---|---|---|---|---|---|
| | | | | | | | DBM | | FBM | | DBM | | FBM | |
| | DS | US | DS | US | DS | US | DS | US | DS | US | DS | US | DS | US |
| 0.5 | 144 | 144 | 7104 | 832 | 3008 | 832 | 7104 | 832 | 2624 | 288 | 3008 | 832 | 1088 | 288 |
| 0.75 | 144 | 144 | 7104 | 832 | 3008 | 832 | 7104 | 832 | 2624 | 288 | 3008 | 832 | 1088 | 288 |
| 1 | 144 | 144 | 7072 | 832 | 3008 | 832 | 7072 | 832 | 2592 | 288 | 3008 | 832 | 1088 | 288 |
| 1.25 | 144 | 144 | 6944 | 832 | 3008 | 832 | 6944 | 832 | 2560 | 288 | 3008 | 832 | 1088 | 288 |
| 1.5 | 144 | 144 | 6880 | 832 | 3008 | 832 | 6880 | 832 | 2528 | 288 | 3008 | 832 | 1088 | 288 |
| 1.75 | 144 | 144 | 6816 | 832 | 2976 | 832 | 6816 | 832 | 2528 | 288 | 2976 | 832 | 1088 | 288 |
| 2 | 144 | 144 | 6688 | 800 | 2976 | 800 | 6688 | 800 | 2464 | 288 | 2976 | 800 | 1088 | 288 |
| 2.25 | 144 | 144 | 6560 | 768 | 2976 | 768 | 6560 | 768 | 2400 | 288 | 2976 | 768 | 1088 | 288 |
| 2.5 | 144 | 144 | 6304 | 704 | 2976 | 704 | 6304 | 704 | 2336 | 256 | 2976 | 704 | 1088 | 256 |
| 2.75 | 144 | 144 | 5888 | 672 | 2944 | 672 | 5888 | 672 | 2176 | 224 | 2944 | 672 | 1088 | 224 |
| 3 | 144 | 144 | 5280 | 608 | 2944 | 608 | 5280 | 608 | 1952 | 224 | 2944 | 608 | 1088 | 224 |
| 3.25 | 144 | 144 | 4416 | 512 | 2912 | 512 | 4416 | 512 | 1632 | 192 | 2912 | 512 | 1056 | 192 |
| 3.5 | 144 | 144 | 3712 | 448 | 2816 | 448 | 3712 | 448 | 1376 | 160 | 2816 | 448 | 1024 | 160 |
| 3.75 | 0 | 0 | 3104 | 352 | 2688 | 352 | 3104 | 352 | 1152 | 128 | 2688 | 352 | 992 | 128 |
| 4 | 0 | 0 | 2560 | 288 | 2496 | 288 | 2560 | 288 | 928 | 96 | 2496 | 288 | 896 | 96 |
| 4.25 | 0 | 0 | 2112 | 224 | 2240 | 224 | 2112 | 224 | 768 | 64 | 2240 | 224 | 800 | 64 |
| 4.5 | 0 | 0 | 1696 | 160 | 1920 | 160 | 1696 | 160 | 608 | 32 | 1920 | 160 | 704 | 32 |
| 4.75 | 0 | 0 | 1344 | 96 | 1536 | 96 | 1344 | 96 | 480 | 32 | 1536 | 96 | 576 | 32 |
| 5 | 0 | 0 | 1024 | 64 | 1216 | 64 | 1024 | 64 | 352 | 32 | 1216 | 64 | 448 | 32 |

Table 47. Reference Performance minus Performance with Five OL Quad Spectrum

| Dist | TCM-ISDN | | G.992.1 Annex A (FDM) | | G.992.2 Annex A | | G.992.1 Annex C | | | | G.992.2 Annex C | | | |
|---|---|---|---|---|---|---|---|---|---|---|---|---|---|---|
| | | | | | | | DBM | | FBM | | DBM | | FBM | |
| | DS | US | DS | US | DS | US | DS | US | DS | US | DS | US | DS | US |
| 0.5 | 0 | 0 | 0 | 0 | 0 | 0 | 0 | 0 | 0 | 0 | 0 | 0 | 0 | 0 |
| 0.75 | 0 | 0 | -320 | 0 | -64 | 0 | -192 | 0 | -32 | 0 | -64 | 0 | 0 | 0 |
| 1. | 0 | 0 | -1120 | 0 | -384 | 0 | -704 | 0 | -64 | 0 | -256 | 0 | 0 | 0 |
| 1.25 | 0 | 0 | -2048 | -32 | -736 | -32 | -1248 | -32 | -64 | 0 | -480 | -32 | 0 | 0 |
| 1.5 | 0 | 0 | -3040 | -64 | -1184 | -64 | -1856 | -32 | -96 | 0 | -736 | -32 | 0 | 0 |
| 1.75 | 0 | 0 | -4320 | -96 | -1536 | -96 | -2624 | -64 | -128 | 0 | -960 | -64 | 0 | 0 |
| 2 | 0 | 0 | -4992 | -96 | -2016 | -96 | -3008 | -64 | -128 | 0 | -1280 | -64 | 0 | 0 |
| 2.25 | 0 | 0 | -5472 | -128 | -2336 | -128 | -3264 | -64 | -160 | 0 | -1472 | -64 | 0 | 0 |
| 2.5 | 0 | 0 | -5600 | -128 | -2624 | -128 | -3296 | -32 | -256 | 32 | -1664 | -32 | -32 | 32 |
| 2.75 | 0 | 0 | -5408 | -160 | -2784 | -160 | -3168 | -32 | -320 | 64 | -1728 | -32 | -32 | 64 |
| 3 | 0 | 0 | -4960 | -160 | -2848 | -160 | -2912 | -32 | -416 | 64 | -1760 | -32 | -64 | 64 |
| 3.25 | 0 | 0 | -4192 | -160 | -2848 | -160 | -2432 | 0 | -352 | 96 | -1760 | 0 | -64 | 96 |
| 3.5 | 0 | -144 | -3584 | -160 | -2784 | -160 | -2080 | 32 | -320 | 128 | -1696 | 32 | -96 | 128 |
| 3.75 | 0 | 0 | -3040 | -128 | -2656 | -128 | -1760 | 96 | -320 | 128 | -1600 | 96 | -160 | 128 |
| 4 | 0 | 0 | -2528 | -96 | -2496 | -96 | -1472 | 128 | -288 | 160 | -1472 | 128 | -192 | 160 |
| 4.25 | 0 | 0 | -2112 | -64 | -2240 | -64 | -1184 | 192 | -288 | 192 | -1312 | 192 | -224 | 192 |
| 4.5 | 0 | 0 | -1696 | -32 | -1920 | -32 | -928 | 224 | -256 | 192 | -1088 | 224 | -288 | 192 |
| 4.75 | 0 | 0 | -1344 | 0 | -1536 | 0 | -736 | 256 | -256 | 192 | -832 | 256 | -288 | 192 |
| 5 | 0 | 0 | -1024 | 0 | -1216 | 0 | -608 | 288 | -224 | 192 | -672 | 288 | -256 | -192 |

Table 48. G.992.1 OL SC Table minus Quad Spectrum OL SC Table

| Dist | TCM-ISDN | | G.992.1 Annex A (FDM) | | G.992.2 Annex A | | G.992.1 Annex C | | | | G.992 |
|---|---|---|---|---|---|---|---|---|---|---|---|
| | | | | | | | DBM | | FBM | | DBM |
| | DS | US | DS | US | DS | US | DS | US | DS | US | DS |
| 0.5 | 0 | 0 | 0 | 0 | 0 | 0 | 0 | 0 | 0 | 0 | 0 |
| 0.75 | 0 | 0 | -96 | 0 | 0 | 0 | -96 | 0 | -32 | 0 | 0 |
| 1 | 0 | 0 | -192 | 0 | 0 | 0 | -192 | 0 | -64 | 0 | 0 |
| 1.25 | 0 | 0 | -160 | 0 | 0 | 0 | -160 | 0 | -64 | 0 | 0 |
| 1.5 | 0 | 0 | -256 | 0 | -32 | 0 | -256 | 0 | -96 | 0 | -32 |
| 1.75 | 0 | 0 | -352 | -32 | 0 | -32 | -352 | -32 | -128 | 0 | 0 |
| 2 | 0 | 0 | -352 | -32 | 0 | -32 | -352 | -32 | -128 | 0 | 0 |
| 2.25 | 0 | 0 | -480 | -32 | -32 | -32 | -480 | -32 | -160 | -32 | -32 |
| 2.5 | 0 | 0 | -640 | -32 | -64 | -32 | -640 | -32 | -256 | 0 | -64 |
| 2.75 | 0 | 0 | -864 | -64 | -64 | -64 | -864 | -64 | -320 | 0 | -64 |
| 3 | 0 | 0 | -1088 | -64 | -128 | -64 | -1088 | -64 | -416 | -32 | -128 |
| 3.25 | 0 | 0 | -928 | -32 | -224 | -32 | -928 | -32 | -352 | -32 | -224 |
| 3.5 | 0 | -144 | -864 | -64 | -288 | -64 | -864 | -64 | -320 | -32 | -288 |
| 3.75 | 0 | 0 | -800 | -64 | -416 | -64 | -800 | -64 | -320 | -32 | -416 |
| 4 | 0 | 0 | -768 | -64 | -512 | -64 | -768 | -64 | -288 | -32 | -512 |
| 4.25 | 0 | 0 | -768 | -64 | -672 | -64 | -768 | -64 | -288 | 0 | -672 |

The remainder of this Specification is background information and should not be construed as falling within the scope of the claims:

The performance of a "single mask" system and a "selectable mask" system for long reach DSL (LDSL) according to the agreements described in T1E1.4/2002-292R2 define eight different noise cases and 10 different loops, for a total of 80 test scenarios. The objective minimum bit rates for LDSL systems are 192kb/s downstream and 96kb/s upstream in each of the 80 test scenarios. We find a significant performance advantage for the selectable mask system in a number of test cases.

The "single Mask system" uses a single upstream and a single downstream mask, based on OJ-074, and are respectively referred to as U2 and D2 herein. This is a non-overlapped PSD scenario where the upstream channel ends at tone 23 and the downstream begins at tone 33. The "mask-selectable system" uses two upstream masks, U1 and U2, and two downstream masks, D1 and D2. Upstream mask U1 ends at tone 13 and the downstream mask, D1, is a shaped overlap mask derived from spectrum management class 5 in T1.417. The "mask-selectable system" selects the best Upstream and Downstream mask combination for each test case according to some criteria. Optimality criterion is left to the discretion of the operator who may want to force a mask set up according to the operator's field knowledge, or give priority to Upstream minimum rate, or Downstream minimum rate, up to certain margin, etc. This degree of freedom is a keystone of the selectable mask system. In the same spirit, ADSL overlap mode is left today to the discretion of the operator. Neither G.992.1 nor G.992.3 define criteria to select overlap mode. In actual deployment, the mask selection may be performed at initialization based on loop and noise conditions and criteria determined by operators and vendors.

Simulation results show that a mask-selectable system offers significant advantages over the single mask system under certain channel and noise conditions. Specifically, the single mask system {U2, D2} is judged subjectively "best" on approximately 60% of the test cases. The selectable mask system meets the data rate objectives for LDSL on approximately 90% of the test scenarios.

Mask-Selectable System for LDSL

Two Upstream masks, U1 and U2, and two downstream masks, D1 and D2, are used in what follows to define a mask-selectable system for LDSL.

In any physical layer noise scenario, the mask-selectable system chooses the best Upstream/Downstream masks combination according to some criteria. It is possible to prove that the four possible US/DS masks combinations defined hereafter are indeed spectrally compatible, according to method B (i.e Annex A) of T1.417.

Although we show the masks in pairs, we do not place restrictions on mask combinations. Therefore, mask U1 can be used with mask D1 or D2 for example.

Masks U1 and D1

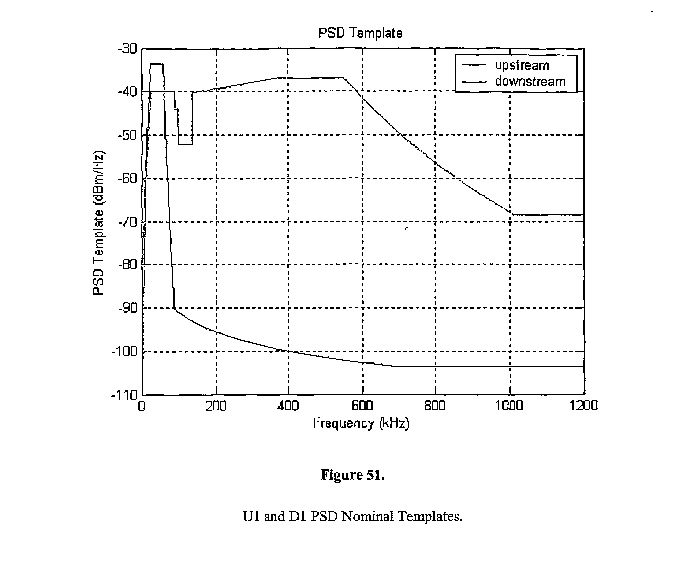

U1 and D1 PSD nominal templates are plotted in Figure 1 and explicitly defined in Tables 49 and 50. As defined by the standards, the PSD templates, or average PSD values, are 3.5 dB lower than the mask values. As shown in Figure 51, D1 PSD overlaps the ADSL Upstream bandwidth.

**Table 49: U1 PSD Nominal Templates**

| Frequency (kHz) | PSD (dBm/Hz) |
|---|---|
| $0 \leq f < 4$ | -101.5 |
| $4 \leq f < 25.875$ | -96+23.4*log2(f/4) |
| $25.875 \leq f < 60.375$ | -32.9 |
| $60.375 \leq f < 686$ | max{-32.9-95xlog$_2$(f/60.38), $10 \times \log10[0.05683 \times (f \times 10^3)^{-1.5}]$-3.5} |
| $686 \leq f < 1411$ | -103.5 |
| $1411 \leq f < 1630$ | -103.5 peak, -113.5 average in any [f, f+1 MHz] window |
| $1630 \leq f < 12000$ | -103.5 peak, -115.5 average in any [f, f+1 MHz] window |
| **Note 1.** The 95dB/octave slope will be replaced by the ADSL+ standardized roll off. | |

**Table 50. D1 PSD Nominal Templates**

| Frequency (kHz) | PSD (dBm/Hz) |
|---|---|
| $0 \leq f < 4$ | -101 |
| $4 \leq f < 5.875$ | -96+20.79*log$_2$(f/4) |
| $25.875 \leq f < 91$ | -40 |
| $91 \leq f < 99.2$ | -44 |
| $99.2 \leq f < 138$ | -52 |
| $138 \leq f < 353.625$ | -40.2+0.0148*(f-138) |
| $353.625 \leq f < 552$ | -37 |
| $552 \leq f < 1012$ | -37-36*log$_2$(f/552) |
| $1012 \leq f < 1800$ | -68.5 |
| $1800 \leq f < 2290$ | -68.5-72*log$_2$(f/1800) |
| $2290 \leq f < 3093$ | -93.500 |
| $3093 \leq f < 4545$ | -93.5 peak, average -40-36*log$_2$(f/1104) in any [f, f+1 MHz] window |

(continued)

| Frequency (kHz) | PSD (dBm/Hz) |
|---|---|
| 4545≤f<12000 | -93.5 peak, average -113.500 in any [f, f+1 MHz] window |
| **Note2.** U1 Total power is equal to 12.47dBm. D1 total power is equal to 19.43dBm. ||

Masks U2 and D2

Tables 51 and 52 give the breakpoints of U2 and D2 PSD Nominal Templates. U2 and D2 are derived from OJ-074. To minimize self NEXT due to the side lobes, the low frequency edge of OJ-074 downstream PSD and the high frequency edge of OJ-074 upstream PSD have been sharpened according to ADSL+ recommendations and exhibit 95dB/octave slope.

**Table 51:** U2 PSD Nominal Template, average values.

| Frequency (kHz) | PSD (dBm/Hz) |
|---|---|
| 0≤f<4 | -101.5 |
| 4≤f<25.875 | $-96+21.5\times\log_2(f/4)$ |
| 25.875≤f<103.5 | -36.4 |
| 103.5≤f<686 | $\max\{-36.3-95\times\log_2(f/103.5), 10\times\log10[0.05683\times(f\times10^3)^{-1.5}]-3.5\}$ |
| 686≤f<1411 | -103.5 |
| 1411≤f<1630 | -103.5 peak, -113.5 average in any [f, f+1 MHz] window |
| 1630≤f<12000 | -103.5 peak, -115.5 average in any [f, f+1 MHz] window |
| **Note 3.** The 95dB/octave slope will be replaced by the ADSL+ standardized roll off. ||

**Table 52:** D2 PSD Nominal Template, average values.

| Frequency f (kHz) | PSD (dBm/Hz) |
|---|---|
| 0≤f<4 | -101.5 |
| 4≤f<80.000 | $-96+4.63*\log_2(f/4)$ |
| 80≤f<138.000 | $-76+36*\log_2(f/80)$ |
| 138≤f<276.000 | $-42.95+0.0214*f$ |
| 276≤f<552.000 | -37 |
| 552≤f<1012 | $-37-36*\log_2(f/552)$ |
| 1012≤f<1800 | -68.5 |
| 1800≤f<2290 | $-68.5-72*\log_2(f/1800)$ |
| 2290≤f<3093 | -93.500 |
| 3093≤f<4545 | -93.5 peak, average $-40-36*\log_2(f/1104)$ in any [f, f+1 MHz] window |
| 4545≤f<12000 | -93.5 peak, average -113.500 in any [f, f+1 MHz] window |
| **Note 4.** U2 total power is equal to 12.5dBm. D2 total power is equal to 19.30dBm. ||

Performance of Selectable Masks System for LDSL

ADSL2 Performance

Table 53 gives the ADSL2 Upstream and downstream performance for calibration purposes. Noise scenarios are numbered from 1 to 8 according to T1.E1.4/292-R2. Numbers shown in bold indicate those that do not meet the LDSL performance objective of 192kbps downstream and 96 kbps upstream.

| | upstream | | | | | | | | downstream | | | | | | | |
|---|---|---|---|---|---|---|---|---|---|---|---|---|---|---|---|---|
| | case 1 | case 2 | case 3 | case 4 | case 5 | case 6 | case 7 | case 8 | case 1 | case 2 | case 3 | case 4 | case 5 | case 6 | case 7 | case 8 |
| | Self Ne | ADSL | ISDN | SHDSL | HDSL | T1 | MIX | TIA | Self Ne | ADSL | ISDN | SHDSL | HDSL | T1 | MIX | TIA |
| xDSL 10 | 963 | 963 | 623 | 344 | 357 | 982 | 597 | 665 | 1260 | 1260 | 1168 | 1354 | 1348 | 194 | 1218 | 186 |
| xDSL 11 | 682 | 682 | 340 | 142 | 156 | 692 | 315 | 378 | 207 | 207 | 101 | 250 | 250 | 0 | 131 | 0 |
| xDSL 12 | 633 | 633 | 294 | 109 | 122 | 642 | 270 | 331 | 418 | 418 | 325 | 462 | 461 | 0 | 365 | 0 |
| xDSL 13 | 470 | 470 | 151 | 58 | 67 | 478 | 123 | 175 | 164 | 194 | 148 | 199 | 199 | 0 | 165 | 0 |
| xDSL 160 | 770 | 770 | 424 | 168 | 180 | 786 | 398 | 463 | 979 | 979 | 875 | 1057 | 1051 | 115 | 928 | 113 |
| xDSL 165 | 719 | 719 | 377 | 140 | 150 | 736 | 347 | 415 | 774 | 774 | 657 | 847 | 844 | 72 | 718 | 66 |
| xDSL 170 | 668 | 668 | 328 | 115 | 124 | 684 | 299 | 364 | 598 | 598 | 500 | 659 | 658 | 35 | 543 | 29 |
| xDSL 175 | 620 | 619 | 283 | 93 | 105 | 634 | 259 | 316 | 447 | 471 | 357 | 500 | 500 | 0 | 412 | 8 |
| xDSL 180 | 576 | 576 | 241 | 77 | 88 | 585 | 217 | 275 | 320 | 352 | 260 | 365 | 365 | 0 | 304 | 0 |
| xDSL 185 | 531 | 530 | 199 | 63 | 69 | 542 | 179 | 233 | 218 | 248 | 195 | 256 | 256 | 0 | 220 | 0 |

**Table 53. ADSL2 simulation results. Data rates in kbps.**

Modified OJ-074 Single mask Performance, Combination {U2, D2}

Table 54 displays the results of the Modified OJ-074 {U2, D2}. These results will be taken as references for LDSL.

**Table 54 Performance results for the a single upstream and single downstream PSD mask (U2, D2). Data rates in kbps.**

| | upstream | | | | | | | | downstream | | | | | | | |
|---|---|---|---|---|---|---|---|---|---|---|---|---|---|---|---|---|
| | case 1 | case 2 | case 3 | case 4 | case 5 | case 6 | case 7 | case 8 | case 1 | case 2 | case 3 | case 4 | case 5 | case 6 | case 7 | case 8 |
| | Self Ne | ADSL | ISDN | SHDSL | HDSL | T1 | MIX | TIA | Self Ne | ADSL | ISDN | SHDSL | HDSL | T1 | MIX | TIA |
| xDSL 10 | 837 | 838 | 515 | 330 | 345 | 842 | 480 | 531 | 2402 | 1661 | 1869 | 2048 | 2039 | 467 | 1658 | 240 |
| xDSL 11 | 663 | 664 | 338 | 170 | 182 | 665 | 303 | 352 | 991 | 407 | 505 | 872 | 911 | 97 | 380 | 0 |
| xDSL 12 | 619 | 619 | 295 | 134 | 144 | 620 | 261 | 309 | 1195 | 643 | 694 | 986 | 1000 | 58 | 578 | 0 |
| xDSL 13 | 492 | 492 | 182 | 71 | 82 | 493 | 152 | 193 | 848 | 398 | 489 | 706 | 793 | 63 | 368 | 0 |
| xDSL 160 | 705 | 705 | 375 | 201 | 218 | 707 | 340 | 389 | 2049 | 1333 | 1499 | 1772 | 1769 | 365 | 1310 | 171 |
| xDSL 165 | 670 | 671 | 341 | 169 | 181 | 673 | 306 | 355 | 1787 | 1086 | 1252 | 1544 | 1556 | 291 | 1063 | 109 |
| xDSL 170 | 636 | 636 | 308 | 141 | 151 | 638 | 274 | 322 | 1551 | 879 | 1028 | 1342 | 1366 | 227 | 846 | 63 |
| xDSL 175 | 602 | 602 | 275 | 116 | 125 | 603 | 242 | 289 | 1336 | 753 | 819 | 1158 | 1191 | 175 | 684 | 40 |
| xDSL 180 | 567 | 567 | 244 | 94 | 106 | 569 | 211 | 256 | 1140 | 633 | 747 | 996 | 1035 | 131 | 604 | 13 |
| xDSL 185 | 533 | 532 | 213 | 77 | 88 | 534 | 182 | 225 | 970 | 528 | 665 | 850 | 891 | 94 | 519 | 0 |

Performance of Selectable Masks system

Table 55 gives the results of the selectable masks system for LDSL, based on T1E1.4/2002-292R2.

The selectable mask system optimality criteria may be left to the discretion of the operator who may want to force a mask according to deployment guidelines, or give priority to upstream minimum rate, or downstream minimum rate, up to certain margin, etc. This degree of freedom is a keystone of the selectable mask system. In the same spirit, ADSL overlap mode may be left today to the discretion of the operator. Neither G.992.1 nor G.992.3 define criteria to select overlap mode.

In presenting results for the selectable mask system, we used mask selection criteria that considers both upstream and downstream rates but weighs the downstream more heavily by a 2:1 ratio. We compare all mask combinations and derive a cost function equal to:

$$\text{cost} = 2*(\text{dsrate}(2)-\text{dsrate}(1))/\text{dsrate}(1) + (\text{usrate}(2)-\text{usrate}(1))/\text{usrate}(1).$$

If the cost is greater than zero, we select mask 2, otherwise we select mask 1. We will always try and select a mask for which neither the upstream nor the downstream rate is 0. If all masks have an upstream or downstream rate of 0 kbps, then the mask with the highest downstream or upstream rate respectively is selected.

The results presented in this section assume that the self crosstalk includes only the PSD masks being evaluated.

| | case 1 | case 2 | case 3 | case 4 | case 5 | case 6 | case 7 | case 8 | | case 1 | case 2 | case 3 | case 4 | case 5 | case 6 | case 7 | case 8 |
|---|---|---|---|---|---|---|---|---|---|---|---|---|---|---|---|---|---|
| | Self Ne | ADSL | ISDN | SHDSL | HDSL | T1 | MIX | TIA | | Self Ne | ADSL | ISDN | SHDSL | HDSL | T1 | MIX | TIA |
| | upstream | | | | | | | | | downstream | | | | | | | |
| xDSL 10 | 837 | 838 | 515 | 330 | 345 | 235 | 480 | 239 | | 2402 | 1661 | 1869 | 2048 | 2039 | 1026 | 1658 | 402 |
| xDSL 11 | 663 | 664 | 338 | 170 | 153 | 169 | 303 | 173 | | 991 | 407 | 505 | 872 | 1023 | 375 | 380 | 61 |
| xDSL 12 | 619 | 619 | 295 | 148 | 156 | 147 | 261 | 151 | | 1195 | 643 | 694 | 986 | 1000 | 305 | 578 | 40 |
| xDSL 13 | 492 | 492 | 182 | 108 | 115 | 106 | 152 | 109 | | 848 | 398 | 489 | 706 | 794 | 173 | 368 | 19 |
| xDSL 160 | 705 | 705 | 375 | 201 | 218 | 176 | 340 | 181 | | 2049 | 1333 | 1499 | 1772 | 1769 | 726 | 1310 | 232 |
| xDSL 165 | 670 | 671 | 341 | 169 | 181 | 163 | 306 | 167 | | 1787 | 1086 | 1252 | 1544 | 1556 | 610 | 1063 | 157 |
| xDSL 170 | 636 | 636 | 308 | 150 | 158 | 149 | 274 | 153 | | 1551 | 879 | 1028 | 1342 | 1366 | 509 | 846 | 99 |
| xDSL 175 | 602 | 602 | 275 | 137 | 145 | 135 | 242 | 139 | | 1336 | 753 | 819 | 1158 | 1192 | 420 | 684 | 71 |
| xDSL 180 | 567 | 567 | 244 | 124 | 131 | 122 | 211 | 126 | | 1140 | 633 | 747 | 996 | 1036 | 333 | 604 | 38 |
| xDSL 185 | 533 | 532 | 213 | 111 | 118 | 110 | 182 | 113 | | 970 | 528 | 665 | 850 | 892 | 255 | 519 | 22 |

*(SELECTABLE MASKS)*

Table 55. Performance projections for the selectable mask system. Data rates in

kbps.

| PSD mask noise | | single mask | selectable mask | difference |
|---|---|---|---|---|
| Self | IC1 | 3300 | 3300 | 0 |
| ADSL | IC2 | 1800 | 1800 | 0 |
| IDSN | IC3 | 500 | 500 | 0 |
| SHDSL | IC4 | 500 | 1600 | 1100 |
| HDSL | IC5 | 500 | 1600 | 1100 |
| | IC6 | 1700 | 3500 | 1800 |
| Combo | IC7 | 1100 | 1100 | 0 |
| TIA | IC8 | 500 | 900 | 400 |

Table 56 Projected reach Improvement versus ADSL2 in feet on a
26AWG straight loop at the target data rate 192kb/s / 96kb/s.

By comparing selectable masks system and single mask it is found that a single mask system cannot handle multiple physical layer/noise scenarios.

Table 57 gives the selected upstream/downstream masks according to the optimality criteria defined in section 3.3. Table 57 illustrates that different PSD masks are appropriate under different channel and noise conditions.

| | case 1 | case 2 | case 3 | case 4 | case 5 | case 6 | case 7 | case 8 |
|---|---|---|---|---|---|---|---|---|
| | Self Ne | ADSL | ISDN | SHDSL | HDSL | T1 | MIX | TIA |
| xDSL 10 | u2d2 | u2d2 | u2d2 | u2d2 | u2d2 | u1d1 | u2d2 | u1d1 |
| xDSL 11 | u2d2 | u2d2 | u2d2 | u2d2 | u1d1 | u1d1 | u2d2 | u1d1 |
| xDSL 12 | u2d2 | u2d2 | u2d2 | | | u1d1 | u2d2 | u1d1 |
| xDSL 13 | u2d2 | u2d2 | u2d2 | | | u1d1 | u2d2 | u1d1 |
| xDSL 160 | u2d2 | u2d2 | u2d2 | u2d2 | u2d2 | u1d1 | u2d2 | u1d1 |
| xDSL 165 | u2d2 | u2d2 | u2d2 | u2d2 | u2d2 | u1d1 | u2d2 | u1d1 |
| xDSL 170 | u2d2 | u2d2 | u2d2 | | | u1d1 | u2d2 | u1d1 |
| xDSL 175 | u2d2 | u2d2 | u2d2 | | | u1d1 | u2d2 | u1d1 |
| xDSL 180 | u2d2 | u2d2 | u2d2 | | | u1d1 | u2d2 | u1d1 |
| xDSL 185 | u2d2 | u2d2 | u2d2 | | | u1d1 | u2d2 | u1d1 |

Table 57. Selectable masks system for LDSL: Upstream/Downstream Selection

Table.

Although all mask combinations were considered, only three combinations are required to address multiple physical layer/noise scenarios:

{U1, D1}, identified as the Overlap Combination;
{U2, D2}, identified as the FDM Combination;
{U1, D2}, identified as the Hybrid Combination.

The overlap Combination {U1, D1} is essential to handle cases noise # 8 and # 6, where T1 noise seriously limits downstream performance of the FDM combination {U2, D2}.

The hybrid combination {U1, D2} is crucial in the presence of HDSL and SHDSL cross talks to lift the {U2, D2} Upstream performance limitations.

{U2, D2} wins ~60% of the scenarios.
{U1, D1} wins ~25%% of the scenarios.
{U1, D2} wins ~15% of the scenarios.

It has been noted that the including only the self-crosstalk from the PSD mask being tested may be overly optimistic. The reason is that if LDSL includes an overlapped and a non-overlapped mask, for example, that results using the non-overlapped mask will be overly optimistic if some crosstalk from the overlapped mask are not included.

To address this issue, we have also run simulations results assuming that there is always at least one overlapped LDSL disturber using mask D1 in the downstream direction. In the upstream direction, therefore, we assume that the total number of NEXT self-disturbers is one less than the number given in T1E1.4/2002-292R2 and that the remaining self disturber is mask D1. In the downstream direction, similarly, we make the same assumption for FEXT self-disturbers. NEXT disturbers at the CPE and FEXT disturbers at the CO are left unchanged. For the case where the overlapped mask was selected previously there should be no difference in data rates.

| | | upstream | | | | | | | | downstream | | | | | | | |
| | | case 1 | case 2 | case 3 | case 4 | case 5 | case 6 | case 7 | case 8 | case 1 | case 2 | case 3 | case 4 | case 5 | case 6 | case 7 | case 8 |
| | | Self Net | ADSL | ISDN | SHDSL | HDSL | T1 | MIX | TIA | Self Net | ADSL | ISDN | SHDSL | HDSL | T1 | MIX | TIA |
| | xDSL 10 | 505 | 505 | 410 | 327 | 341 | 235 | 404 | 239 | 2403 | 1661 | 1869 | 2048 | 2039 | 1026 | 1658 | 402 |
| | xDSL 11 | 330 | 330 | 238 | 169 | 153 | 169 | 232 | 173 | 991 | 407 | 505 | 872 | 1023 | 375 | 380 | 61 |
| | xDSL 12 | 289 | 289 | 198 | 147 | 155 | 147 | 193 | 151 | 1196 | 643 | 694 | 986 | 1000 | 305 | 578 | 40 |
| SELECTABLE MASKS OVERLAP SELF | xDSL 13 | 182 | 182 | 98 | 107 | 114 | 106 | 100 | 109 | 856 | 398 | 489 | 706 | 794 | 173 | 368 | 19 |
| | xDSL 160 | 364 | 364 | 271 | 198 | 214 | 176 | 265 | 181 | 2050 | 1333 | 1499 | 1772 | 1770 | 726 | 1310 | 232 |
| | xDSL 165 | 332 | 332 | 240 | 163 | 178 | 163 | 234 | 167 | 1787 | 1086 | 1252 | 1544 | 1557 | 610 | 1063 | 157 |
| | xDSL 170 | 300 | 300 | 209 | 149 | 156 | 149 | 203 | 153 | 1551 | 879 | 1028 | 1342 | 1366 | 509 | 846 | 99 |
| | xDSL 175 | 269 | 269 | 179 | 135 | 143 | 135 | 174 | 139 | 1336 | 753 | 819 | 1158 | 1192 | 420 | 684 | 71 |
| | xDSL 180 | 239 | 239 | 152 | 122 | 130 | 122 | 147 | 126 | 1140 | 633 | 747 | 996 | 1036 | 333 | 604 | 38 |
| | xDSL 185 | 208 | 208 | 123 | 110 | 117 | 110 | 119 | 113 | 970 | 528 | 665 | 850 | 892 | 255 | 519 | 22 |

**Table 58. Performance results assuming that at least 1 overlap PSD mask is always present. Data rates are in kbps.**

Not surprisingly, the upstream data rate is reduced under some of the test cases. However, for the SHDSL, HDSL, T1, and TIA test cases, the upstream rate is affected very little if at all. This is because HDSL and SHDSL disturbance is no friendlier to ADSL upstream than our overlapped PSD mask proposal is. Although SHDSL and HDSL are considered spectrally compatible with ADSL, they do have a significant negative impact on ADSL upstream performance.

Like Annex A, LDSL system operates in both non overlap and overlap modes. It should be pointed out that LDSL systems always meet the 96kb/s upstream rate objective, against any loop/noise scenario defined in T1E1.4/2002-292R2, even in the presence of one LDSL overlap disturber.

An operator who deploys T1, HDSL, or SHDSL should have no issue deploying overlapped LDSL. However, if a loop bundle if generally free of other disturbers, then it would not make sense to deploy overlapped LDSL. Therefore, the operator should be able to select any subset of LDSL PSD masks.

We note also that even if the overlapped LDSL mask were allowed on loops that are free of SHDSL, HDSL, and T1, any reasonable selection criteria would never choose the overlapped mask. Therefore, the concern over the overlapped mask is not warranted even if the operator does not specifically prohibit it.

The performance of a "single mask" system and a "selectable mask" system for LDSL are shown that a selectable mask system offers considerable data rate or equivalently reach advantage under certain noise and loop conditions. The selectable mask system, with a choice from three upstream/downstream combinations namely (U1, D1), (U2, D2), and (U1, D2), meets the LDSL minimum data rate requirements for approximately 90% of test scenarios.

Like Annex A, LDSL system operates in both non overlap and overlap modes. It should be pointed out that LDSL systems always meet the 96kb/s upstream rate objective, against any loop/noise scenario defined in T1E1.4/2002-292R2, even in the presence of one LDSL overlap disturber.

**Claims**

1. A method of selecting masks for Long-reach Digital Subscriber Line (LDSL) systems, the method comprising:

   selecting a spectral mask based upon performance criteria; and
   activating the selected spectral mask based on at least one of customer premise or central office capabilities

   **characterized in that**

   the spectral mask is spectrally compatible with neighboring services,

   wherein selecting a spectral mask further comprises:

   selecting a spectral mask from a number of upstream masks (U1, U2, U3,.., Un) and a number of downstream masks (D1, D2, D3,.., Dn),

   wherein one of the number of upstream masks is defined by the following relations, wherein f is a frequency band in kHz and U1 is the value of the mask in dBm/Hz:

   for $0 < f \leq 4$, then U1 = -97.5, with max power in the 0 - 4 kHz band of +15 dB;
   for $4 < f \leq 25.875$, then U1 =-92.5 + 23.43 x log2 (f / 4);
   for $25.875 < f \leq 60.375$, then U1 = -29.0;
   for $60.375 < f \leq 90.5$, then U1 = 34.5 - 95 x log2 (f / 60.375);
   for $90.5 < f \leq 1221$, then U1 = -90;
   for $1221 < f \leq 1630$, then U1 = -99.5 peak, with max power in the [f, f + 1 MHz] window of (-90 - 48 x log2 (f / 1221) + 60) dBm; and
   for $1630 < f \leq 11040$, then U1 = -99.5 peak, with max power in the [f, f + 1 MHz] window of -50 dBm,

   wherein one of the number of upstream masks is defined by the following relations, wherein f is a frequency band in kHz and U2 is the value of the mask in dBm/Hz:

   for $0 < f \leq 4$, then U2 = -97.5, with max power in the 0 - 4 kHz band of +15 dBm;
   for $4 < f \leq 25.875$, then U2 =-92.5 + 22.5 x log2 (f / 4);
   for $25.875 < f \leq 86.25$, then U2 = -30.9;
   for $86.25 < f \leq 138.6$, then U2 = 34.5 - 95 x log2 (f / 86.25);
   for $138.6 < f \leq 1221$, then U2 = -99.5;
   for $1221< f \leq 1630$, then U2 = -99.5 peak, with max power in the [f, f + 1 MHz] window of (-90 - 48 x log2 (f / 1221) + 60) dBm; and
   for $1630 < f \leq 11040$, then U1 = -99.5 peak, with max power in the [f, f + 1 MHz] window of -50 dBm,
   for $1630 < f \leq 11040$, then U2 = -99.5 peak, with max power in the [f, f + 1 MHz] window of -50 dBm.

2. The method of claim 1, wherein selecting the spectral mask is performed manually.

3. The method of claim 1, wherein selecting the spectral mask is performed automatically.

4. The method of claim 3, wherein automatic selection of the spectral mask is performed by line probing.

5. The method of claim 3, wherein automatic selection of the spectral mask is performed by a many tests procedure performed during a training period.

6. The method of one of claims 1 to 5, wherein activating the selected spectral mask is accomplished by a customer premises equipment decision.

7. The method of one of claims 1 to 5, wherein activating the selected spectral mask is accomplished by a central office decision.

8. The method of one of claims 1 to 5, wherein activating the selected spectral mask is accomplished by a central office decision that overrules a customer premises decision.

9. The method of one of claims 1 to 8, wherein one of the number of downstream masks is defined by the following relations, wherein f is a frequency band in kHz and D1 is the value of the mask in dBm/Hz:

for $0 < f \leq 4$, then D1 = -97.5, with max power in the 0 - 4 kHz band of +15 dBm;
for $4 < f \leq 25.875$, then D1 = -92.5 + 20.79 x log2 (f / 4);
for $25.875 < f \leq 81$, then D1 = -36.5;
for $81 < f \leq 92.1$, then D1 = -36.5 - 70 x log2 (f / 81);
for $92.1 < f \leq 121.4$, then D1 = -49.5;
for $121.4 < f \leq 138$, then D1 = -49.5 + 70 x log2 (f / 121.4);
for $138 < f \leq 353.625$, then D1 = -36.5 + 0.0139 x (f - 138);
for $353.625 < f \leq 569.25$, then D1 = -33.5;
for $569.25 < f \leq 1622.5$, then D1 = -33.5 - 36 x log2 (f / 569.25);
for $1622.5 < f \leq 3093$, then D1 = -90;
for $3093 < f \leq 4545$, then D1 = -90 peak, with maximum power in the [f, f + 1 MHz] window of (-36.5 - 36 x log2 (f / 1104) + 60= dBm; and
for $4545 < f \leq 11040$, then U2 = -99.5 peak, with max power in the [f, f + 1 MHz] window of -50 dBm.

10. The method of one of claims 1 to 9, wherein one of the number of downstream masks is defined by the following peak values, wherein f is a frequency in kHz and D2 is the peak value of the mask in dBm/Hz:

for f = 0.0, then D2 = -98.00;
for f = 3.99, then D2 = -98.00;
for f = 4.0, then D2 =-92.5;
for f = 80.0, then D2 = -72.5;
for f =120.74, then D2 = -47.50;
for f = 120.75, then D2 = -37.80;
for f = 138.0, then D2 = -36.8;
for f = 276.0, then D2 = -33.5;
for f = 677.0625, then D2 = -33.5;
for f = 956.0, then D2 = -62.0;
for f = 1800.0, then D2 = -62.0;
for f = 2290.0, then D2 = -90.0;
for f = 3093.0, then D2 = -90.0;
for f = 4545.0 then D2 = -110.0 and
for f = 12000.0, then D2 = -110.0

11. The method of one of claims 1 to 11, wherein one of the number of upstream masks is defined by the following peak values, wherein f is a frequency in kHz and U3 is the peak value of the mask in dBm/Hz:

for f = 0, then U3 = -101.5;
for f = 4, then U3 = -101.5;
for f = 4, then U3 = -96;
for f = 25.875, then U3 = -36.30;
for f = 103.5, then U3 = -36.30;
for f = 164.1, then U3 = -99.5;
for f = 1221, then U3 = -99.5;
for f = 1630, then U3 = -113.5 and

for f = 12000, then U3 = -113.5.

12. The method of one of claims 1 to 11, wherein one of the number of downstream masks is defined by the following peak values, wherein f is a frequency in kHz and D3 is the peak value of the mask in dBm/Hz:

for f = 0, then D3 = -101.5;
for f = 4, then D3 = -101.5;
for f = 4, then D3 = -96;
for f = 80, then D3 = -76;
for f = 138, then D3 = -47.5;
for f = 138, then D3 = -40;
for f = 276, then D3 = -37;
for f = 552, then D3 = -37;
for f = 956, then D3 = -65.5;
for f = 1800, then D3 = -65.5;
for f = 2290, then D3 = -93.5;
for f = 3093, then D3 = -93.5;
for f = 4545, then D3 = -113.5; and
for f = 12000, then D3 = -113.5.

13. A system for selecting masks for Long-reach Digital Subscriber Line (LDSL) systems, the system comprising:

selecting means to select a spectral mask based upon performance criteria; and
activating means to activate the selected spectral mask based on at least one of customer premise or central office capabilities

**characterized in that**

the spectral mask is spectrally compatible with neighboring services,

wherein selecting a spectral mask further comprises:

selecting a spectral mask from a number of upstream masks (U1, U2, U3,.., Un) and a number of downstream masks (D1, D2, D3,.., Dn),

wherein one of the number of downstream masks is defined by the following relations, wherein f is a frequency band in kHz and D1 is the value of the mask in dBm/Hz:

for $0 < f \leq 4$, then D1 = -97.5, with max power in,the 0 - 4 kHz band of +15 dBm;
for $0 < f \leq 25.875$, then D1 = -92.5 + 20.79 x log2 (f / 4);
for $25.875 < f \leq 81$, then D1 = -36.5;
for $81 < f \leq 92.1$, then D1 = -36.5 - 70 x log2 (f / 81);
for $92.1 < f \leq 121.4$, then D1 = -49.5;
for $121.4 < f \leq 138$, then D1 = -49.5 + 70 x log2 (f / 121.4);
for $138 < f \leq 353.625$, then D1 = -36.5 + 0.0139 x (f - 138);
for $353.625 < f \leq 569.25$, then D1 = -33.5 - 36 x log2 (f / 569.25);
for $569.25 < f \leq 1622.5$ then D1 = -33.5 - 36 x log2 (f / 569.25);
for $1622.5 < f \leq 3093$, then D1 = -90;
for $3093 < f \leq 4545$, then D1 = -90 peak, with maximum power in the [f, f + 1 MHz] window of (-36.5 - 36 x log2 (f /1104) + 60) dBm; and
for $4545 < f \leq 11040$, then D1 = -90 peak, with maximum power in the [f, f + 1 MHz] window -50 dBm,

wherein one of the number of downstream masks is defined by the following peak values, wherein f is a frequency in kHz and D2 is the peak value of the mask in dBm/Hz:

for f = 0.0, then D2 = -98.0;
for f = 3.99, then D2 = -98.00;
for f = 4.0, then D2 = -92.5;

for f = 80.0, then D2 = -72.5;
for f = 120.74, then D2 = -47.50;
for f = 120.75, then D2 = -37.80;
for f = 138.0, then D2 = -36.8;
for f = 276.0, then D2 = -33.5;
for f = 677.0625, then D2 = -33.5;
for f = 956.0, then D2 = -62.0;
for f = 1800.0, then D2 = -62.0;
for f = 2290.0, then D2 = -90.0;
for f = 3093.0, then D2 = -90.0;
for f = 4545.0, then D2 = -110.0; and
for f = 12000.0, then D2 = -110.0.

**Patentansprüche**

1.  Verfahren zum Wählen von Masken für weitreichende digitale Anschlussleitungs-(Long-reach Digital Subscriber Line, LDSL) Systeme, umfassend:

    Wählen einer spektralen Maske basierend auf Leistungskriterien; und
    Aktivieren der gewählten spektralen Maske basierend auf mindestens einer von Leistungsfähigkeit des Kundenstandorts oder Leistungsfähigkeit der Vermittlungsstelle

    **dadurch gekennzeichnet, dass**

    die spektrale Maske mit benachbarten Diensten spektral kompatibel ist,

    wobei Wählen einer spektralen Maske weiterhin umfasst:

    Wählen einer spektralen Maske aus einer Anzahl von Stromaufwärts-Masken (U1, U2, U3, ..., Un) und einer Anzahl von Stromabwärts-Masken (D1, D2, D3, ..., Dn),

    wobei eine von der Anzahl von Stromaufwärts-Masken durch die folgenden Beziehungen definiert ist, wobei f ein Frequenzband in kHz ist, und U1 der Wert der Maske in dBm/Hz ist:

    für $0 < f \leq 4$ ist U1 = -97.5, mit maximaler Leistung in dem 0 - 4 kHz Band von +15 dB;
    for $4 < f \leq 25.875$ ist U1 =-92.5 + 23.43 x log2 (f / 4);
    für $25.875 < f \leq 60.375$ ist U1 = -29.0;
    für $60.375 < f \leq 90.5$ ist U1 = 34.5 - 95 x log2 (f / 60.375);
    für $90.5 < f \leq 1221$ its U1 = -90;
    für $1221 < f \leq 1630$ ist U1 = -99.5 Scheitelwert, mit maximaler Leistung in dem [f, f + 1 MHz] Fenster von (-90 - 48 x log2 (f / 1221) + 60) dBm; und
    für $1630 < f \leq 11040$ ist U1 = -99.5 Scheitelwert, mit maximaler Leistung in dem [f, f + 1 MHz] Fenster von -50 dBm,

    wobei eine von der Anzahl von Stromaufwärts-Masken durch die folgenden Beziehungen definiert ist, wobei f ein Frequenzband in kHz ist, und U2 der Wert der Maske in dBm/Hz ist:

    für $0 < f \leq 4$ ist U2 = -97.5, mit maximaler Leistung in 0 - 4 kHz Band von +15 dB;
    for $4 < f \leq 25,875$ ist U2 =-92,5 - 22,5 x log2 (f / 4);
    für $25,875 < f \leq 86,25$ ist U2 = -30.9;
    for $86,25 < f \leq 138,6$ ist U2 =-34,5 - 95 x log2 (f / 86,25);
    für $138,6 < f \leq 1221$ ist U2 = -99.5;
    für $1221 < f \leq 1630$ ist U2 = -99.5 Scheitelwert, mit maximaler Leistung in dem [f, f + 1 MHz] Fenster von (-90 - 48 x log2 (f / 1221) + 60) dBm; und
    für $1630 < f \leq 11040$ ist U2 = -99.5 Scheitelwert, mit maximaler Leistung in [f, f + 1 MHz] Fenster von -50 dBm.

2.  Verfahren nach Anspruch 1, wobei Wählen der spektralen Maske manuell ausgeführt wird.

**3.** Verfahren nach Anspruch 1, wobei Wählen der spektralen Maske automatisch ausgeführt wird.

**4.** Verfahren nach Anspruch 3, wobei das automatische Wählen der spektralen Maske durch Anschlussmessung ausgeführt wird.

**5.** Verfahren nach Anspruch 3, wobei das automatische Wählen der spektralen Maske durch ein Verfahren mit vielen Erprobungen während eines Lernzeitraums ausgeführt wird.

**6.** Verfahren nach einem der Ansprüche 1 bis 5, wobei Aktivieren der gewählten spektralen Maske durch eine Entscheidung eines Kundenanschlussgeräts erreicht wird.

**7.** Verfahren nach einem der Ansprüche 1 bis 5, wobei Aktivieren der gewählten spektralen Maske durch eine Entscheidung der Vermittlungsstelle erreicht wird.

**8.** Verfahren nach einem der Ansprüche 1 bis 5, wobei Aktivieren der gewählten spektralen Maske durch eine Entscheidung der Vermittlungsstelle erreicht wird, die eine Entscheidung eines Kundenanschlusses überstimmt.

**9.** Verfahren nach einem der Ansprüche 1 bis 8, wobei eine von der Anzahl von Stromabwärts-Masken durch die folgenden Beziehungen definiert ist, wobei f ein Frequenzband in kHz ist, und D1 der Wert der Maske in dBm/Hz ist:

für $0 < f \leq 4$ ist D1 = -97,5, mit maximaler Leistung im 0 - 4 kHz Band von +15 dBm;
für $4 < f \leq 25,875$ ist D1 = -92.5 + 20.79 x log2 (f / 4);
für $25,875 < f \leq 81$ ist D1 = -36,5;
für $81 < f \leq 92,1$ ist D1 = -36,5 - 70 x log2 (f / 81);
für $92,1 < f \leq 121,4$ ist D1 = -49,5;
für $121,4 < f \leq 138$ ist D1 = -49,5 + 70 x log2 (f / 121,4);
für $138 < f \leq 353,625$, ist D1 =-36,5 + 0,0139 x (f / 138);
für $353,625 < f \leq 569,25$ ist D1 = -33,5;
für $569,25 < f \leq 1622,5$ ist D1 = -33,5 - 36 x log2 (f / 569,25);
für $1622,5 < f \leq 3093$ ist D1 = -90;
für $3093 < f \leq 4545$ ist D1 = -90 Scheitelwert; mit maximaler Leistung in dem [f, f + 1 MHz] Fenster von (-36,5 - 36 x log2 (f / 1104) + 60) dBm; und
für $4545 < f \leq 11040$ ist D1 = -90 Scheitelwert; mit maximaler Leistung in dem [f, f + 1 MHz] Fenster von -50 dBm.

**10.** Verfahren nach einem der Ansprüche 1 bis 9, wobei eine von der Anzahl von Stromabwärts-Masken durch die folgenden Scheitelwerte definiert ist, wobei f eine Frequenz in kHz ist, und D2 der Scheitelwert der Maske in dBm/Hz ist:

für f = 0,0 ist D2 = -98,00;
für f = 3,99 ist D2 = -98,00;
fur f =4,0 ist D2 =-92,5;
für f = 80,0 ist D2 = -72,5;
für f =120,74 ist D2 = -47,50;
für f = 120,75 ist D2 = -37,80;
für f = 138,0 ist D2 = -36,8;
für f = 276,0 ist D2 = -33,5;
für f = 677,0625 ist D2 = -33,5;
für f = 956,0, ist D2 = -62,0;
für f = 1800,0, ist D2 = -62,0;
für f = 2290,0, ist D2 = -90,0;
für f = 3093,0, ist D2 = -90,0;
für f = 4545,0 ist D2 = -110,0 und
für f = 12000,0, ist D2 = -110,0

**11.** Verfahren nach einem der Ansprüche 1 bis 11, wobei eine von der Anzahl von Stromaufwärts-Masken durch die folgenden Scheitelwerte definiert ist, wobei f eine Frequenz in kHz ist, und U3 der Scheitelwert der Maske in dBm/Hz ist:

for f = 0 ist U3 = -101,5;
for f = 4 ist U3 = -101,5;
for f = 4 ist U3 = -96;
for f = 25.875 ist U3 = -36,30;
for f = 103.5 ist U3 = -36,30;
for f = 164.1 ist U3 = -99,5;
for f = 1221 ist U3 = -99,5;
for f = 1630 ist U3 = -113,5 und
for f = 12000 ist U3 = -113,5.

12. Verfahren nach einem der Ansprüche 1 bis 11, wobei eine von der Anzahl von Stromabwärts-Masken durch die folgenden Scheitelwerte definiert ist, wobei f eine Frequenz in kHz ist, und D3 der Scheitelwert der Maske in dBm/Hz ist:

für f = 0 ist D3 = -101,5;
für f = 4 ist D3 = -101,5;
für f = 4 ist D3 = -96;
für f = 80 ist D3 = -76;
für f = 138 ist D3 = -47,5;
für f = 138 ist D3 = -40;
für f = 276 ist D3 = -37;
für f = 552 ist D3 = -37;
für f = 956 ist D3 = -65,5;
für f = 1800 ist D3 = -65,5;
für f = 2290 ist D3 = -93,5;
für f = 3093 ist D3 = -93,5;
für f = 4545 ist D3 = -113,5; und
für f = 12000 ist D3 = -113,5.

13. System zum Wählen von Masken für weitreichende digitale Anschlussleitungs-(Long-reach Digital Subscriber Line, LDSL) Systeme, das System umfassend:

Wählmittel zum Wählen einer spektralen Maske basierend auf Leistungskriterien;
Aktivierungsmittel zum Aktivieren der gewählten spektralen Maske basierend auf mindestens einer von Leistungsfähigkeit des Kundenstandorts oder Leistungsfähigkeit der Vermittlungsstelle

**dadurch gekennzeichnet, dass**
die spektrale Maske mit benachbarten Diensten spektral kompatibel ist,
wobei Wählen einer spektralen Maske weiterhin umfasst:

Wählen einer spektralen Maske aus einer Anzahl von Stromaufwärts-Masken (U1, U2, U3, ..., Un) und einer Anzahl von Stromabwärts-Masken (D1, D2, D3, ..., Dn),

wo eine von der Anzahl von Stromabwärts-Masken durch die folgenden Beziehungen definiert ist, wobei f ein Frequenzband in kHz ist, und D1 der Wert der Maske in dBm/Hz ist:

für $0 < f \leq 4$ ist D1 = -97,5, mit maximaler Leistung im 0 - 4 kHz Band von +15 dBm;
für $4 < f \leq 25,875$ ist D1 = -92.5 + 20.79 x log2 (f / 4);
für $25,875 < f \leq 81$ ist D1 = -36,5;
für $81 < f \leq 92,1$ ist D1 = -36,5 - 70 x log2 (f / 81);
für $92,1 < f \leq 121,4$ ist D1 = -49,5;
für $121,4 < f \leq 138$ ist D1 = -49,5 + 70 x log2 (f / 121,4);
für $138 < f \leq 353,625$, ist D1 =-36,5 + 0,0139 x (f / 138);
für $353,625 < f \leq 569,25$ ist D1 = -33,5;
für $569,25 < f \leq 1622,5$ ist D1 = -33,5 - 36 x log2 (f / 569,25);
für $1622,5 < f \leq 3093$ ist D1 = -90;
für $3093 < f \leq 4545$ ist D1 = -90 Scheitelwert; mit maximaler Leistung in dem [f, f + 1 MHz] Fenster von (-36,5 - 36 x log2 (f / 1104) + 60) dBm; und

für 4545 < f ≤ 11040 ist D1 = -90 Scheitelwert; mit maximaler Leistung in dem [f, f + 1 MHz] Fenster von -50 dBm,

wobei eine von der Anzahl von Stromabwärts-Masken durch die folgenden Scheitelwerte definiert ist, wobei f eine Frequenz in kHz ist, und D2 der Scheitelwert der Maske in dBm/Hz ist:

für f = 0,0 ist D2 = -98,0;
für f = 3,99 ist D2 = -98,00;
für f = 4,0 ist D2 = -92,5;
für f = 80,0 ist D2 = -72,5;
für f = 120,74 ist D2 = -47,50;
für f = 120,75 ist D2 = -37,80;
für f = 138,0 ist D2 = -36,8;
für f = 276,0 ist D2 = -33,5;
für f = 677,0625 ist D2 = -33,5;
für f = 956,0 ist D2 = -62,0;
für f = 1800,0 ist D2 = -62,0;
für f = 2290,0 ist D2 = -90,0;
für f = 3093,0 ist D2 = -90,0;
für f = 4545,0 ist D2 = -110,0; und
für f = 12000,0 ist D2 = -110,0.

## Revendications

1. Procédé de sélection de masques pour systèmes de ligne d'abonné numérique longue distance (LDSL), le procédé comprenant :

la sélection d'un masque spectral sur la base de critères de performance ; et
l'activation du masque spectral sélectionné sur la base d'au moins une des capacités du local d'abonné ou du central téléphonique

**caractérisé en ce que**
le masque spectral est spectralement compatible avec des services voisins,
dans lequel la sélection d'un masque spectral comprend en outre :

la sélection d'un masque spectral à partir d'un nombre de masques amonts (U1, U2, U3, ..., Un) et d'un nombre de masques avals (D1, D2, D3, ..., Dn),

dans lequel l'un du nombre de masques amonts est défini par les relations suivantes, où f est une bande de fréquences en kHz et U1 est la valeur du masque en dBm/Hz :

pour 0 < f ≤ 4 alors U1 = -97,5, avec une puissance maximale dans la bande 0 à 4 kHz de +15 dB;
pour 4 < f ≤ 25,875 alors U1 =-92,5 + 23,43 x log2 (f / 4);
pour 25,875 < f ≤ 60,375 alors U1 = -29,0;
pour 60,375 < f ≤ 90,5 alors U1 = 34,5 - 95 x log2 (f / 60,375);
pour 90,5 < f ≤ 1221 alors U1 = -90;
pour 1221 < f ≤ 1630 alors U1 = -99,5 en crête, avec une puissance maximale dans la fenêtre de [f, f + 1 MHz] de (-90 - 48 x log2 (f / 1221) + 60) dBm; et
pour 1630 < f ≤ 11040, alors U1 = -99,5 en crête, avec une puissance maximale dans la fenêtre de [f, f + 1 MHz] de -50 dBm,

dans lequel l'un du nombre de masques amonts est défini par les relations suivantes, où f est une bande de fréquences en kHz et U2 est la valeur du masque en dBm/Hz :

pour 0 < f ≤ 4 alors U2 = -97,5, avec une puissance maximale dans la bande 0 à 4 kHz de +15 dB;
pour 4 < f ≤ 25,875 alors U2 =-92,5 + 22,5 x log2 (f / 4);
pour 25,875 < f ≤ 86,25 alors U2 = -30,9;
pour 86,25 < f ≤ 138,6 alors U2 = 34,5 - 95 x log2 (f / 86,25);

pour 138,6 < f ≤ 1221, alors U2 = -99,5;

pour 1221 < f ≤ 1630 alors U2 = -99,5 en crête, avec une puissance maximale dans la fenêtre de [f, f + 1 MHz] de (-90 - 48 x log2 (f / 1221) + 60) dBm; et

pour 1630 < f ≤ 11040, alors U2 = -99,5 en crête, avec une puissance maximale dans la fenêtre de [f, f + 1 MHz] de -50 dBm.

2. Procédé selon la revendication 1, dans lequel la sélection du masque spectral est effectuée manuellement.

3. Procédé selon la revendication 1, dans lequel la sélection du masque spectral est effectuée automatiquement.

4. Procédé selon la revendication 3, dans lequel la sélection automatique du masque spectral est effectuée par sondage de ligne.

5. Procédé selon la revendication 3, dans lequel la sélection automatique du masque spectral est effectuée par une procédure de nombreux tests effectuée pendant une période de préparation.

6. Procédé selon l'une quelconque des revendications 1 à 5, dans lequel l'activation du masque spectral sélectionné est accomplie par une décision de l'équipement des locaux d'abonné.

7. Procédé selon l'une quelconque des revendications 1 à 5, dans lequel l'activation du masque spectral sélectionné est accomplie par une décision du central téléphonique.

8. Procédé selon l'une quelconque des revendications 1 à 5, dans lequel l'activation du masque spectral sélectionné est accomplie par une décision du central téléphonique qui prévaut sur une décision des locaux d'abonné.

9. Procédé selon l'une quelconque des revendications 1 à 8, dans lequel l'un du nombre de masques avals est défini par les relations suivantes, où f est une bande de fréquences en kHz et D1 est la valeur du masque en dBm/Hz :

pour 0 < f ≤ 4, alors D1 = -97,5, avec une puissance maximale dans la bande 0 à 4 kHz de +15 dBm;

pour 4 < f ≤ 25,875, alors D1 =-92,5 + 20,79 x log2 (f / 4);

pour 25,875 < f ≤ 81, alors D1 = -36,5;

pour 81 < f ≤ 92,1, alors D1 = 36,5 - 70 x log2 (f / 81);

pour 92,1 < f ≤ 1214, alors D1 = -49,5;

pour 121.4 < f ≤ 138, alors D1 = 49,5 + 70 x log2 (f / 121,4);

pour 138 < f ≤ 353,625, alors D1 = -36,5 + 0,0139 x (f - 138);

pour 353,625 < f ≤ 569,25, alors D1 = -33,5;

pour 569,25 < f ≤ 1622,5, alors D1 = -33,5 - 36 x log2 (f / 569,25);

pour 1622,5 < f ≤ 3093, alors D1 = -90;

pour 3093 < f ≤ 4545, alors D1 = -90 en crête, avec une puissance maximale dans la fenêtre de [f, f + 1 MHz] de (-36,5 - 36 x log2 (f / 1104) + 60) dBm; et

pour 4545 < f ≤ 11040, alors D1 = -90 en crête, avec une puissance maximale dans la fenêtre de [f, f + 1 MHz] de -50 dBm.

10. Procédé selon l'une quelconque des revendications 1 à 9, dans lequel l'un du nombre de masques avals est défini par les valeurs de crête suivantes, où f est une fréquence en kHz et D2 est la valeur de crête du masque en dBm/Hz :

pour f = 0,0, alors D2 = -98,00;

pour f = 3,99, alors D2 = -98,00;

pour f =4,0, alors D2 = -92,5;

pour f = 80,0, alors D2 = -72,5;

pour f =120,74, alors D2 = -47,50;

pour f = 120,75, alors D2 = -37,80;

pour f = 138,0, alors D2 = -36,8;

pour f = 276,0, alors D2 = -33,5;

pour f = 677,0625, alors D2 = -33,5;

pour f = 956,0, alors D2 = -62,0;

pour f = 1800,0, alors D2 = -62,0;

pour f = 2290,0, alors D2 = -90,0;

pour f = 3093,0, alors D2 = -90,0;
pour f = 4545,0, alors D2 = -110,0 et
pour f = 12000,0, alors D2 = -110,0.

**11.** Procédé selon l'une quelconque des revendications 1 à 11, dans lequel l'un du nombre de masques amonts est défini par les valeurs de crête suivantes, où f est une fréquence en kHz et U3 est la valeur de crête du masque en dBm/Hz :

pour f = 0, alors U3 = -101,5;
pour f = 4, alors U3 = -101,5;
pour f = 4, alors U3 = -96;
pour f = 25,875, alors U3= -36,30;
pour f = 103,5, alors U3 = -36,30;
pour f = 164.1, alors U3 = -99,5;
pour f = 1221, alors U3 = -99,5;
pour f = 1630, alors U3 = -113,5 et
pour f = 12000,0, alors U3 = -113,5.

**12.** Procédé selon l'une quelconque des revendications 1 à 11, dans lequel l'un du nombre de masques avals est défini par les valeurs de crête suivantes, où f est une fréquence en kHz et D3 est la valeur de crête du masque en dBm/Hz :

pour f = 0, alors D3 = -101,5;
pour f = 4, alors D3 = -101,5;
pour f =4, alors D3 = -96;
pour f = 80, alors D3 = -76;
pour f = 138, alors D3 = -47,5;
pour f = 138, alors D3 = -40;
pour f = 276, alors D3 = -37;
pour f = 552, alors D3 = -37;
pour f = 956, alors D3 = -65,5;
pour f = 1800, alors D3 = -65,5;
pour f = 2290, alors D3 = -93,5;
pour f = 3093, alors D3 = -93,5;
pour f = 4545, alors D3 = -113,5 et
pour f = 12000, alors D3 = -113,5.

**13.** Système de sélection de masques pour systèmes de ligne d'abonné numérique longue distance (LDSL), le système comprenant :

un moyen de sélection pour sélectionner un masque spectral sur la base de critères de performance ; et
un moyen d'activation pour activer le masque spectral sélectionné sur la base d'au moins une des capacités des locaux d'abonné ou du central téléphonique

**caractérisé en ce que**
le masque spectral est spectralement compatible avec les services voisins,
dans lequel la sélection d'un masque spectral comprend en outre :

la sélection d'un masque spectral à partir d'un nombre de masques amonts (U1, U2, U3, ..., Un) et d'un nombre de masques avals (D1, D2, D3, ..., Dn),

dans lequel l'un du nombre de masques avals est défini par les relations suivantes, où f est une bande de fréquences en kHz et D1 est la valeur du masque en dBm/Hz :

pour $0 < f \leq 4$, alors D1 = -97,5, avec une puissance maximale dans la bande 0 à 4 kHz de +15 dBm;
pour $4 < f \leq 25,875$, alors D1 =-92,5 + 20,79 x log2 (f / 4);
pour $25,875 < f \leq 81$, alors D1 = -36,5;
pour $81 < f \leq 92,1$, alors D1 = 36,5 - 70 x log2 (f / 81);
pour $92,1 < f \leq 1214$, alors D1 = -49,5;

pour 121.4 < f ≤ 138, alors D1 = 49,5 + 70 x log2 (f / 121,4);
pour 138 < f ≤ 353,625, alors D1 = -36,5 + 0,0139 x (f - 138);
pour 353,625 < f ≤ 569,25, alors D1 = -33,5;
pour 569,25 < f ≤ 1622,5, alors D1 = -33,5 - 36 x log2 (f / 569,25);
pour 1622,5 < f ≤ 3093, alors D1 = -90;
pour 3093 < f ≤ 4545, alors D1 = -90 en crête, avec une puissance maximale dans la fenêtre de [f, f + 1 MHz] de (-36,5 - 36 x log2 (f / 1104) + 60) dBm; et
pour 4545 < f ≤ 11040, alors D1 = -90 en crête, avec une puissance maximale dans la fenêtre de [f, f + 1 MHz] de -50 dBm.

maximale dans la fenêtre de [f, f + 1 MHz] de -50 dBm,
dans lequel l'un du nombre de masques avals est défini par les valeurs de crête suivantes, où f est une fréquence en kHz et D2 est la valeur de crête du masque en dBm/Hz :

pour f = 0,0, alors D2 = -98,00;
pour f = 3,99, alors D2 = -98,00;
pour f =4,0, alors D2 = 92,5;
pour f = 80,0, alors D2 = -72,5;
pour f =120,74, alors D2 = -47,50;
pour f = 120,75, alors D2 = -37,80;
pour f = 138,0, alors D2 = -36,8;
pour f = 276,0, alors D2 = -33,5;
pour f = 677,0625, alors D2 = -33,5;
pour f = 956,0, alors D2 = -62,0;
pour f = 1800,0, alors D2 = -62,0;
pour f = 2290,0, alors D2 = -90,0;
pour f = 3093,0, alors D2 = -90,0;
pour f = 4545,0, alors D2 = -110,0 et
pour f = 12000,0, alors D2 = -110,0.

**Figure 1.**

**U1 and D1 PSD Masks, peak values**

**Figure 2.**

**U2 and D2 PSD Masks, peak values**

**Figure 3.**

**U3 and D3 PSD Templates, average values**

**Figure 4.**

**Bar Chart, Upstream Rate, Noise case #1, ADSL2, M OJ-074, NON EC Smart LDSL**

**Figure 5.**

**Bar Chart, Upstream Rate, Noise case #2, ADSL2, M OJ-074, NON EC Smart LDSL**

**Figure 6.**

**Bar Chart, Upstream Rate, Noise case #3, ADSL2, M OJ-074, NON EC Smart LDSL**

Figure 7.

Bar Chart, Upstream Rate, Noise case #4, ADSL2, M OJ-074, NON
EC Smart LDSL

**Figure 8.**

**Bar Chart, Upstream Rate, Noise case #5, ADSL2, M OJ-074, NON EC Smart LDSL**

**Figure 9.**

**Bar Chart, Upstream Rate, Noise case #6, ADSL2, M OJ-074, NON EC Smart LDSL**

**Figure 10.**

**Bar Chart, Upstream Rate, Noise case #7, ADSL2, M OJ-074, NON EC Smart LDSL**

**Figure 11.**

**Bar Chart, Upstream Rate, Noise case #T1, ADSL2, M OJ-074, NON EC Smart LDSL**

**Figure 12.**

**Bar Chart, Downstream Rate, Noise case #1, ADSL2, M OJ-074, NON EC Smart LDSL**

**Figure 13.**

**Bar Chart, Downstream Rate, Noise case #2, ADSL2, M OJ-074, NON EC Smart LDSL**

**Figure 14.**

**Bar Chart, Downstream Rate, Noise case #3, ADSL2, M OJ-074, NON EC Smart LDSL**

downstream case 4 SHDSL

**Figure 15.**

**Bar Chart, Downstream Rate, Noise case #4, ADSL2, M OJ-074, NON EC Smart LDSL**

**Figure 16.**

**Bar Chart, Downstream Rate, Noise case #5, ADSL2, M OJ-074, NON EC Smart LDSL**

**Figure 17.**

**Bar Chart, Downstream Rate, Noise case #6, ADSL2, M OJ-074, NON EC Smart LDSL**

**Figure 18.**

**Bar Chart, Downstream Rate, Noise case #7, ADSL2, M OJ-074, NON EC Smart LDSL**

**Figure 19.**

**Bar Chart, Downstream Rate, Noise case #T1, ADSL2, M OJ-074, NON EC Smart LDSL**

**Figure 20.**

**Bar Chart, Upstream Rate, Noise case #1, ADSL2, M OJ-074, EC Smart LDSL**

**Figure 21.**

**Bar Chart, Upstream Rate, Noise case #2, ADSL2, M OJ-074, EC Smart LDSL**

**Figure 22.**

**Bar Chart, Upstream Rate, Noise case #3, ADSL2, M OJ-074, EC Smart LDSL**

**Figure 23.**


**Bar Chart, Upstream Rate, Noise case #4, ADSL2, M OJ-074, EC Smart LDSL**

**Figure 24.**

**Bar Chart, Upstream Rate, Noise case #5, ADSL2, M OJ-074, EC Smart LDSL**

**Figure 25.**

**Bar Chart, Upstream Rate, Noise case #6, ADSL2, M OJ-074, EC Smart LDSL**

**Figure 26.**

**Bar Chart, Upstream Rate, Noise case #7, ADSL2, M OJ-074, EC Smart LDSL**

**Figure 27.**

**Bar Chart, Upstream Rate, Noise case #T1, ADSL2, M OJ-074, EC Smart LDSL**

**Figure 28.**

**Bar Chart, Downstream Rate, Noise case #1, ADSL2, M OJ-074, EC Smart LDSL**

**Figure 29.**

**Bar Chart, Downstream Rate, Noise case #2, ADSL2, M OJ-074, EC Smart LDSL**

**Figure 30.**


**Bar Chart, Downstream Rate, Noise case #3, ADSL2, M OJ-074, EC Smart LDSL**

**Figure 31.**

**Bar Chart, Downstream Rate, Noise case #4, ADSL2, M OJ-074, EC Smart LDSL**

**Figure 32.**

**Bar Chart, Downstream Rate, Noise case #5, ADSL2, M OJ-074, EC Smart LDSL**

**Figure 33.**

**Bar Chart, Downstream Rate, Noise case #6, ADSL2, M OJ-074, EC Smart LDSL**

**Figure 34.**

**Bar Chart, Downstream Rate, Noise case #7, ADSL2, M OJ-074, EC Smart LDSL**

**Figure 35.**

**Bar Chart, Downstream Rate, Noise case #T1, ADSL2, M OJ-074, EC Smart LDSL**

**Figure 36.**

**Two smart system selection modes: Manual and Automatic**

**Figure 37.**

**Two options to automatically select a pair of masks in a smart DSL system**

**Figure 38.**

**"CP decides" sequence based on G.992.3**

**Figure 39.**

**"CO decides" sequence based on G.992.3**

**Figure 40.**

**"CP is overruled by CO" sequence**

# Figure 41.

## DSL Downstream Wide Mask and G.992.1 Upstream Mask (Nominal Values)

Blue line: upstream; red line: downstream

# Figure 42.

# LDSL Downstream Narrow Mask and G.992.1 Upstream Mask

(Nominal Values)

# Figure 43.

## Quad Spectrum Mask Plot, Peak Values

# Figure 44.

## G.992.5 Upstream Mask Plot, Peak Values

# Figure 45.

# Extended Overlap Quad Spectrum Overlap Downstream Mask, Plot based on Peak Values

# Figure 46.

# Extended Overlap Quad Spectrum Upstream Mask Plot
# based on Peak Values

# Figure 47.

## Quad Spectrum Reduced Overlap Downstream Mask Plot
## based on Peak Values

# Figure 48.

## Extended Upstream Mask Plot based on Peak Values

# Figure 49.

## OL Quad Spectrum Downstream Mask Plot, Peak Values

PSD in dBm/Hz

-46.5 dBm/Hz

-38.3 dBm/Hz

-50 dBm/ Hz

-14.65 dB/ Octave

21 dB/ octave

-2.9 dB/Octave

-76.5 dBm/Hz

3750

-92.5 dBm/ Hz

-101.5 dBm/Hz

-97.5dBm/Hz

Frequency in kHz

4    25.875    1104    1622    3750    3925

# Figure 50.

## G.992.5 Upstream Mask Plot, Peak Values

**Figure 51.**

U1 and D1 PSD Nominal Templates.

**Figure 52.**

U2 and D2 PSD Templates, average values.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6333920 B

**Non-patent literature cited in the description**

- **Kee Bong Song et al.** Dynamic Spectrum Management for Next-Generation DSL Systems. *IEEE Communications Magazine,* October 2002, 101-109